(19) Europäisches Patentamt
European Patent Office
Office européen des brevets

(11) **EP 4 715 744 A1**

(12) **EUROPEAN PATENT APPLICATION**

(43) Date of publication:
**25.03.2026 Bulletin 2026/13**

(21) Application number: **25203223.0**

(22) Date of filing: **19.09.2025**

(51) International Patent Classification (IPC):
*G06T 9/00* (2006.01)    *G06N 3/0455* (2023.01)

(52) Cooperative Patent Classification (CPC):
**G06T 9/002; G06N 3/044; G06N 3/045;**
**G06N 3/0455; G06N 3/0464; G06N 3/047;**
**G06N 3/0475; G06N 3/08; G06N 3/084;**
**G06N 3/088; G06N 3/094**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.09.2024 US 202463697135 P**

(71) Applicant: **Nokia Technologies Oy**
**02610 Espoo (FI)**

(72) Inventors:
• **ZOU, Nannan**
**Tampere (FI)**

• **CRICRÌ, Francesco**
**Tampere (FI)**
• **ZHANG, Honglei**
**Tampere (FI)**
• **AHONEN, Jukka Ilari**
**Tampere (FI)**
• **LE, Nam Hai**
**Kangasala (FI)**

(74) Representative: **Nokia EPO representatives**
**Nokia Technologies Oy**
**Karakaari 7**
**02610 Espoo (FI)**

(54) **LEARNED LATENT RESIDUAL CODING OF RESIDUAL**

(57) An apparatus configured to: decode an encoded first latent tensor, associated with an input data item, from a bitstream; determine a reconstructed data item based, at least partially, on the decoded first latent tensor using, at least, a first set of layers; decode an encoded second latent tensor, associated with the input data item, from the bitstream; determine a reconstructed residual signal based, at least partially, on the decoded second latent tensor and one or more auxiliary inputs associated with the input data item; and determine a decoded data item based, at least partially, on the reconstructed residual signal and at least one of the reconstructed data item, or information associated with the reconstructed data item.

FIG. 8

EP 4 715 744 A1

**Description**

TECHNICAL FIELD

The example and non-limiting embodiments relate generally to data encoding and decoding and, more particularly, to end-to-end learned coding.

BACKGROUND

It is known, in image and video coding, to use neural networks to perform encoding and decoding functions as part of a codec.

SUMMARY

The following summary is merely intended to be illustrative. The summary is not intended to limit the scope of the claims.

In accordance with an example, an apparatus comprising: at least one processor; and at least one memory storing instructions that, when executed by the at least one processor, cause the apparatus at least to: determine a first latent tensor based, at least partially, on an input data item using, at least, a first set of layers; encode the first latent tensor in a bitstream; decode the encoded first latent tensor from the bitstream; determine a reconstructed data item based, at least partially, on the decoded first latent tensor using, at least, a second set of layers; determine residual information based, at least partially, on at least one of the input data item or information associated with the input data item, and at least one of the reconstructed data item or information associated with the reconstructed data item; determine a second latent tensor based, at least partially, on the residual information using, at least, a third set of layers; encode the second latent tensor in the bitstream; decode the encoded second latent tensor from the bitstream; determine a reconstructed residual signal based, at least partially, on the decoded second latent tensor and one or more auxiliary inputs using, at least, a fourth set of layers; and determine a decoded data item based, at least partially, on the reconstructed residual signal and at least one of the reconstructed data item, or the information associated with the reconstructed data item.

In accordance with an example, a method comprising: determining, with a codec, a first latent tensor based, at least partially, on an input data item using, at least, a first set of layers; encoding the first latent tensor in a bitstream; decoding the encoded first latent tensor from the bitstream; determining a reconstructed data item based, at least partially, on the decoded first latent tensor using, at least, a second set of layers; determining residual information based, at least partially, on at least one of the input data item or information associated with the input data item, and at least one of the reconstructed data item or information associated with the reconstructed data item; determining a second latent tensor based, at least partially, on the residual information using, at least, a third set of layers; encoding the second latent tensor in the bitstream; decoding the encoded second latent tensor from the bitstream; determining a reconstructed residual signal based, at least partially, on the decoded second latent tensor and one or more auxiliary inputs using, at least, a fourth set of layers; and determining a decoded data item based, at least partially, on the reconstructed residual signal and at least one of the reconstructed data item, or the information associated with the reconstructed data item.

In accordance with an example, an apparatus comprising means for: determining a first latent tensor based, at least partially, on an input data item using, at least, a first set of layers; encoding the first latent tensor in a bitstream; decoding the encoded first latent tensor from the bitstream; determining a reconstructed data item based, at least partially, on the decoded first latent tensor using, at least, a second set of layers; determining residual information based, at least partially, on at least one of the input data item or information associated with the input data item, and at least one of the reconstructed data item or information associated with the reconstructed data item; determining a second latent tensor based, at least partially, on the residual information using, at least, a third set of layers; encoding the second latent tensor in the bitstream; decoding the encoded second latent tensor from the bitstream; determining a reconstructed residual signal based, at least partially, on the decoded second latent tensor and one or more auxiliary inputs using, at least, a fourth set of layers; and determining a decoded data item based, at least partially, on the reconstructed residual signal and at least one of the reconstructed data item, or the information associated with the reconstructed data item.

In accordance with an example, a computer-readable medium comprising program instructions stored thereon for performing at least the following: determining a first latent tensor based, at least partially, on an input data item using, at least, a first set of layers; encoding the first latent tensor in a bitstream; decoding the encoded first latent tensor from the bitstream; determining a reconstructed data item based, at least partially, on the decoded first latent tensor using, at least, a second set of layers; determining residual information based, at least partially, on at least one of the input data item or information associated with the input data item, and at least one of the reconstructed data item or information associated with the reconstructed data item; determining a second latent tensor based, at least partially, on the residual information using, at least, a third set of layers; encoding the second latent tensor in the bitstream; encoding the encoded second latent tensor from the bitstream; determining a reconstructed residual signal based, at least partially, on the decoded second latent tensor and one or more auxiliary inputs using, at least, a fourth set of layers; and determining a decoded data item based, at least partially, on the reconstructed residual signal and at least one of the reconstructed data item, or the information associated with the reconstructed data item.

In accordance with an example, an apparatus comprising: at least one processor; and at least one memory storing instructions that, when executed by the at least one processor, cause the apparatus at least to: determine a first latent tensor based, at least partially, on an input data item using, at least, a first set of layers; encode the first latent tensor in a bitstream; decode the encoded first latent tensor from the bitstream; determine a set of features based, at least partially, on the decoded first latent tensor using, at least, a second set of layers; determine residual information based, at least partially, on at least one of the input data item or information associated with the input data item, and at least one of the set of features or information associated with the set of features; determine a second latent tensor based, at least partially, on the residual information using, at least, a third set of layers; encode the second latent tensor in the bitstream; decode the encoded second latent tensor from the bitstream; and determine a decoded data item based, at least partially, on the decoded second latent tensor, auxiliary input, and the at least one of the set of features or information associated with the set of features.

In accordance with an example, a method comprising: determining, with a codec, a first latent tensor based, at least partially, on an input data item using, at least, a first set of layers; encoding the first latent tensor in a bitstream; decoding the encoded first latent tensor from the bitstream; determining a set of features based, at least partially, on the decoded first latent tensor using, at least, a second set of layers; determining residual information based, at least partially, on at least one of the input data item or information associated with the input data item, and at least one of the set of features or information associated with the set of features; determining a second latent tensor based, at least partially, on the residual information using, at least, a third set of layers; encoding the second latent tensor in the bitstream; decoding the encoded second latent tensor from the bitstream; and determining a decoded data item based, at least partially, on the decoded second latent tensor, auxiliary input, and the at least one of the set of features or information associated with the set of features.

In accordance with an example, an apparatus comprising means for: determining a first latent tensor based, at least partially, on an input data item using, at least, a first set of layers; encoding the first latent tensor in a bitstream; decoding the encoded first latent tensor from the bitstream; determining a set of features based, at least partially, on the decoded first latent tensor using, at least, a second set of layers; determining residual information based, at least partially, on at least one of the input data item or information associated with the input data item, and at least one of the set of features or information associated with the set of features; determining a second latent tensor based, at least partially, on the residual information using, at least, a third set of layers; encoding the second latent tensor in the bitstream; decoding the encoded second latent tensor from the bitstream; and determining a decoded data item based, at least partially, on the decoded second latent tensor, auxiliary input, and the at least one of the set of features or information associated with the set of features.

In accordance with an example, a computer-readable medium comprising program instructions stored thereon for performing at least the following: determining a first latent tensor based, at least partially, on an input data item using, at least, a first set of layers; encoding the first latent tensor in a bitstream; decoding the encoded first latent tensor from the bitstream; determining a set of features based, at least partially, on the decoded first latent tensor using, at least, a second set of layers; determining residual information based, at least partially, on at least one of the input data item or information associated with the input data item, and at least one of the set of features or information associated with the set of features; determining a second latent tensor based, at least partially, on the residual information using, at least, a third set of layers; encoding the second latent tensor in the bitstream; decoding the encoded second latent tensor from the bitstream; and determining a decoded data item based, at least partially, on the decoded second latent tensor, auxiliary input, and the at least one of the set of features or information associated with the set of features.

In accordance with an example, an apparatus comprising: at least one processor; and at least one memory storing instructions that, when executed by the at least one processor, cause the apparatus at least to: determine a first latent tensor based, at least partially, on an input data item using, at least, a first set of layers; encode the first latent tensor in a bitstream; decode the encoded first latent tensor from the bitstream; determine residual information based, at least partially, on at least one of the first latent tensor or information associated with the first latent tensor, and at least one of the decoded first latent tensor, or information associated with the decoded first latent tensor; determine a second latent tensor based, at least partially, on the residual information using, at least, a second set of layers; encode the second latent tensor in the bitstream; decode the encoded second latent tensor from the bitstream; and determine a decoded data item based, at least partially, on the decoded second latent tensor and at least one of the decoded first latent tensor, or the information associated with the decoded first latent tensor using, at least, a third set of layers.

In accordance with an example, a method comprising: determining, with a codec, a first latent tensor based, at least partially, on an input data item using, at least, a first set of layers; encoding the first latent tensor in a bitstream; decoding the encoded first latent tensor from the bitstream; determining residual information based, at least partially, on at least one of the first latent tensor or information associated with the first latent tensor, and at least one of the decoded first latent tensor, or information associated with the decoded first latent tensor; determining a second latent tensor based, at least partially, on the residual information using, at least, a second set of layers; encoding the second latent tensor in the bitstream; decoding the encoded second latent tensor from the bitstream; and determining a decoded data item based, at least partially, on the decoded second latent tensor and at least one of the decoded first latent tensor, or the information associated with the decoded first latent tensor using, at least, a third set of layers.

In accordance with an example, an apparatus comprising means for: determining a first latent tensor based, at least partially, on an input data item using, at least, a first set of layers; encoding the first latent tensor in a bitstream; decoding the encoded first latent tensor from the bitstream; determining residual information based, at least partially, on at least one of the first latent tensor or information associated with the first latent tensor, and at least one of the decoded first latent tensor, or information associated with the decoded first latent tensor; determining a second latent tensor based, at least partially, on the residual information using, at least, a second set of layers; encoding the second latent tensor in the bitstream; decoding the encoded second latent tensor from the bitstream; and determining a decoded data item based, at least partially, on the decoded second latent tensor and at least one of the decoded first latent tensor, or the information associated with the decoded first latent tensor using, at least, a third set of layers.

In accordance with an example, a computer-readable medium comprising program instructions stored thereon for performing at least the following: determining a first latent tensor based, at least partially, on an input data item using, at least, a first set of layers; encoding the first latent tensor in a bitstream; decoding the encoded first latent tensor from the bitstream; determining residual information based, at least partially, on at least one of the first latent tensor or information associated with the first latent tensor, and at least one of the decoded first latent tensor, or information associated with the decoded first latent tensor; determining a second latent tensor based, at least partially, on the residual information using, at least, a second set of layers; encoding the second latent tensor in the bitstream; decoding the encoded second latent tensor from the bitstream; and determining a decoded data item based, at least partially, on the decoded second latent tensor and at least one of the decoded first latent tensor, or the information associated with the decoded first latent tensor using, at least, a third set of layers.

In accordance with an example, an apparatus comprising: at least one processor; and at least one memory storing instructions that, when executed by the at least one processor, cause the apparatus at least to: determine residual information based, at least partially, on at least one of a current input data item or information associated with the current input data item, and at least one of a previously coded input data item or information associated with the previously coded input data item; determine a latent tensor based, at least partially, on the residual information using, at least, a first set of layers; encode the latent tensor in a bitstream; decode the encoded latent tensor from the bitstream; determine a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived using, at least, a second set of layers; and determine a decoded data item based, at least partially, on the reconstructed residual signal and at least one of the previously coded input data item or the information associated with the previously coded input data item.

In accordance with an example, a method comprising: determining, with a codec, residual information based, at least partially, on at least one of a current input data item or information associated with the current input data item, and at least one of a previously coded input data item or information associated with the previously coded input data item; determining a latent tensor based, at least partially, on the residual information using, at least, a first set of layers; encoding the latent tensor in a bitstream; decoding the encoded latent tensor from the bitstream; determining a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived using, at least, a second set of layers; and determining a decoded data item based, at least partially, on the reconstructed residual signal and at least one of the previously coded input data item or the information associated with the previously coded input data item.

In accordance with an example, an apparatus comprising means for: determining residual information based, at least partially, on at least one of a current input data item or information associated with the current input data item, and at least one of a previously coded input data item or information associated with the previously coded input data item; determining a latent tensor based, at least partially, on the residual information using, at least, a first set of layers; encoding the latent tensor in a bitstream; decoding the encoded latent tensor from the bitstream; determining a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived using, at least, a second set of layers; and determining a decoded data item based, at least partially, on the reconstructed residual signal and at least one of the previously coded input data item or the information associated with the previously coded input data item.

In accordance with an example, a computer-readable medium comprising program instructions stored thereon for performing at least the following: determining residual information based, at least partially, on at least one of a current input data item or information associated with the current input data item, and at least one of a previously coded input data item or information associated with the previously coded input data item; determining a latent tensor based, at least partially, on the residual information using, at least, a first set of layers; encoding the latent tensor in a bitstream; decoding the encoded latent tensor from the bitstream; determining a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived using, at least, a second set of layers; and determining a decoded data item based, at least partially, on the reconstructed residual signal and at least one of the previously coded input data item or the information associated with the previously coded input data item.

In accordance with an example, an apparatus comprising: at least one processor; and at least one memory storing instructions that, when executed by the at least one processor, cause the apparatus at least to: determine a first latent tensor based, at least partially, on an input data item using, at least, a first set of layers; encode the first latent tensor in a bitstream; determine residual information based, at least partially, on at least one of the input data item or information associated with the input data item, and at least one of a reconstructed data item associated with the input data item or information associated with the reconstructed data item; determine a second latent tensor based, at least partially, on the residual information using, at least, a second set of layers; and encode the second latent tensor in the bitstream.

In accordance with an example, a method comprising: determining, with an encoder, a first latent tensor based, at least partially, on an input data item using, at least, a first set of layers; encoding the first latent tensor in a bitstream; determining residual information based, at least partially, on at least one of the input data item or information associated with the input data item, and at least one of a reconstructed data item associated with the input data item or information associated with the reconstructed data item; determining a second latent tensor based, at least partially, on the residual information using, at least, a second set of layers; and encoding the second latent tensor in the bitstream.

In accordance with an example, an apparatus comprising means for: determining a first latent tensor based, at least partially, on an input data item using, at least, a first set of layers; encoding the first latent tensor in a bitstream; determining residual information based, at least partially, on at least one of the input data item or information associated with the input data item, and at least one of a reconstructed data item associated with the input data item or information associated with the reconstructed data item; determining a second latent tensor based, at least partially, on the residual information using, at least, a second set of layers; and encoding the second latent tensor in the bitstream.

In accordance with an example, a computer-readable medium comprising program instructions stored thereon for performing at least the following: determining a first latent tensor based, at least partially, on an input data item using, at least, a first set of layers; encoding the first latent tensor in a bitstream; determining residual information based, at least partially, on at least one of the input data item or information associated with the input data item, and at least one of a reconstructed data item associated with the input data item or information associated with the reconstructed data item; determining a second latent tensor based, at least partially, on the residual information using, at least, a second set of layers; and encoding the second latent tensor in the bitstream.

In accordance with an example, an apparatus comprising: at least one processor; and at least one memory storing instructions that, when executed by the at least one processor, cause the apparatus at least to: decode an encoded first latent tensor, associated with an input data item, from a bitstream; determine a reconstructed data item based, at least partially, on the decoded first latent tensor using, at least, a first set of layers; decode an encoded second latent tensor, associated with the input data item, from the bitstream; determine a reconstructed residual signal based, at least partially, on the decoded second latent tensor and one or more auxiliary inputs associated with the input data item; and determine a decoded data item based, at least partially, on the reconstructed residual signal and at least one of the reconstructed data item, or information associated with the reconstructed data item.

In accordance with an example, a method comprising: decoding, with a decoder, an encoded first latent tensor, associated with an input data item, from a bitstream; determining a reconstructed data item based, at least partially, on the decoded first latent tensor using, at least, a first set of layers; decoding an encoded second latent tensor, associated with the input data item, from the bitstream; determining a reconstructed residual signal based, at least partially, on the decoded second latent tensor and one or more auxiliary inputs associated with the input data item; and determining a decoded data item based, at least partially, on the reconstructed residual signal and at least one of the reconstructed data item, or information associated with the reconstructed data item.

In accordance with an example, an apparatus comprising means for: decoding an encoded first latent tensor, associated with an input data item, from a bitstream; determining a reconstructed data item based, at least partially, on the decoded first latent tensor using, at least, a first set of layers; decoding an encoded second latent tensor, associated with the input data item, from the bitstream; determining a reconstructed residual signal based, at least partially, on the decoded second latent tensor and one or more auxiliary inputs associated with the input data item; and determining a decoded data item based, at least partially, on the reconstructed residual signal and at least one of the reconstructed data item, or information associated with the reconstructed data item.

In accordance with an example, a computer-readable medium comprising program instructions stored thereon for performing at least the following: decoding an encoded first latent tensor, associated with an input data item, from a bitstream; determining a reconstructed data item based, at least partially, on the decoded first latent tensor using, at least, a first set of layers; decoding an encoded second latent tensor, associated with the input data item, from the bitstream; determining a reconstructed residual signal based, at least partially, on the decoded second latent tensor and one or more auxiliary inputs associated with the input data item; and determining a decoded data item based, at least partially, on the reconstructed residual signal and at least one of the reconstructed data item, or information associated with the reconstructed data item.

In accordance with an example, an apparatus comprising: at least one processor; and at least one memory storing instructions that, when executed by the at least one processor, cause the apparatus at least to: determine a second latent tensor based, at least partially, on residual information associated with an input data item; encode the second latent tensor in a bitstream; decode the second latent tensor from the bitstream; determine a reconstructed residual signal based, at least partially, on the decoded second latent tensor and one or more auxiliary inputs associated with the input data item using, at least, a first set of layers; and provide the reconstructed residual signal.

In accordance with an example, a method comprising: determining, with a codec, a second latent tensor based, at least partially, on residual information associated with an input data item; encoding the second latent tensor in a bitstream; decoding the second latent tensor from the bitstream; determining a reconstructed residual signal based, at least partially, on the decoded second latent tensor and one or more auxiliary inputs associated with the input data item using, at least, a first set of layers; and providing the reconstructed residual signal.

In accordance with an example, an apparatus comprising means for: determining a second latent tensor based, at least partially, on residual information associated with an input data item; encoding the second latent tensor in a bitstream; decoding the second latent tensor from the bitstream; determining a reconstructed residual signal based, at least partially, on the decoded second latent tensor and one or more auxiliary inputs associated with the input data item using, at least, a first set of layers; and providing the reconstructed residual signal.

In accordance with an example, a computer-readable medium comprising program instructions stored thereon for performing at least the following: determining a second latent tensor based, at least partially, on residual information associated with an input data item; encoding the second latent tensor in a bitstream; decoding the second latent tensor from the bitstream; determining a reconstructed residual signal based, at least partially, on the decoded second latent tensor and one or more auxiliary inputs associated with the input data item using, at least, a first set of layers; and causing providing of the reconstructed residual signal.

According to some examples, there is provided the subject matter of the independent claims. Some further examples are defined in the dependent claims.

BRIEF DESCRIPTION OF THE DRAWINGS

The foregoing examples and other features are explained in the following description, taken in connection with the accompanying drawings, wherein:

FIG. 1 is a block diagram of one possible and non-limiting example system in which the example embodiments may be practiced;

FIG. 2 is a diagram illustrating features as described herein;

FIG. 3 is a diagram illustrating features as described herein;

FIG. 4 is a diagram illustrating features as described herein;

FIG. 5 is a diagram illustrating features as described herein;

FIG. 6 is a diagram illustrating features as described herein;

FIG. 7 is a diagram illustrating features as described herein;

FIG. 8 is a diagram illustrating features as described herein;

FIG. 9 is a diagram illustrating features as described herein;

FIG. 10 is a diagram illustrating features as described herein;

FIG. 11 is a diagram illustrating features as described herein;

FIG. 12 is a diagram illustrating features as described herein;

FIG. 13 is a diagram illustrating features as described herein;

FIG. 14 is a diagram illustrating features as described herein;

FIG. 15 is a diagram illustrating features as described herein;

FIG. 16 is a diagram illustrating features as described herein;

FIG. 17 is a diagram illustrating features as described herein;

FIG. 18 is a diagram illustrating features as described herein;

FIG. 19 is a diagram illustrating features as described herein;

FIG. 20 is a diagram illustrating features as described herein;

FIG. 21 is a diagram illustrating features as described herein;

FIG. 22 is a diagram illustrating features as described herein;

FIG. 23 is a diagram illustrating features as described herein;

FIG. 24 is a diagram illustrating features as described herein;

FIG. 25 is a diagram illustrating features as described herein;

FIG. 26 is a diagram illustrating features as described herein;

FIG. 27 is a diagram illustrating features as described herein;

FIG. 28 is a diagram illustrating features as described herein;

FIG. 29 is a diagram illustrating features as described herein;

FIG. 30 is a flowchart illustrating steps as described herein;

FIG. 31 is a flowchart illustrating steps as described herein;

FIG. 32 is a flowchart illustrating steps as described herein;

FIG. 33 is a flowchart illustrating steps as described herein;

FIG. 34 is a flowchart illustrating steps as described herein;

FIG. 35 is a flowchart illustrating steps as described herein; and

FIG. 36 is a flowchart illustrating steps as described herein;.

DETAILED DESCRIPTION OF EMBODIMENTS

The following abbreviations that may be found in the specification and/or the drawing figures are defined as follows:

| | |
|---|---|
| 3GPP | third generation partnership project |
| 4G | fourth generation |
| 5G | fifth generation |
| 5GC | 5G core network |
| APS | adaptation parameter set |
| AR | augmented reality |
| CABAC | context-adaptive binary arithmetic coding |
| CDMA | code division multiple access |
| CPU | central processing unit |
| cRAN | cloud radio access network |
| DCT | discrete cosine transform |
| E2E | end-to-end |
| eNB (or eNodeB) | evolved Node B (e.g., an LTE base station) |
| EN-DC | E-UTRA-NR dual connectivity |
| en-gNB or En-gNB | node providing NR user plane and control plane protocol terminations towards the UE, and act- |

| | | | | |
|---|---|---|---|---|
| | ing as secondary node in EN-DC | | UMTS | universal mobile telecommunications system |
| E-UTRA | evolved universal terrestrial radio access, i.e., the LTE radio access technology | | USB | universal serial bus |
| | | | VCM | video coding for machines |
| FDMA | frequency division multiple access | | VMAF | Video Multimethod Assessment Fusion |
| GAN | generative adversarial network | | VNR | virtualized network function |
| gNB (or gNodeB) | base station for 5G/NR, i.e., a node providing NR user plane and control plane protocol terminations towards the UE, and connected via the NG interface to the 5GC | | VR | virtual reality |
| | | | VVC | volumetric video coding |
| | | | WLAN | wireless local area network |
| GPU | graphical processing unit | | | |
| GSM | global systems for mobile communications | | | |
| HMD | head-mounted display | | | |
| IBC | intra block copy | | | |
| IEEE | Institute of Electrical and Electronics Engineers | | | |
| IMD | integrated messaging device | | | |
| IMS | instant messaging service | | | |
| IoT | Internet of Things | | | |
| JVET | Joint Video Expert Team | | | |
| LTE | long term evolution | | | |
| MAE | mean absolute error | | | |
| mAP | mean average precision | | | |
| MMS | multimedia messaging service | | | |
| MPEG-I | Moving Picture Experts Group immersive codec family | | | |
| MR | mixed reality | | | |
| MSE | mean squared error | | | |
| MS-SSIM | multiscale structure similarity index measure | | | |
| NAL | network abstraction layer | | | |
| ng or NG | new generation | | | |
| ng-eNB or NG-eNB | new generation eNB | | | |
| NN | neural network | | | |
| NNC | neural network coding | | | |
| NR | new radio | | | |
| N/W or NW | network | | | |
| O-RAN | open radio access network | | | |
| PC | personal computer | | | |
| PDA | personal digital assistant | | | |
| PSNR | peak signal-to-noise ratio | | | |
| QP | quantization parameter | | | |
| ROI | region of interest | | | |
| SEI | supplemental enhancement information | | | |
| SGD | stochastic gradient descent | | | |
| SMS | short messaging service | | | |
| SSIM | structure similarity index measure | | | |
| TCP-IP | transmission control protocol-internet protocol | | | |
| TDMA | time division multiple access | | | |
| UE | user equipment (e.g., a wireless, typically mobile device) | | | |

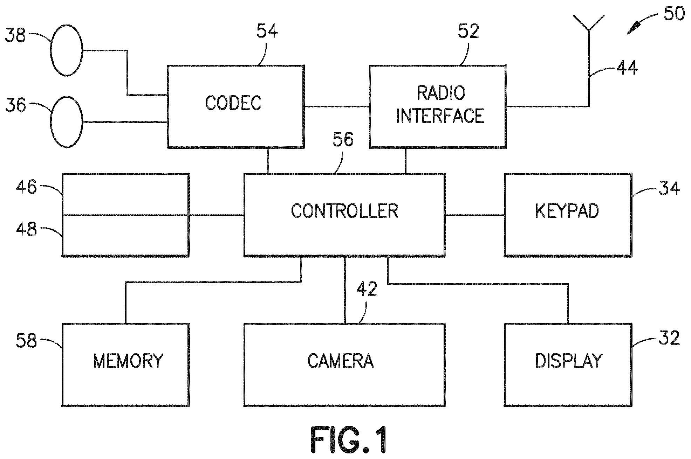

The following describes suitable apparatus and possible mechanisms for practicing example embodiments of the present disclosure. Accordingly, reference is first made to FIG. 1, which shows an example block diagram of an apparatus 50. The apparatus may be configured to perform various functions such as, for example, gathering information by one or more sensors, encoding and/or decoding information, receiving and/or transmitting information, analyzing information gathered or received by the apparatus, or the like. A device configured to encode a video scene may (optionally) comprise one or more microphones for capturing the scene and/or one or more sensors, such as cameras, for capturing information about the physical environment in which the scene is captured. Alternatively, a device configured to encode a video scene may be configured to receive information about an environment in which a scene is captured and/or a simulated environment. A device configured to decode and/or render the video scene may be configured to receive a Moving Picture Experts Group immersive codec family (MPEG-I) bitstream comprising the encoded video scene. A device configured to decode and/or render the video scene may comprise one or more speakers/audio transducers and/or displays, and/or may be configured to transmit a decoded scene or signals to a device comprising one or more speakers/audio transducers and/or displays. A device configured to decode and/or render the video scene may comprise a user equipment, a head/mounted display, or another device capable of rendering to a user an AR, VR and/or MR experience.

The electronic device 50 may for example be a mobile terminal or user equipment of a wireless communication system. Alternatively, the electronic device may be a computer or part of a computer that is not mobile. It should be appreciated that example embodiments of the present disclosure may be implemented within any electronic device or apparatus which may process data. The electronic device 50 may comprise a device that can access a network and/or cloud through a wired or wireless connection. The electronic device 50 may comprise one or more processors 56, one or more memories 58, and one or more transceivers 52 interconnected through one or more buses. The one or more processors 56 may comprise a central processing unit (CPU) and/or a graphical processing unit (GPU). Each of the one or more transceivers 52 includes a receiver and a transmitter. The one or more buses may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers may be connected to one or more antennas 44. The one or more memories 58 may include computer program code. The one or more memories 58 and the computer program code may be configured to, with the one or more processors 56, cause the electronic device 50 to perform one or more of the operations as described herein.

The electronic device 50 may connect to a node of a network. The network node may comprise one or more processors, one or more memories, and one or more transceivers interconnected through one or more buses. Each of the one or more transceivers includes a receiver and a transmitter. The one or more buses may be address, data, or control buses, and may include any interconnection mechanism, such as a series of lines on a motherboard or integrated circuit, fiber optics or other optical communication equipment, and the like. The one or more transceivers may be connected to one or more antennas. The one or more memories may include computer program code. The one or more memories and the computer program code may be configured to, with the one or more processors, cause the network node to perform one or more of the operations as described herein.

The electronic device 50 may comprise a microphone 36 or any suitable audio input which may be a digital or analogue signal input. The electronic device 50 may further comprise an audio output device 38 which in example embodiments of the present disclosure may be any one of: an earpiece, speaker, or an analogue audio or digital audio output connection. The electronic device 50 may also comprise a battery (or in other example embodiments of the present disclosure the device may be powered by any suitable mobile energy device such as solar cell, fuel cell, or clockwork generator). The electronic device 50 may further comprise a camera 42 or other sensor capable of recording or capturing images and/or video. Additionally or alternatively, the electronic device 50 may further comprise a depth sensor. The electronic device 50 may further comprise a display 32. The electronic device 50 may further comprise an infrared port for short range line of sight communication to other devices. In other example embodiments of the present disclosure the apparatus 50 may further comprise any suitable short-range communication solution such as for example a BLUETOOTH™ wireless connection or a USB/firewire wired connection.

It should be understood that an electronic device 50 configured to perform example embodiments of the present disclosure may have fewer and/or additional components, which may correspond to what processes the electronic device 50 is configured to perform. For example, an apparatus configured to encode a video might not comprise a speaker or audio transducer and may comprise a microphone, while an apparatus configured to render the decoded video might not comprise a microphone and may comprise a speaker or audio transducer.

Referring now to FIG. 1, the electronic device 50 may comprise a controller 56, processor or processor circuitry for controlling the apparatus 50. The controller 56 may be connected to memory 58 which in example embodiments of the present disclosure may store both data in the form of image and audio data and/or may also store instructions for implementation on the controller 56. The controller 56 may further be connected to codec circuitry 54 suitable for carrying out coding and/or decoding of audio and/or video data or assisting in coding and/or decoding carried out by the controller.

The electronic device 50 may further comprise a card reader 48 and a smart card 46, for example a UICC and UICC reader, for providing user information and being suitable for providing authentication information for authentication and authorization of the user/electronic device 50 at a network. The electronic device 50 may further comprise an input device 34, such as a keypad, one or more input buttons, or a touch screen input device, for providing information to the controller 56.

The electronic device 50 may comprise radio interface circuitry 52 connected to the controller and suitable for generating wireless communication signals for example for communication with a cellular communications network, a wireless communications system, or a wireless local area network. The apparatus 50 may further comprise an antenna 44 connected to the radio interface circuitry 52 for transmitting radio frequency signals generated at the radio interface circuitry 52 to other apparatus(es) and/or for receiving radio frequency signals from other apparatus(es).

The electronic device 50 may comprise a microphone 38, camera 42, and/or other sensors capable of recording or detecting audio signals, image/video signals, and/or other information about the local/virtual environment, which are then passed to the codec 54 or the controller 56 for processing. The electronic device 50 may receive the audio/image/video signals and/or information about the local/virtual environment for processing from another device prior to transmission and/or storage. The electronic device 50 may also receive either wirelessly or by a wired connection the audio/image/video signals and/or information about the local/virtual environment for encoding/decoding. The structural elements of electronic device 50 described above represent examples of means for performing a corresponding function.

The memory 58 may be of any type suitable to the local technical environment and may be implemented using any suitable data storage technology, such as semiconductor-based memory devices, flash memory, magnetic memory devices and systems, optical memory devices and systems, fixed memory and removable memory. The memory 58 may be a non-transitory memory. The memory 58 may be means for performing storage functions. The controller 56 may be or comprise one or more processors, which may be of any type suitable to the local technical environment, and may include one or more of general-purpose computers, special purpose computers, microprocessors, digital signal processors (DSPs) and processors based on a multi-core processor architecture, as non-limiting examples. The controller 56 may be means for performing functions.

The electronic device 50 may be configured to perform capture of a volumetric scene according to example embodiments of the present disclosure. For example, the electronic device 50 may comprise a camera 42 or other sensor capable of recording or capturing images and/or video. The electronic device 50 may also comprise one or more transceivers 52 to enable transmission of captured content for processing at another device. Such an electronic device 50 may or may not include all the modules illustrated in FIG. 1.

The electronic device 50 may be configured to perform processing of volumetric video content according to example embodiments of the present disclosure. For example, the electronic device 50 may comprise a controller 56 for processing images to produce volumetric video content, a controller 56 for processing volumetric video content to project 3D information into 2D information, patches, and auxiliary information, and/or a codec 54 for encoding 2D information, patches, and auxiliary information into a bitstream for transmission to another device with radio interface 52. Such an electronic device 50 may or may not include all the modules illustrated in FIG. 1.

The electronic device 50 may be configured to perform encoding or decoding of 2D information representative of volumetric video content according to example embodiments of the present disclosure. For example, the electronic device 50 may comprise a codec 54 for encoding or decoding 2D information representative of volumetric video content. Such an electronic device 50 may or may not include all the modules illustrated in FIG. 1.

The electronic device 50 may be configured to perform rendering of decoded 3D volumetric video according to example embodiments of the present disclosure. For example, the electronic device 50 may comprise a controller for projecting 2D information to reconstruct 3D volumetric video, and/or a display 32 for rendering decoded 3D volumetric video. Such an electronic device 50 may or may not include all the modules illustrated in FIG. 1.

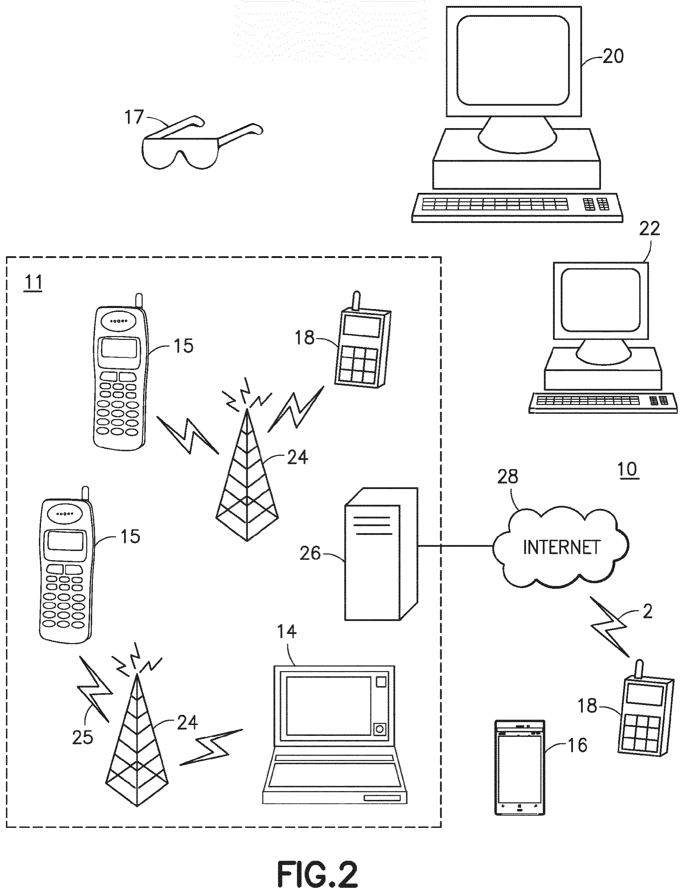

With respect to FIG. 2, an example of a system within which example embodiments of the present disclosure can be utilized is shown. The system 10 comprises multiple communication devices which can communicate through one or more networks. The system 10 may comprise any combination of wired or wireless networks including, but not limited to a wireless cellular telephone network (such as a GSM, UMTS, E-UTRA, LTE, CDMA, 4G, 5G, 6G network etc.), a wireless local area network (WLAN) such as defined by any of the IEEE 802.x standards, a BLUETOOTH™ personal area network, an Ethernet local area network, a token ring local area network, a wide area network, and/or the Internet. A wireless network may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors and memories, and also such virtualized entities create technical effects.

It may also be noted that operations of example embodiments of the present disclosure may be carried out by a plurality of cooperating devices (e.g. cRAN).

The system 10 may include both wired and wireless communication devices and/or electronic devices suitable for implementing example embodiments of the present disclosure.

For example, the system shown in FIG. 2 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an apparatus 15, a combination of a personal digital assistant (PDA) and a mobile telephone 14, a PDA 16, an integrated messaging device (IMD) 18, a desktop computer 20, a notebook computer 22, and a head-mounted display (HMD) 17. The electronic device 50 may comprise any of those example communication devices. In an example embodiment of the present disclosure, more than one of these devices, or a plurality of one or more of these devices, may perform the disclosed process(es). These devices may connect to the internet 28 through a wireless connection 2.

The example embodiments of the present disclosure may also be implemented in a set-top box; i.e. a digital TV receiver, which may/may not have a display or wireless capabilities, in tablets or (laptop) personal computers (PC), which have hardware and/or software to process neural network data, in various operating systems, and in chipsets, processors, DSPs and/or embedded systems offering hardware/software based coding. The example embodiments of the present disclosure may also be implemented in cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Some or further apparatus may send and receive calls and messages and communicate with service providers through a wireless connection 25 to a base station 24, which may be, for example, an eNB, gNB, access point, access node, other node, etc. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), BLUETOOTH™, IEEE 802.11, 3GPP Narrowband IoT and any similar wireless communication technology. A communications device involved in implementing various example embodiments of the present disclosure may communicate using various media including, but not limited to, radio, infrared, laser, cable connections, and any suitable connection.

In telecommunications and data networks, a channel may refer either to a physical channel or to a logical channel. A physical channel may refer to a physical transmission medium such as a wire, whereas a logical channel may refer to a logical connection over a multiplexed medium, capable of conveying several logical channels. A channel may be used for conveying an information signal, for example a bitstream, which may be a MPEG-I bitstream, from one or several senders (or transmitters) to one or several receivers.

Having thus introduced one suitable but non-limiting technical context for the practice of the example embodiments of the present disclosure, example embodiments will now be described with greater specificity.

Fundamentals of neural networks

Features as described herein may generally relate to neural networks. A neural network (NN) may be described as a computation graph consisting of several layers of computation. In an example of a NN, each layer may consist of one or more units, where each unit may perform an elementary computation. A unit may be connected to one or more other units, and the connection may be associated with a weight. The weight may be used for scaling the signal passing through the associated connection. Weights are learnable parameters, i.e., values which can be learned from training data. There may be other learnable parameters, such as those of batch-normalization layers. Example embodiments of the present disclosure may or may not relate to, or involve, NN comprising multiple layers of computation.

In some neural networks, such as convolutional neural networks for image classification, initial layers (those close to the input data) may extract semantically low-level features such as edges and textures in images, whereas intermediate layers may extract higher-level features. After the feature extraction layers, there may be one or more layers performing a certain task, such as classification, semantic segmentation, object detection, denoising, style transfer, super-resolution, etc. Example embodiments of the present disclosure may or may not relate to, or involve, convolutional neural networks.

Neural networks are being utilized in an ever-increasing number of applications for many different types of devices, such as mobile phones. Examples include image and video analysis and processing, social media data analysis, device usage data analysis, etc.

One property of neural nets/networks (and other machine learning tools) is that they are able to learn properties from input data, e.g., in a supervised way or in an unsupervised way. Such learning may be a result of a training algorithm, or may be achieved by means of another neural network providing the training signal (sometimes, this latter approach may be referred to as "meta learning").

In general, the training algorithm may consist of changing some properties of the neural network so that its output is as close as possible to a desired output. For example, in the case of classification of objects in images, the output of the neural network may be used to derive a class or category index which may indicate the class or category to which the object in the input image belongs. Training may comprise minimizing or decreasing the output's error, also referred to as the loss or loss function. Examples of losses are mean squared error, cross-entropy, etc. Example embodiments of the present disclosure may or may not relate to, or involve, neural networks trained according to a training algorithm.

In recent deep learning techniques, training may be an iterative process, where at each iteration the algorithm may modify the weights of the neural net to make a gradual improvement of the network's output, i.e., to gradually decrease the loss, for example by means of a gradient descent technique. In one example, at each training iteration, gradients of the loss function with respect to one or more weights or parameters of the NN may be computed, for example by a backpropagation technique; the computed gradients may then be used by an optimization routine, such as Adam or Stochastic Gradient Descent (SGD) to obtain an update to the one or more weights or parameters.

In the present disclosure, the terms "model", "neural network", "neural net" and "network" are used interchangeably. In the present disclosure, the weights of neural networks may sometimes be referred to as learnable parameters or simply as parameters.

Training a neural network may be regarded as an optimization process, but the final goal may be different from the typical goal of optimization. In optimization, the main goal is to minimize a function. In machine learning, the goal of the optimization or training process is to make the model learn the properties of the data distribution from a limited training dataset. In other words, the goal is to learn to use a limited training dataset in order to learn to generalize to previously unseen data, i.e., data which was not used for training the model. This is usually referred to as generalization. In practice, data is usually split into at least two sets, the training set and the validation set. The training set is used for training the network, i.e., to modify its learnable parameters in order to minimize the loss. The validation set is at least partially different from the training set. The validation set is used for checking the performance of the network on data which was not used to minimize the loss, as an indication of the final performance of the model. In particular, the errors on the training set and on the validation set may be monitored during the training process to understand the following:

- If the network is learning at all - in this case, the training set error should decrease, otherwise the model is in the regime of underfitting.

- If the network is learning to generalize - in this case, also the validation set error needs to decrease and to be not too much higher than the training set error. If the training set error is low, but the validation set error is much higher than the training set error, or it does not decrease, or it even increases, the model may be in the regime of overfitting. This means that the model has just memorized the training set's properties and performs well only on that set, but performs poorly on a set not used for tuning its parameters.

Fundamentals of video/image coding

Features as described herein may generally relate to video or image coding. A video codec consists of an encoder that transforms the input video into a compressed representation suited for storage/transmission, and a decoder that can decompress the compressed video representation back into a viewable form. Typically, the encoder discards some information in the original video sequence in order to represent the video in a more compact form (that is, at a lower bitrate).

Typical hybrid video codecs, for example ITU-T H.263 and H.264, encode the video information in two phases. Firstly, pixel values in a certain picture area (or "block") are predicted, for example by motion compensation means (i.e. finding and indicating an area in one of the previously coded video frames that corresponds closely to the block being coded), or by spatial means (i.e. using the pixel values around the block to be coded in a specified manner). Secondly, the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients, and entropy coding the quantized coefficients. By varying the fidelity of the quantization process, the encoder can control the balance between the accuracy of the pixel representation (i.e. picture quality) and the size of the resulting coded video representation (i.e. file size or transmission bitrate).

Inter prediction, which may also be referred to as temporal prediction, motion compensation, or motion-compensated prediction, exploits temporal redundancy. In inter prediction, the sources of prediction are previously decoded pictures (a.k.a. reference pictures).

In temporal inter prediction, the sources of prediction are previously decoded pictures in the same scalable layer. In intra block copy (IBC; a.k.a. intra-block-copy prediction), prediction may be applied similarly to temporal inter prediction, but the reference picture is the current picture, and only previously decoded samples can be referred in the prediction process. Inter-layer or inter-view prediction may be applied similarly to temporal inter prediction, but the reference picture is a decoded picture from another scalable layer or from another view, respectively. In some cases, inter prediction may refer to temporal inter prediction only, while in other cases inter prediction may refer collectively to temporal inter prediction and any of intra block copy, inter-layer prediction, and inter-view prediction, provided that they are performed with the same or similar process as temporal prediction. Inter prediction, temporal inter prediction, or temporal prediction may sometimes be referred to as motion compensation or motion-compensated prediction.

Intra prediction utilizes the fact that adjacent pixels within the same picture are likely to be correlated. Intra prediction can be performed in the spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors, and only the difference relative to the motion vector predictor may be coded. Prediction of coding parameters and intra prediction may be collectively referred to as in-picture prediction.

The decoder reconstructs the output video by applying prediction means similar to the encoder to form a predicted representation of the pixel blocks (e.g. using the motion or spatial information created by the encoder and stored in the compressed representation) and prediction error decoding (e.g. inverse operation of the prediction error coding recovering the quantized prediction error signal in the spatial pixel domain). After applying prediction and prediction error decoding means, the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

In typical video codecs, the motion information is indicated with motion vectors associated with each motion compensated image block. Each of these motion vectors represents the displacement of the image block in the picture to be coded (in the encoder side) or decoded (in the decoder side) and the prediction source block in one of the previously coded or decoded pictures. In order to represent motion vectors efficiently, those are typically coded differentially with respect to block specific predicted motion vectors. In typical video codecs, the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in the temporal reference pictures, and signaling the chosen candidate as the motion vector predictor. In addition to predicting the motion vector values, the reference index of previously coded/decoded picture can be predicted. The reference index is typically predicted from adjacent blocks and/or or co-located blocks in the temporal reference picture. Moreover, typical high efficiency video codecs employ an additional motion information coding/decoding mechanism, often called merging/merge mode, where all the motion field information, which includes the motion vector and corresponding reference picture index for each available reference picture list, is predicted and used without any modification/correction. Similarly, predicting the motion field information is carried out using the motion field information of adjacent blocks and/or co-located blocks in the temporal reference pictures, and the used motion field information is signaled among a list of motion field candidates filled with motion field information of available adjacent/co-located blocks.

In typical video codecs, the prediction residual after motion compensation is first transformed with a transform kernel (like DCT) and then coded. The reason for this is that, often, there still exists some correlation among the residual and transform can in many cases help reduce this correlation and provide more efficient coding.

Typical video encoders utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Video coding specifications may enable the use of supplemental enhancement information (SEI) messages or alike. Some video coding specifications include SEI network abstraction layer (NAL) units, and some video coding specifications contain both prefix SEI NAL units and suffix SEI NAL units, where the former type can start a picture unit or alike, and the latter type can end a picture unit or alike. An SEI NAL unit contains one or more SEI messages which are not required for the decoding of output pictures but may assist in related processes, such as picture output timing, post-processing of decoded pictures, rendering, error detection, error concealment, and resource reservation. Several SEI messages are specified in H.264/AVC, H.265/HEVC, H.266/VVC, and H.274/VSEI standards, and the user data SEI messages enable organizations and companies to specify SEI messages for their own use. The standards may contain the syntax and semantics for the specified SEI messages, but a process for handling the messages in the recipient might not be defined. Consequently, encoders may be required to follow the standard specifying a SEI message when they create SEI message(s), and decoders might not be required to process SEI messages for output order conformance. One of the reasons to include the syntax and semantics of SEI messages in standards is to allow different system specifications to interpret the supplemental information identically, and hence interoperate. System specifications may require the use of particular SEI messages both in the encoding end and in the decoding end, and additionally the process for handling particular SEI messages in the recipient may be specified.

Background information on neural network based image/video coding

Features as described herein may generally relate to use of NN to code images and/or videos. Recently, neural networks (NNs) have been used in the context of image and video compression, by following mainly two approaches.

In a first approach, NNs are used to replace one or more of the components of a traditional codec, such as a VVC/H.266-compliant codec. Here, by "traditional" or "legacy" we mean those codecs whose components and their parameters are typically not learned from data by means of machine learning techniques. Examples of components that may be implemented as neural networks are: an in-loop filter, for example a NN that works as an additional in-loop filter with respect to the traditional loop filters, or a NN that works as the only additional in-loop filter, thus replacing any other in-loop filter; Intra-frame prediction; inter-frame prediction; transform and/or inverse transform; probability model for lossless coding; etc.

In a second approach, commonly referred to as "end-to-end learned compression" (or end-to-end learned codec), NNs are used as the main components of the image/video codecs. However, the codec may still comprise components which are not based on machine learning techniques. In this second approach, two design options are as follows:

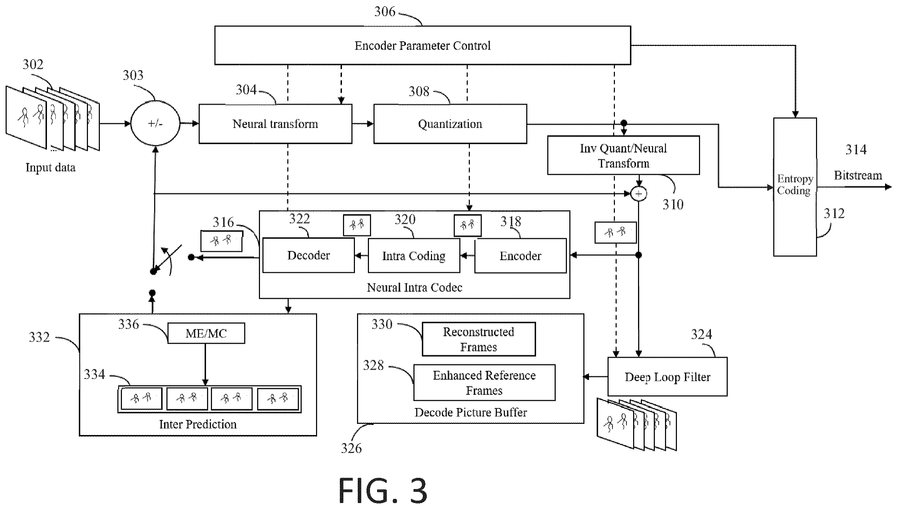

- Option 1: re-use the traditional video coding pipeline, but replace most or all the components with NNs. Referring now to FIG. 3, illustrated is an example of an end-to-end learned codec that includes NNs replacing some components of the traditional video coding pipeline. Input signal (x) (302) may be combined (303) with other information and provided to a neural transform (304), which may also receive input from an encoder parameter control (306). Output of the neural transform (304) may be provided for quantization (308), and then for inverse quantization / neural transform (310) as well as entropy coding (312) to a bitstream (314). Entropy coding (312) may be performed based on input from the encoder parameter control (306).

The output of the inverse quantization / neural transform (310) may be combined with other information, and provided to a neural intra codec (316) and to a deep loop filter (324). The neural intra codec (316) may also receive input from the encoder parameter control (306), and may comprise an encoder (318), intra coding (320), and a decoder (322).

The deep loop filter (324) may also receive input from the encoder parameter control (306), and may provide output to a decode picture buffer (326), which may produce an enhanced reference frame (328) based, at least partially, on one or more reconstructed frames (330). The decode picture buffer (326) may provide output for inter prediction (332), which may provide output based, at least partially, on input from the encoder parameter control (306) and ME/MC (336), Gnet(Cnet(·)) (334).

In the example of FIG. 3, the forward and inverse transforms were replaced with two neural networks (304, 310), the intra codec comprises a neural network (316), and the loop filter is a neural network (324).

- Option 2: re-design the whole pipeline as a neural network auto-encoder with a quantization and lossless coding in the middle part. This option may also be referred to as end-to-end learned coding. The codec may comprise the following:

- Encoder NN (also referred to as a neural network based encoder, or NN encoder): performs a non-linear transformation of the input. The output is typically referred to as a latent tensor.

- Quantization and lossless encoding of the encoder NN's output.

- Lossless decoding and dequantization.

- Decoder NN (also referred to as a neural network based decoder, or NN decoder): performs a non-linear inverse transformation from dequantized latent tensor to a reconstructed input.

It is to be understood that even in end-to-end learned approaches, there may be components which are not learned/trained from data, such as the arithmetic codec.

Further information on neural network-based end-to-end learned video coding

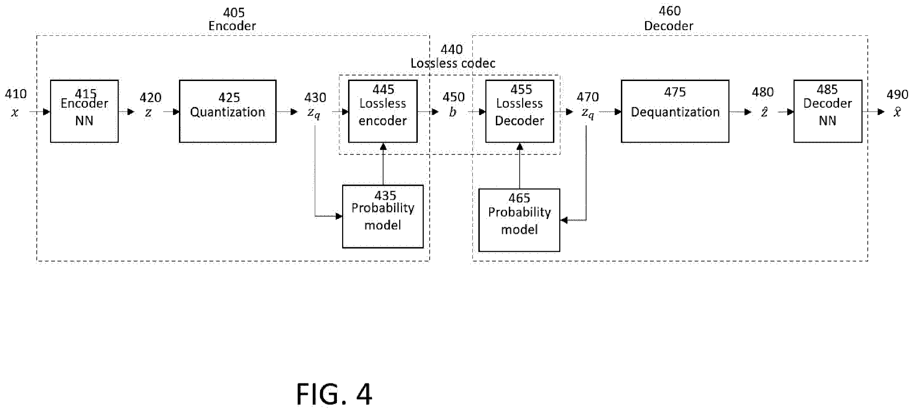

Features as described herein may generally relate to NN-based end-to-end (E2E) learned video codecs. Referring now to FIG. 4, illustrated is an example of neural network-based end-to-end learned coding, such as an end-to-end learned video coding system or an end-to-end learned image coding system.

Even though some examples are provided with respect to coding images or videos, it is to be understood that other types of data may be coded in a similar way, such as audio, speech, text, features, etc. As shown in FIG. 4, a typical neural network-based end-to-end learned coding system contains an encoder (405) and a decoder (460).

The encoder (405) comprises an encoder NN (415), a quantizer or quantization (425), a probability model (435), a lossless encoder (445) (for example arithmetic encoder). The decoder (460) comprises a lossless decoder (455) (for example, an arithmetic decoder), a probability model (465), a dequantizer or dequantization (475), and a decoder NN (485).

It is to be noted that the probability model present at encoder side (435) and the probability model present at decoder side (465) may be the same or substantially the same. For example, they may be two copies of the same probability model. The probability model (435, 465) may also be a neural network and/or may mainly comprise neural network components, and may be referred to as a neural network based probability model or learned probability model.

The lossless encoder (445) and the lossless decoder (455) form a lossless codec (440). A lossless codec may be an entropy-based lossless codec. An example of a lossless codec is an arithmetic codec, such as a context-adaptive binary arithmetic coding (CABAC). Sometimes, the term lossless codec may refer to a system that comprises also the probability model, in addition to, for example, an arithmetic encoder and an arithmetic decoder.

The encoder NN (415) and the decoder NN (485) may typically be two neural networks, or may mainly comprise neural network components.

The quantizer (425), dequantizer (475) and lossless codec (440) are typically not based on neural network components, but may potentially comprise neural network components.

In the example of FIG. 4, the encoder NN (415) may take an input x (410), which may comprise, for example, an image to be compressed. The encoder NN (415) may output a latent tensor z (420). In one example, the latent tensor may be a 3D tensor, where the three dimensions of such tensor may represent a channel dimension, a vertical dimension (also sometimes referred to as height dimension) and a horizontal dimension (also sometimes referred to as width dimension). In another example, the latent tensor may be a 4D tensor, where the four dimensions of such tensor may represent sample dimension (also sometimes referred to as batch dimension, which is the dimension along which different samples of data can be placed), a channel dimension, a vertical dimension (also sometimes referred to as height dimension) and a horizontal dimension (also sometimes referred to as width dimension). In yet another example, in the case of compressing a signal with a temporal dimension such as a video, the latent tensor may be a 4D tensor, where the four dimensions of such tensor may represent a channel dimension, a vertical dimension (also sometimes referred to as height dimension), a horizontal dimension (also sometimes referred to as width dimension), and a temporal dimension. The latent tensor (420) may be input to a quantization operation (425), obtaining a quantized latent tensor $z_q$ (430). The quantized latent tensor (430) may be lossless-encoded into a bitstream b (450) by the lossless encoder (445), based also on an output of the probability model (435). In particular, the probability model may take as input at least part of the quantized latent tensor (430) and may output an estimate of a probability, or an estimate of a probability distribution, or an estimate of one or more parameters of a probability distribution, for one or more elements of the quantized latent tensor. The bitstream (450) may represent an encoded or compressed version of the input x (410).

The bitstream (450) may be lossless-decoded by the lossless decoder (455) also based on an output of the probability model present at decoder side (465), obtaining a quantized latent tensor $z_q$ (470). The quantized latent tensor may be dequantized (475), obtaining a reconstructed latent tensor $\hat{z}$ (480). The reconstructed latent tensor (480) may be input to a decoder NN (485), obtaining a reconstructed input $\hat{x}$ (490), i.e., a reconstructed version of the input x (410). The reconstructed input (490) may also be referred to as reconstructed data, or reconstruction, or decoded data, or decoded input, or decoded output, and the like.

FIG. 4 presents a simplified description of an end-to-end learned codec; more sophisticated designs, or variations of this design, are possible.

The neural network components, or a subset of the neural network components, of an end-to-end learned codec may be trained by minimizing a rate-distortion loss function:

$$L = D + \lambda R$$

where D is a distortion loss term, R is a rate loss term, and $\lambda$ is a weight that controls the balance between the two losses. The distortion loss term may be referred to also as reconstruction loss term, or simply reconstruction loss. The rate loss term may be referred to simply as rate loss.

The distortion loss term measures the quality of the reconstructed or decoded output, and may comprise (but may not be limited to) one or more of the following:

- Mean square error (MSE)

- Structure similarity index measure (SSIM)

- Multiscale structure similarity index measure (MS-SSIM)

- Losses derived from the use of a pretrained neural network. For example, error(f1, f2), where f1 and f2 are the features extracted by a pretrained neural network for the input data and the decoded data, respectively, and error() is an error or distance function, such as L1 norm or L2 norm.

- Losses derived from the use of a neural network that is trained (substantially) simultaneously with the end-to-end learned codec. For example, adversarial loss can be used, which is the loss provided by a discriminator neural network that is trained adversarially with respect to the codec, following the settings proposed in the context of Generative Adversarial Networks (GANs) and their variants.

- Loss that is related to a performance of one or more machine analysis tasks or to an estimated performance of one or more machine analysis tasks, where the one or more machine analysis tasks may comprise classification, object detection, image segmentation, instance segmentation, etc. In one example, the estimated performance of one or more machine analysis tasks may comprise a distortion computed based at least on a first set of features extracted from an output of the decoder, and a second set of features extracted from a respective ground truth data, where the first set of features and the second set of features are output by one or more layers of a pretrained feature-extraction neural network.

Multiple distortion losses may be used and integrated into D, such as a weighted sum of MSE and SSIM.

The rate loss term may be used to train the encoder NN to output a low-entropy latent tensor, or a latent tensor such that the quantized latent tensor has low entropy, or a latent tensor such that the probability distribution of the quantized latent tensor may be better estimated or predicted by the probability model.

The rate loss term may be used to train the probability model to better estimate or predict the probability distribution of the quantized latent tensor.

Examples of the rate loss terms include the following:

- In one example, the rate loss term may be derived from the output of the probability model, and it may represent the estimated entropy of the quantized latent representation, which may indicate the number of bits necessary to represent the quantized latent tensor.

- A sparsification loss, i.e., a loss that encourages the quantized latent tensor to comprise many zeros. Examples are L0 norm, L1 norm, L1 norm divided by L2 norm.

In order to train the neural network components, or a subset of the neural network components, of an end-to-end learned codec, one or more of reconstruction losses may be used, and one or more rate losses may be used. In one example, the one or more reconstruction losses and/or one or more rate losses may be combined by means of a weighted sum. Typically, the different loss terms are weighted using different weights, and these weights determine how the final system performs in terms of rate-distortion performance. For example, if more weight is given to the reconstruction losses with respect to the rate losses, the system may learn to compress less, but to reconstruct with higher accuracy (e.g. as measured by a metric that correlates with the reconstruction losses). These weights are usually considered to be hyper-parameters of the training process, and may be set manually by the person designing the training process, or automatically, for example by grid search or by using additional neural networks.

In one case, the training process may be performed jointly with respect to the distortion loss D and the rate loss R. In another case, the training process may be performed in two alternating phases, where in a first phase only the distortion loss D may be used, and in a second phase only the rate loss R may be used.

For lossless video/image compression, the system may only comprise the probability model and lossless encoder and lossless decoder. The loss function would comprise only the rate loss, since the distortion loss is always zero (i.e., no loss of information).

In the present disclosure, we refer to inference phase, or inference stage, or inference time, or test time, the phase when a neural network or a codec is used for its purpose, such as encoding and decoding an input image.

Background information on Video Coding for Machines (VCM)

Features as described herein may generally relate to video coding for machines (VCM). Reducing the distortion in image and video compression is often intended to increase human perceptual quality, as humans are considered to be the end users, i.e. consuming/watching the decoded images or videos. Recently, with the advent of machine learning, especially deep learning, there is a rising number of machines (i.e., autonomous agents) that analyze data independently from humans, and may even make decisions based on the analysis results without human intervention. Examples of such analysis are object detection, scene classification, semantic segmentation, video event detection, anomaly detection, pedestrian tracking, etc. For example, such analysis tasks may be performed by neural networks.

It is likely that the device where the analysis takes place has multiple "machines" or neural networks (NNs). These multiple machines may be used in a certain combination which is, for example, determined by an orchestrator sub-system. The multiple machines may be used, for example, in succession, based on the output of the previously used machine, and/or in parallel. For example, a video may be analyzed by one machine (NN) for detecting pedestrians, by another machine (another NN) for detecting cars, and by another machine (another NN) for estimating the depth of all the pixels in the frames.

Example use cases and applications are self-driving cars, video surveillance cameras and public safety, smart sensor networks, smart TV and smart advertisement, person re-identification, smart traffic monitoring, drones, etc. In addition to image and video data, automatic analysis and processing is increasingly being performed for other types of data, such as audio, speech, text.

Compressing (and decompressing) data where the end user comprises machines (e.g., neural networks) is commonly referred to as compression or coding for machines. In the case of video data, it is referred to as video compression or coding for machines (VCM). Compressing for machines may differ from compressing for humans, for example, with respect to the algorithms and technology used in the codec, or the training losses used to train any neural network components of the codec, or the evaluation methodology of codecs.

It is to be understood that, when considering the case of coding for machines, we use the term "receiver-side" or "decoder-side" to refer to the physical or abstract entity or device which contains one or more machines, and runs these one or more machines on some encoded and eventually decoded video representation which is encoded by another physical or abstract entity or device, the "encoder-side device".

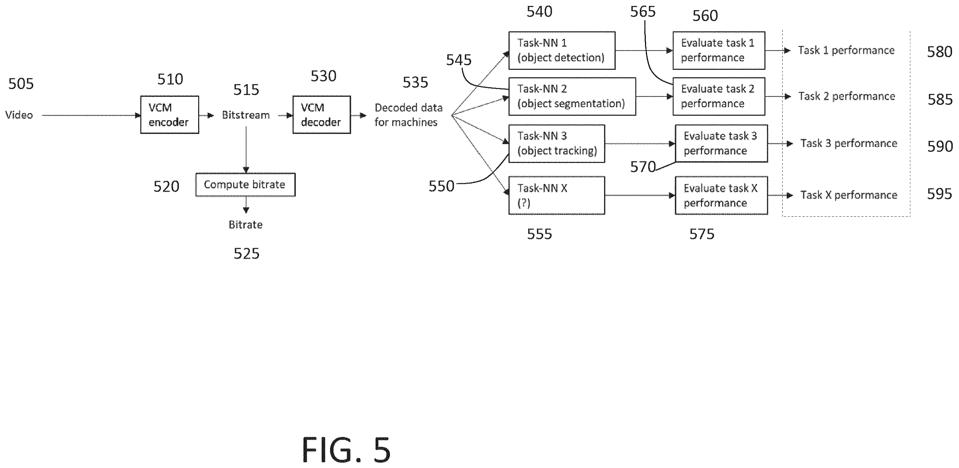

Referring now to FIG. 5, illustrated is an example of a pipeline of video coding for machines. A VCM encoder (510) may encode the input video (505) into a bitstream (515). A bitrate (525) may be computed (520) from the bitstream (515), as a measure of the size of the bitstream. A VCM decoder (530) may decode the bitstream (515) that was produced by the VCM encoder (510).

The output of the VCM decoder (530) may be referred to as "Decoded data for machines" (535). This data may be considered as the decoded or reconstructed video. However, in some implementations of this pipeline, this data may not have same or similar characteristics as the original video which was input to the VCM encoder. For example, this data may not be easily understandable by a human by simply rendering the data onto a screen, if such rendering is possible.

The output (535) of the VCM decoder (530) may then be input to one or more task neural networks (540, 545, 550, 555). In FIG. 5, for the sake of illustrating that there may be any number of task-NNs, there are three example task-NNs, and a non-specified one (Task-NN X, 555). One goal of VCM may be to obtain a low bitrate while guaranteeing that the task-NNs still perform well (580, 585, 590, 595) in terms of the evaluation metric associated to each task (560, 565, 570, 575).

It is to be understood that, in some cases, the VCM decoder may not be present. In one example, the machines may be run directly on the bitstream. In some other cases, the VCM decoder may comprise only a lossless decoding stage, and the lossless decoded data may be provided as input to the machines. In yet some other cases, the VCM decoder may comprise a lossless decoding stage following by a dequantization operation, and the loss-decoded and dequantized data may be provided as input to the machines.

When a conventional video encoder, such as a H.266/VVC encoder, is used as a VCM encoder, one or more of the following approaches may be used to adapt the encoding to be suitable to machine analysis tasks:

- One or more regions of interest (ROIs) may be detected. An ROI detection method may be used. For example, ROI detection may be performed using a task NN, such as an object detection NN. In some cases, ROI boundaries of a group of pictures or an intra period may be spatially overlaid and rectangular areas may be formed to cover the ROI boundaries. The detected ROIs (or rectangular areas, likewise) may be used in one or more of the following ways: the quantization parameter (QP) may be adjusted spatially in a manner that ROIs are encoded using finer quantization step size(s) than other regions. For example, QP may be adjusted CTU-wise; the video may be preprocessed to contain only the ROIs, while the other areas may be replaced by one or more constant values or removed; the video may be preprocessed so that the areas outside the ROIs are blurred or filtered; or, a grid may be formed in a manner that a single grid cell covers a ROI. Grid rows or grid columns that contain no ROIs may be down-sampled as preprocessing to encoding.

- Quantization parameter of the highest temporal sublayer(s) may be increased (i.e. coarser quantization is used) when compared to practices for human watchable video.

- The original video may be temporally down-sampled as preprocessing prior to encoding. A frame rate up-sampling method may be used as postprocessing subsequent to decoding, if machine analysis at the original frame rate is desired.

- A filter may be used to preprocess the input to the conventional encoder. The filter may be a machine learning based filter, such as a convolutional neural network.

It is to be understood that, in the context of video coding for machines, the terms "machine vision", "machine vision task", "machine task", "machine analysis", "machine analysis task", "computer vision", "computer vision task", "task network" and "task" may be used interchangeably. Also, it is to be understood that, in the context of video coding for machines, the terms "machine consumption" and "machine analysis" may be used interchangeably.

Background on neural network based filtering

A neural network may be used for filtering or processing input data. We may refer to such a neural network as a neural network based filter, or simply as a NN filter. A NN filter may comprise one or more neural networks, and/or one or more components that may not be categorized as neural networks (i.e. may be categorized as traditional or legacy components that are not trained based on data using machine learning techniques). The purpose of a NN filter may comprise (but may not be limited to) visual enhancement, colorization, upsampling, super-resolution, inpainting, temporal extrapolation, generating content, or the like.

In some video codecs, a neural network may be used as filter in the encoding and decoding loop (also referred to simply as coding loop), and it may be referred to as a neural network loop filter, or a neural network in-loop filter. The NN loop filter may replace all other loop filters of an existing video codec, or may represent an additional loop filter with respect to the already present loop filters in an existing video codec.

A neural network filter may be used as a post-processing filter for a codec, e.g., may be applied to an output of an image or video decoder in order to remove or reduce coding artifacts.

In one example, a codec is a modified VVC/H.266 compliant codec (e.g., a VVC/H.266 compliant codec that has been modified and thus it may not be compliant to the VVC/H.266) that comprises one or more NN loop filters. An input to the one or more NN loop filters may comprise at least a reconstructed block or frames (simply referred to as reconstruction) or data derived from a reconstructed block or frame (e.g., the output of a conventional loop filter). The reconstruction may be obtained based on predicting a block or frame (e.g., by means of intra-frame prediction or inter-frame prediction) and performing residual compensation. The one or more NN loop filters may enhance the quality of at least one of their input, so that a rate-distortion loss is decreased. The rate may indicate a bitrate (estimate or real) of the encoded video. The distortion may indicate a pixel fidelity distortion such as the following:

- Mean-squared error (MSE).

- Mean absolute error (MAE).

- Mean Average Precision (mAP) computed based on the output of a task NN (such as an object detection NN) when the input is the output of the post-processing NN.

- Other machine task-related metric, for tasks such as object tracking, video activity classification, video anomaly detection, etc.

The enhancement may result into a coding gain, which may be expressed for example in terms of BD-rate or BD-PSNR (peak signal-to-noise ratio).

A neural network filter may be used as a post-processing filter for a codec, e.g., may be applied to an output of an image or video decoder in order to remove or reduce coding artifacts. In one example, the NN filter may be used as a post-processing filter where the input comprises data that is output by or is derived from an output of a traditional decoder, such as a decoder that is compliant with the VVC/H.266 standard. In another example, the NN filter may be used as a post-processing filter where the input comprises data that is output by or is derived from an output of a decoder of an end-to-end learned decoder.

Input to a NN filter

Various input may be provided to a NN filter. In the case of filtering images, a filter may take as input at least one or more first images to be filtered and may output at least one or more second images, where the one or more second images are the filtered version of the one or more first images. In one example, the filter may take as input one image, and output one image. In another example, the filter may take as input more than one image, and output one image. In another example, the filter may take as input more than one image, and output more than one image.

It is to be understood that a filter may take as input also other data (also referred to as auxiliary data, or extra data) besides the data that is to be filtered, such as data that may aid the filter to perform a better filtering than if no auxiliary data was provided as input. In one example, the auxiliary data may comprise information about prediction data, and/or information about the picture type, and/or information about the slice type, and/or information about a Quantization Parameter (QP) used for encoding, and/or information about boundary strength, etc. In one example, the filter may take as input one image and other data associated to that image, such as information about the quantization parameter (QP) used for quantizing and/or dequantizing that image, and output one image.

Background information on overfitting a neural network filter

Features as described herein may generally relate to adaptation of a NN. A NN filter may be adapted at test time based at least on part of the data to be encoded and/or decoded and/or post-processed. Such operation may be referred to, for example, with one of the following terms, when their meaning is clear from the context: adaptation, content adaptation, overfitting, finetuning, optimization, specialization, and the like.

Although, for simplicity, the case of a NN filter is being considered herein, similar adaptation may be performed for other coding tools and/or post-processing tools that are based on neural network technology. For example, a neural network based intra-frame prediction, or a neural network based inter-frame prediction, etc.

The NN filter that results from the adaptation process may be referred to, for example, with one of the following terms: adapted filter, content-adapted filter, overfitted filter, finetuned filter, optimized filter, specialized filter, and the like.

At the encoder side, the adaptation process may start with an initial NN filter. In one example, the initial NN filter may be a pretrained NN filter that was pretrained during an offline stage on a sufficiently large dataset. In another example, the initial NN filter may be a randomly initialized NN filter.

In the adaptation, one or more parameters of the NN filter may be adapted. Examples of such parameters may include (but may not be limited to) the following: the bias terms of a convolutional neural network; multiplier parameters that multiply one or more tensors produced by the NN filter, such as one or more feature tensors that are output by respective one or more layers of the NN filter; parameters of the kernels of a convolutional neural network; parameters of an adapter layer; or one or more arrays or tensors that are used as input to respective one or more layers of the NN filter.

The adaptation may be performed by means of a training process, e.g., by minimizing a loss function until a stopping criterion is met. The data used for this training process may comprise one or more pictures or blocks of input to the NN filter and associated respective one or more pictures or blocks of ground-truth data. In one example where the filter is an in-loop filter, the input to the NN filter may be reconstruction data, after prediction and residual compensation; the ground-truth data may be the uncompressed data that is given as input to the encoder. In one example where the filter is a post-processing filter, the input to the NN filter may be decoded data (e.g., the output of a video decoder); the ground-truth data may be the uncompressed data that is given as input to the encoder.

The loss function used during the training process may comprise one or more distortion loss functions (also referred to as reconstruction loss functions) and zero or more rate loss functions. A rate loss function may measure, for example, the cost in terms of bitrate of signaling any adaptation signal, such as updates to the parameters of the NN filter. A distortion loss function may comprise one of MSE, MS-SSIM, Video Multimethod Assessment Fusion (VMAF), etc.

The adaptation signal may be derived or determined based on the adapted NN filter and on the original NN filter (i.e., the NN filter before the overfitting process). In one example, the adaptation signal comprises an update to one or more parameters of the NN filter. We may refer to such update also as weight update, or parameter update. Such update may be computed, for example, by subtracting the values of the adapted parameters (i.e., the parameters of the adapted NN filter) from the corresponding values of the original parameters (i.e., the parameters of the original NN filter). In another example, the adaptation signal may comprise the parameters (of the NN filter) that were adapted, also referred to as updated parameters, or adapted parameters, or adapted weights, or overfitted parameters, and the like.

In order to keep the size of the adaptation signal low, the adaptation signal may go through one or more compression steps, such as sparsification, quantization and lossless coding, etc. In one example, an encoder that compresses the adaptation signal into a bitstream that is compliant with a neural network compression standard, such as MPEG neural network coding (NNC), may be used.

The compressed adaptation signal may be signaled from encoder to decoder in or along a bitstream that represents encoded image or video data. In one example, the compressed adaptation signal may be signaled in an Adaptation Parameter Set (APS) syntax structure of a video coding bitstream. In another example, the compressed adaptation signal may be signaled in a Supplemental Enhancement Information (SEI) message of a video coding bitstream. Signaling may comprise also other information which is associated with the adaptation signal and that may be required for correctly parsing and/or decompressing and/or using the adaptation signal, such as any quantization parameters.

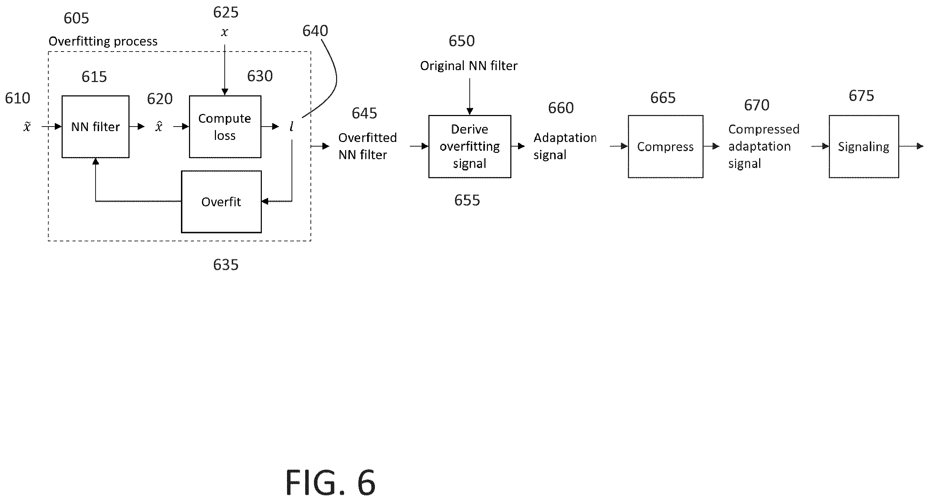

Referring now to FIG. 6, illustrated is an example of an overfitting process (605) at the encoder side. The overfitting process (605) may be performed at the encoder side based on a training process. Input (610) may be provided to a NN filter (615) to determine an output (620). Loss (640) may be computed (630) between ground truth (625) and the output (620). The loss (640) may be provided to determine overfitting (635), which may be provided to the NN filter (615).

The resulting overfitted filter (645) may then be used to derive an overfitting signal (655), or adaptation signal (660). The overfitting signal may be derived or determined based partially on the original NN filter (650). The adaptation signal (660) may be compressed (665) to determine a compressed adaptation signal (670) and then signaled (675) from the encoder to the decoder, in or along a bitstream that represents encoded data, such as an encoded image or video.

In the example of FIG. 6, $\bar{x}$ (610) represents an input to the NN filter, $\hat{x}$ (620) represents an output of the NN filter (615), x (625) represents a ground-truth data associated with $\hat{x}$ (610), "Compute loss" (630) may compute a training loss l (640) in order to overfit the NN filter, and "Overfit" (635) may use l (640) to overfit the NN filter (615). As a result of the overfitting process (605), an overfitted NN filter may be obtained (645), which may be used (655), together with the original NN filter (650), to derive an adaptation signal (660). The adaptation signal may be compressed (665) and signaled (675) to a decoder or receiver.

At the decoder or receiver side, the signaled compressed adaptation signal may be received and decompressed. The decompressed adaptation signal may then be used to update the NN filter. In one example, where the adaptation signal may comprise a weight update, where the weight update may comprise one or more updates to respective one or more parameters of the NN filter, the one or more updates may be added to the one or more parameters. In another example, where the adaptation signal may comprise one or more updated or adapted parameters, the one or more updated or adapted parameters may be used to replace respective one or more parameters of the NN filter.

Once the NN filter has been updated based on the adaptation signal, the updated NN filter may be used for its purpose. For example, for filtering an input picture or an input block.

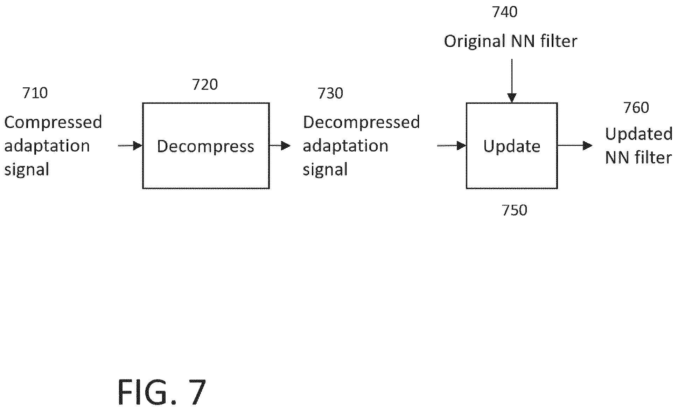

Referring now to FIG. 7, illustrated is an example of use of an adaptation signal for overfitting at the decoder or receiver side. A compressed adaptation signal (710) may be decompressed (720) to derive a decompressed adaptation signal (730). At the decoder side, the overfitting signal (730), or a signal derived or determined from the overfitting signal, may be used to update (750) the NN filter (740). The updated NN filter (760) may then be used to filter one or more pictures, or one or more blocks.

In the examples of FIGs. 6-7, the NN filter that is obtained from the overfitting process at encoder side may be different from the NN filter that is obtained from the updating process at decoder side. For example, one reason may be that the adaptation signal may be compressed in a lossy way. Thus, the former NN filter may be referred to as overfitted filter or adapted filter (or other similar terms, see above), and the latter NN filter may be referred to as updated filter.

In the present disclosure, the terms frame, picture and image may be used interchangeably. For example, the input and output to an end-to-end learned codec may be pictures. The input and output of a NN filter may be pictures. It is to be understood that also the term block, when it means a portion of a picture, may be simply referred to as frame or picture or image. In other words, at least some of the embodiments herein, even when described as applied to a picture, may be applicable also to a block, e.g., to a portion of a picture.

Example embodiment of the present disclosure may consider image and video as the data types. However, this is not limiting; the example embodiments may be extended to other types of data, such as audio.

For simplicity, image and video data may be collectively referred to as visual data, and it is to be understood that visual data may refer to either image data or video data or both.

In the present disclosure, the terms signal, data, tensor and information may be used interchangeably to indicate an input or an output.

In the present disclosure, an end-to-end learned codec may be referred to also as E2E learned codec, or learned codec, or E2E codec.

In the present disclosure, neural network layers may be simply referred to as layers, or as a set of layers.

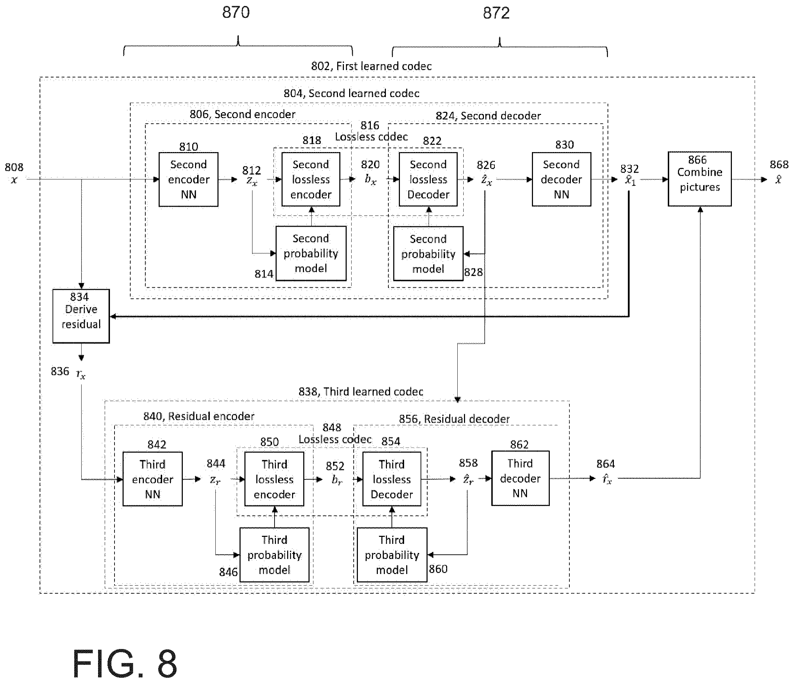

Referring now to FIG. 8, illustrated is an example of an end-to-end learned codec according to an example embodiment of the present disclosure. Note that, for simplicity, quantization and dequantization operations are not illustrated. Quantization may be illustratively considered to be part of a lossless encoder (such as the second lossless encoder (818) or the third lossless encoder (850), and dequantization or inverse quantization may be illustratively considered to be part of a lossless decoder (such as the second lossless decoder (822) or the third lossless decoder (854)).

In an example embodiment, a first learned codec (802) may comprise at least a second learned codec (804) and a third learned codec (838). The second learned codec (804) may comprise a second encoder (806) and a second decoder (824). The third learned codec (838) may comprise a third/residual encoder (840) and a third/residual decoder (856). A first encoder (870) of the first learned codec (802) may comprise the second encoder (806) and the third encoder (840). Optionally, the first encoder (870) may also comprise a module (834) for deriving a residual (836). A first decoder (872) of the first learned codec (802) may comprise the second decoder (824) and the third decoder (856). Optionally, the first decoder (872) may comprise a module (866) for combining pictures.

The third learned codec (838) may be referred to as a residual codec. The third encoder (840) may be referred to as a residual encoder. The third decoder (856) may be referred to as a residual decoder.

In the present disclosure, the terms "residual", "difference (value)", "adjustment (value)", and "error (value)" may be used interchangeably.

An input to the first encoder (870) may comprise a data item to be encoded (808), such as a picture to be encoded, and may be referred to as an input data item. An output of the first encoder (870) may comprise a first bitstream, where the first bitstream may comprise a second bitstream (820) that is output by the second encoder (806) and a third bitstream (852) that is output by the third encoder (840). The first bitstream may represent an encoded data item, such as an encoded picture, e.g., an encoded or compressed version of the input data item. An input to the first decoder (872) may comprise the first bitstream. An input to the second decoder (824) may comprise the second bitstream (820). An input to the third decoder (856) may comprise the third bitstream (852). An output of the first decoder (872) may comprise a decoded data item (868), such as a decoded picture, e.g., a decoded or decompressed version of the encoded data item.

The second encoder (806) may comprise a second encoder neural network (810), a second quantization operation, a second probability model (814), and a second lossless encoder (818). The second decoder (824) may comprise a second lossless decoder (822), a second dequantization operation, a probability model (828) that may be the same or substantially the same as the second probability model (814), and a second decoder neural network (830).

An input to the second encoder NN (810) may comprise the data item to be encoded (808), such as a picture, or data derived from the data item to be encoded. An output of the second encoder NN (810) may comprise a second latent tensor (812) that may be quantized and lossless coded (818), thereby obtaining the second bitstream (820). The quantized and lossless coded second latent tensor, or the second bitstream (820), may be input to the second decoder (e.g., the decoder of the second learned codec (824)) (822). The quantized and lossless coded second latent tensor, or the second bitstream (820), may be lossless decoded and dequantized, thereby obtaining a lossless decoded and dequantized second latent tensor (826). An input to the second decoder NN (830) may be the lossless decoded and dequantized second latent tensor (826). An output of the second decoder NN (830) may comprise a first reconstructed data item (832), or first decoded data item, which may represent an intermediate, initial, or non-final reconstruction of the encoded data item. The first reconstructed data item may comprise a prediction of decoded data. However, it is to be noted that, in some cases, the first reconstructed data item may represent a final reconstruction (868) of the encoded data item (e.g., when the third learned codec is not used).

The third encoder (840) may comprise a third encoder neural network (842), a third quantization operation, a third lossless encoder (850), and a third probability model (846). The third decoder (856) may comprise a third lossless decoder (854), a third dequantization operation, a probability model (860) that may be the same or substantially the same as the third probability model (846), and a third decoder neural network (862).

A residual signal (836) or residual information or residual may be derived or determined based on the input data item (808), or data derived from the input data item (such as features extracted from the input data item), and the first reconstructed data item (832), or data from which the first reconstructed data item is derived (such as features from which the first reconstructed data item is derived or determined), using a derivation operation (834).

In an example embodiment, the residual information (836) may be input to the third encoder (840) and to the third encoder NN (842). An output of the third encoder NN (842) may comprise a third latent tensor (844) that may be quantized and lossless coded (850), thereby obtaining the third bitstream (852). The quantized and lossless coded third latent tensor, or the third bitstream (852), may be input to the third decoder (e.g., the decoder of the third learned codec (838)) (854). The quantized and lossless coded third latent tensor, or the third bitstream (852), may be lossless decoded and dequantized, thereby obtaining a lossless decoded and dequantized third latent tensor (858). An input to the third decoder NN (862) may comprise the lossless decoded and dequantized third latent tensor (858), or data derived from the lossless decoded and dequantized third latent tensor. An output of the third decoder NN (862) may comprise a reconstructed residual signal (also referred to as reconstructed residual information, decoded residual signal or decoded residual information) (864). The reconstructed residual signal (864) may be combined with the first reconstructed data item (832), or with data from which the first reconstructed data item may be derived or determined, using a first combination operation (866), to obtain the decoded data item (868) or data from which the decoded data item may be derived or determined. An input to the third learned codec (838) may comprise the lossless decoded and dequantized second latent tensor (826), or a signal derived or determined from the lossless decoded and dequantized second latent tensor, and may be referred to as auxiliary input. In another example embodiment, the auxiliary input may be derived or determined from the first reconstructed data item (832). In another example embodiment, the auxiliary input may be derived or determined from an output of the second decoder (824).

In an example embodiment, the output of the first combination operation (866) may be input to a process, such as one or more neural network layers and/or other operations, and an output of the process may comprise the decoded data item (868).

In FIG. 8, x represents the input data item (808), $z_x$ represents the second latent tensor (812), $b_x$ represents the second bitstream (820), $\hat{z}_x$ represents the lossless decoded and dequantized second latent tensor (826), $\hat{x}_1$ represents the first reconstructed data item (832), $r_x$ represents the residual signal that is derived or determined based on the input data item and the first reconstructed data item (836), $z_r$ represents the third latent tensor (844), $b_r$ represents the third bitstream (852), $\hat{z}_r$ represents the lossless decoded and dequantized third latent tensor (858), $\hat{r}_x$ represents the reconstructed residual signal (864), and $\hat{x}$ represents the decoded data item (868).

In an example embodiment, the derivation operation (834) and/or the first combination operation (866) may be comprised in the first learned codec (802). For example, the derivation operation (834) may be comprised in the first encoder (870), and the first combination operation (866) may be comprised in the first decoder (872).

In an example embodiment, the first learned codec (802) may comprise an image codec. In another example embodiment, the first learned codec (802) may be an intra-frame codec that may be used as part of a video codec for coding intra frames. The video codec may comprise another module or codec that codes inter frames, where the another module or codec may be one of a learned codec or a non-learned codec, or a combination of a learned codec and a non-learned codec.

In an example embodiment, the third learned codec (838) may not be used for one or more data subunits of a data unit to be encoded and/or decoded. For example, where a data unit may be a video, the third learned codec may be used for zero or more first pictures comprised in the video, and may not be used for zero or more second pictures comprised in the video.

It may be noted that, even when referring to a first encoder (870) and first decoder (872), or second encoder (806) and second decoder (824), or third encoder (840) and third decoder (856), an encoder may comprise some or all of the operations or processes or modules of the respective decoder. For example, the first encoder may comprise the first decoder, and/or the second encoder may comprise the second decoder, and/or the third encoder may comprise the third decoder, even if figures in the present disclosure illustrate the encoders and the decoders as separate entities.

In an example embodiment, the residual information (836) may be in the space or domain of the input data item (808), for example in picture or image space, because it may be derived or determined directly from the input data item and the first reconstructed data item (832). Thus, it may represent or may be referred to as image residual information, or image-domain residual information.

The third latent tensor (844) may represent or may be referred to as a residual information in latent space/domain, such as an image residual information in latent space.

It may be noted that one or more of the following operations may be part of the first learned codec (802) but may or may not be part of the second (804) and/or third learned codec (838): the derivation (834) of the residual information (836); the first combination operation (866); and/or other operations that use, as an input, the output of the second learned codec (804) or the third learned codec (838) (i.e., other operations that involve signals or data exchanged between the second and the third learned codecs).

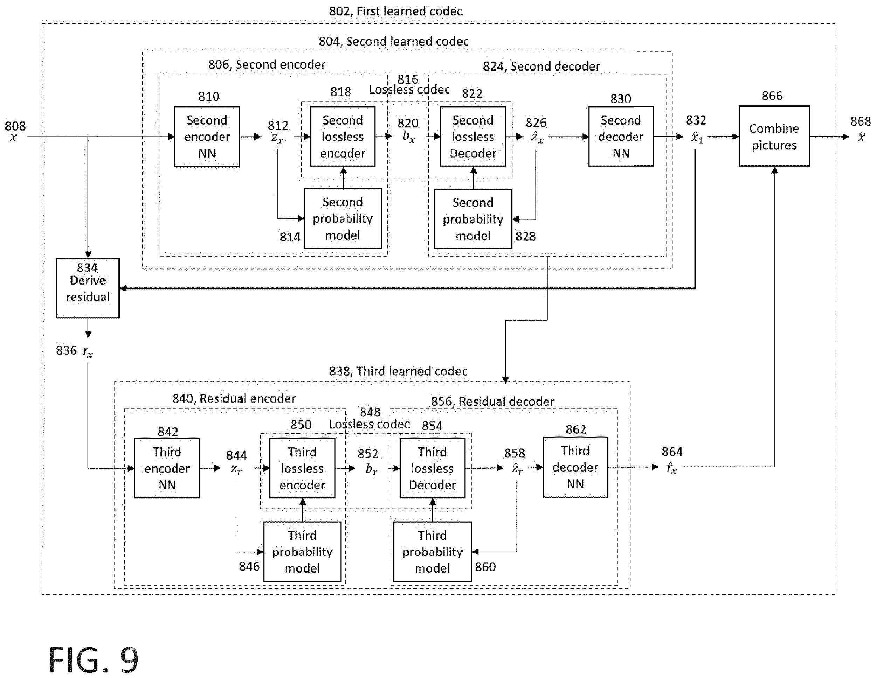

Referring now to FIG. 9, illustrated is an example of an end-to-end learned codec according to an example embodiment of the present disclosure. Features of FIG. 9 that are similar to FIG. 8 are referred to with the same reference numbers, and duplicative description may be omitted. In an example embodiment, the auxiliary input to the third learned codec (838) may be, or may be derived or determined from, an output of the second decoder (824).

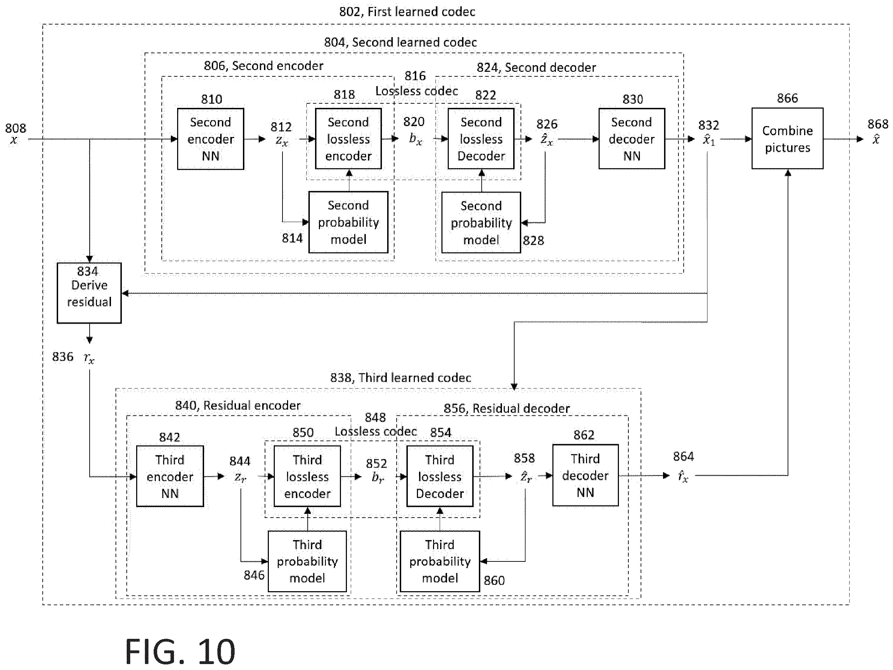

Referring now to FIG. 10, illustrated is an example of an end-to-end learned codec according to an example embodiment of the present disclosure. Features of FIG. 10 that are similar to FIG. 8 are referred to with the same reference numbers, and duplicative description may be omitted. In an example embodiment, the auxiliary input to the third learned codec (838) may be, or may be derived or determined from, the first reconstructed data item (832).

In an example embodiment, an output of the third decoder (856), or an output of the third decoder NN (862), may comprise the decoded data item (868) or data from which the decoded data item may be derived or determined.

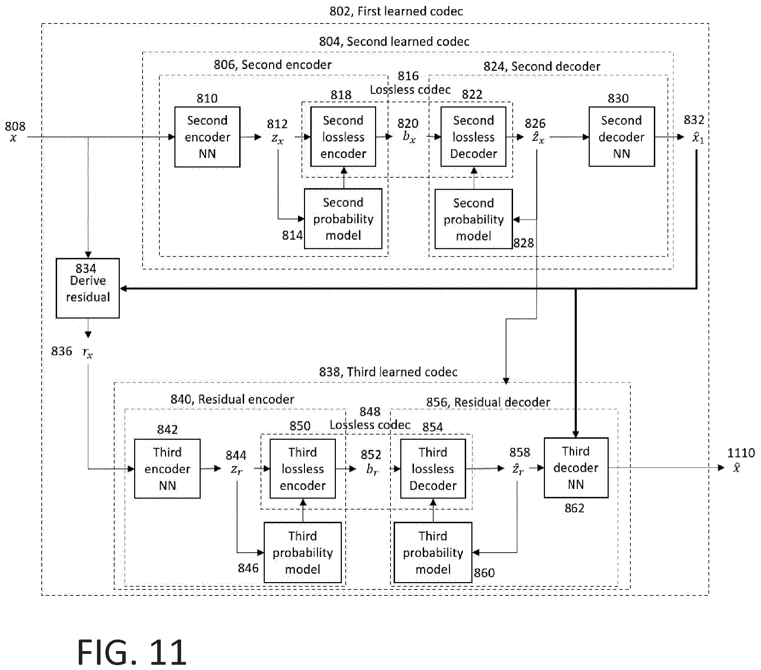

Referring now to FIG. 11 illustrated is an example of an end-to-end learned codec according to an example embodiment of the present disclosure. Features of FIG. 11 that are similar to FIG. 8 are referred to with the same reference numbers, and duplicative description may be omitted. In an example embodiment, the first reconstructed data item (832) may be input to the third decoder NN (862) or the third decoder (856). An output of the third decoder NN (862) or an output of the third decoder (856) may comprise the decoded data item (1110).

In an example embodiment, the derivation operation used to derive the residual signal may comprise an element-wise subtraction. In another example embodiment, the derivation operation used to derive the residual signal may comprise a concatenation operation. For example, two tensors may be concatenated across the channel dimension. In another example embodiment, the derivation operation used to derive the residual signal may comprise one or more neural network layers, such as convolutional layers. Example embodiments of the present disclosure are not limited to any particular derivation operation (i.e., any suitable derivation operation for deriving a residual signal may be used).

In an example embodiment, the first combination operation may comprise an element-wise summation operation. In another example embodiment, the first combination operation may comprise a concatenation operation. For example, two tensors may be concatenated across the channel dimension. In another example embodiment, the derivation operation used to derive the residual signal may comprise one or more neural network layers, such as convolutional layers. Example embodiments of the present disclosure are not limited to any particular first combination operation (i.e., any suitable operation for performing the first combination operation may be used).

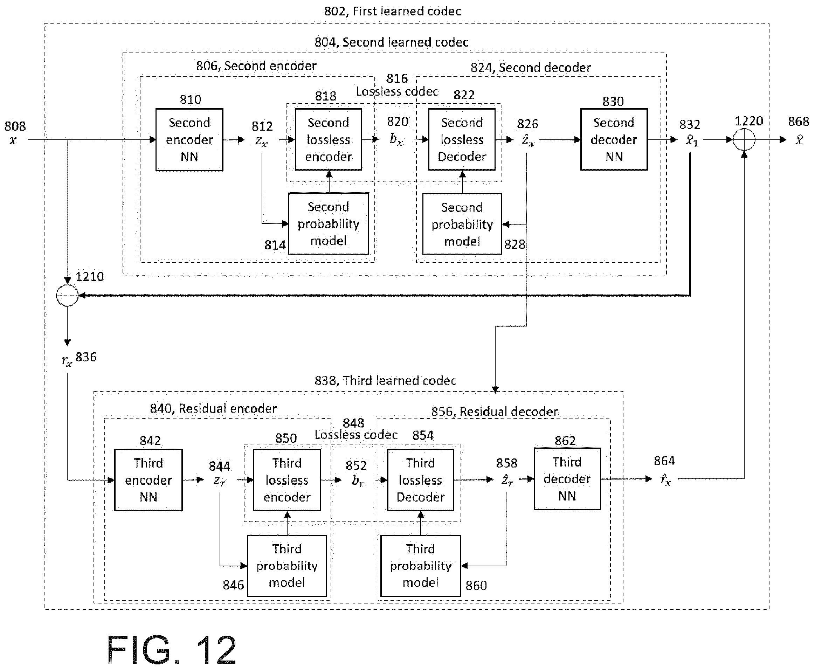

Referring now to FIG. 12, illustrated is an example of an end-to-end learned codec according to an example embodiment of the present disclosure. Features of FIG. 12 that are similar to FIG. 8 are referred to with the same reference numbers, and duplicative description may be omitted. In an example embodiment, the input data item (808) and the first reconstructed data item (832) may be subtracted (1210) to obtain the residual signal (836). In the example of FIG. 12, the first reconstructed data item (832) and the reconstructed residual information (864) may be combined by means of a summation operation (1220).

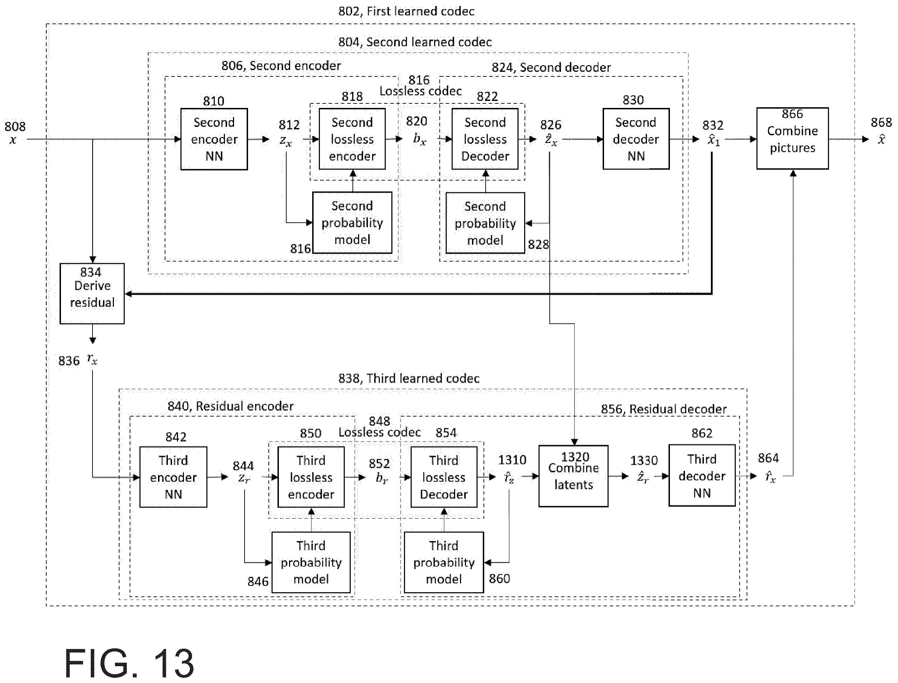

Referring now to FIG. 13, illustrated is an example of an end-to-end learned codec according to an example embodiment of the present disclosure. Features of FIG. 13 that are similar to FIG. 8 are referred to with the same reference numbers, and duplicative description may be omitted. In an example embodiment, the auxiliary input, or data derived from the auxiliary input, may be combined with the lossless decoded and dequantized third latent tensor (1310) using a second combination operation (1320) to obtain a combined latent tensor (1330) that may be input to the third decoder NN (862). For example, data may be derived from the auxiliary input via NN layers. In FIG. 13, the lossless decoded and dequantized third latent tensor (1310) is referred to as $\hat{r}_z$ (and not as $\hat{z}_r$ as in previous embodiments and examples), and the combined latent tensor is referred to as $\hat{z}_r$ (1330).

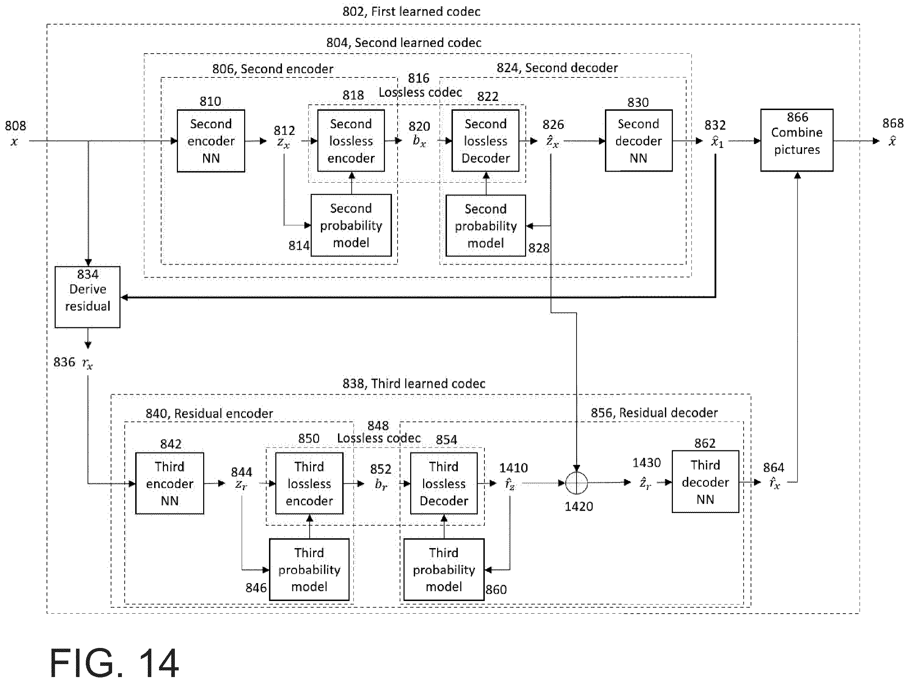

Referring now to FIG. 14, illustrated is an example of an end-to-end learned codec according to an example embodiment of the present disclosure. Features of FIG. 14 that are similar to FIG. 8 are referred to with the same reference numbers, and duplicative description may be omitted. In an example embodiment, the second combination operation, combining the lossless decoded and dequantized third latent tensor (1410) and the auxiliary input, may comprise a summation operation (1420), such as an element-wise summation operation to obtain a combined latent tensor (1430) that may be input to the third decoder NN (862). In another example embodiment, not illustrated in FIG. 14, the second combination operation may comprise a concatenation operation.

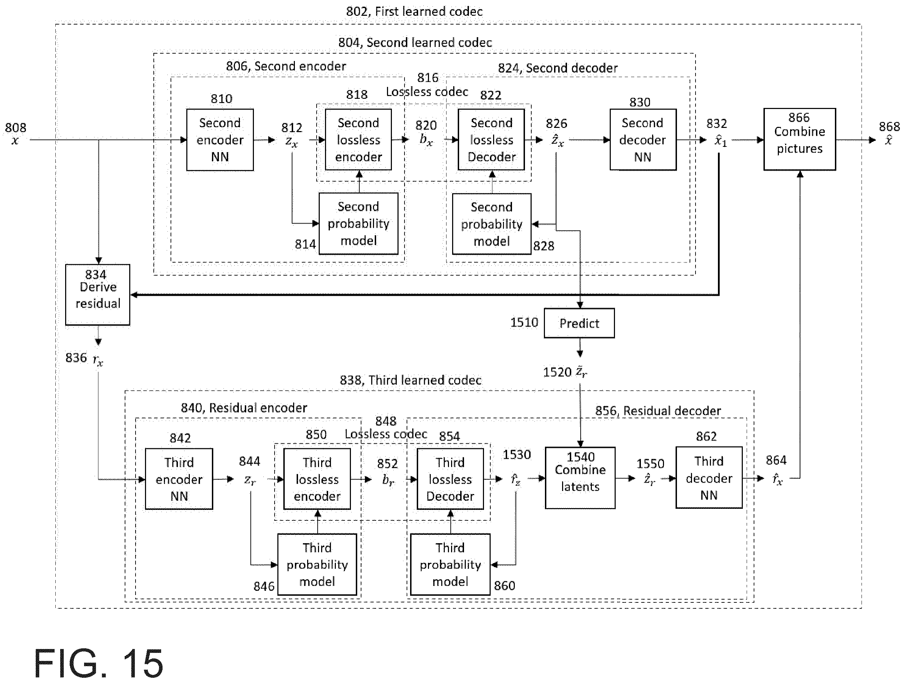

Referring now to FIG. 15, illustrated is an example of an end-to-end learned codec according to an example embodiment of the present disclosure. Features of FIG. 15 that are similar to FIG. 8 are referred to with the same reference numbers, and duplicative description may be omitted. In an example embodiment, the auxiliary input may comprise an output of a prediction operation (1510) or prediction process. The prediction operation may output a prediction signal (1520), which may represent a prediction of an input to the third decoder NN (862). The lossless decoded and dequantized third latent tensor (1530) may represent or may be referred to as a prediction-residual, e.g., an error with respect to the prediction signal. Additionally or alternatively, the lossless decoded and dequantized third latent tensor (1530) may represent or may be referred to as an adjustment tensor or as a prediction error. The prediction signal (1520) and the prediction-residual (1530) may be combined by means of a second combination operation (1540). In an example embodiment, the prediction operation (1510) or prediction process may be comprised in the first learned codec (802). In particular, the prediction operation or prediction process may be comprised in the first decoder (872). In an example embodiment, the prediction operation (1510) or prediction process may be comprised in the second learned codec (804) (e.g., in the second decoder (824)) or in the third learned codec (838) (e.g., in the third decoder (856)), or may not be comprised in either of the second learned codec (804) or the third learned codec (838).

In the example of FIG. 15, the lossless decoded and dequantized second latent tensor (826), $\hat{z}_x$, may be input to the prediction operation "Predict" (1510). The output of the prediction operation may be the prediction signal $\hat{z}_r$ (1520), which may be combined (1540) with the lossless decoded and dequantized third latent tensor $\hat{z}_r$

(1530) to obtain an input $\hat{z}_r$ (1550) to the third decoder NN (862). For example, the combination may be performed via NN layers.

In an example embodiment, an input to the prediction operation (1510) may comprise one or more of (but may not be limited to) the following: the lossless decoded and dequantized second latent tensor (826) or data derived from the lossless decoded and dequantized latent tensor; a portion of the lossless decoded and dequantized second latent tensor (826) or data derived from a portion of the lossless decoded and dequantized second latent tensor; the first reconstructed data item (832) or data derived from the first reconstructed data item (832); a portion of the first reconstructed data item (832) or data derived from a portion of the first reconstructed data item (832).

In an example embodiment, the lossless decoded and dequantized third latent tensor (1530) may represent a prediction-residual of the residual information in latent space.

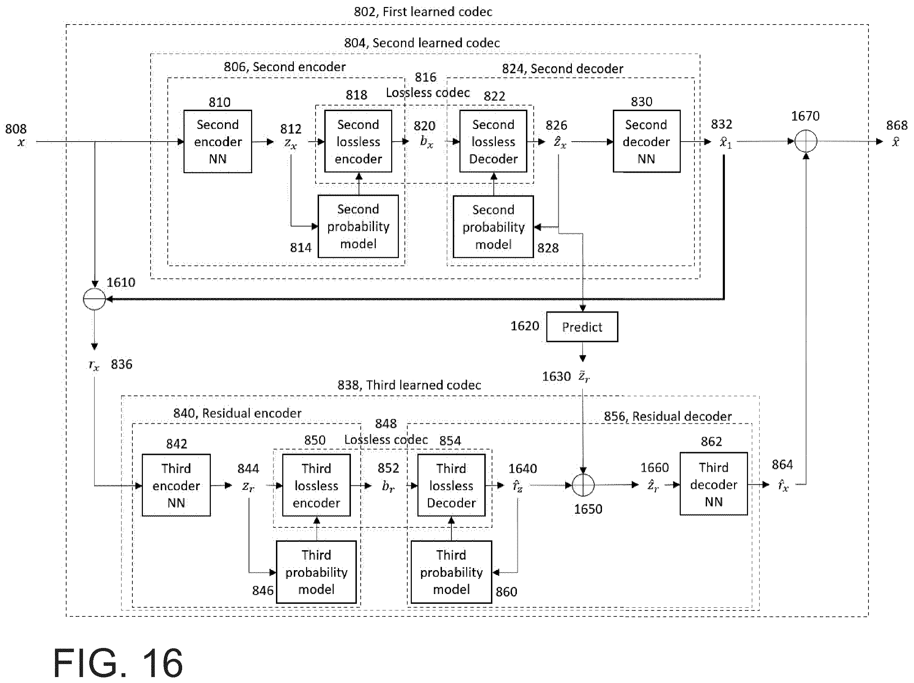

Referring now to FIG. 16, illustrated is an example of an end-to-end learned codec according to an example embodiment of the present disclosure. Features of FIG. 16 that are similar to FIG. 8 are referred to with the same reference numbers, and duplicative description may be omitted. In an example embodiment, various example embodiments of the present disclosure may be combined together. In the example of FIG. 16, the derivation operation for deriving the residual signal may be a subtraction operation (1610). The first combination operation for obtaining the decoded data item (868) may be a summation operation (1670). The auxiliary input (1630) output by a prediction process (1620) may be added to the lossless decoded and dequantized latent tensor (1640) by means of a summation operation (1650) to obtain an input (1660) to the third decoder NN (862).

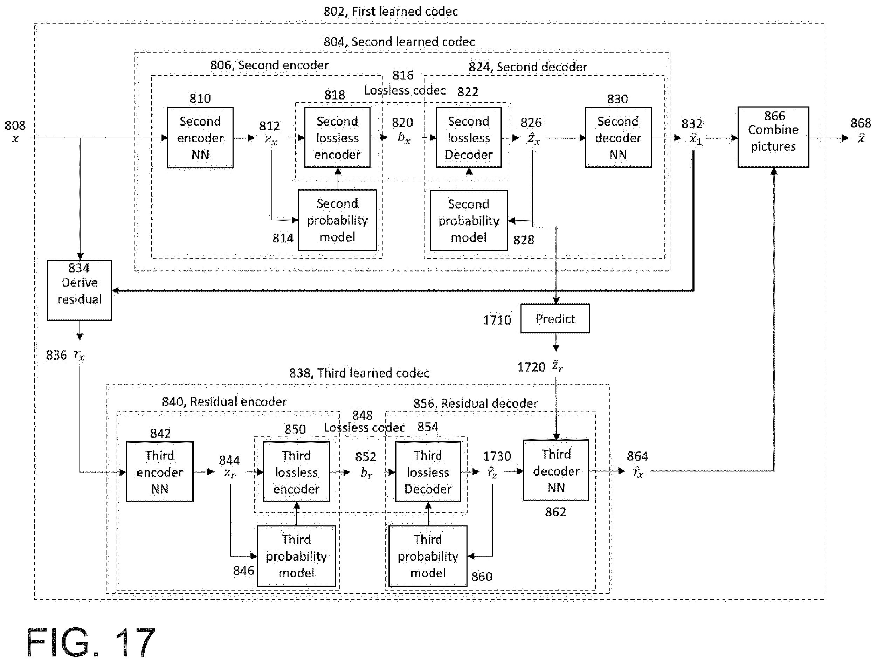

Referring now to FIG. 17, illustrated is an example of an end-to-end learned codec according to an example embodiment of the present disclosure. Features of FIG. 17 that are similar to FIG. 8 are referred to with the same reference numbers, and duplicative description may be omitted. In an example embodiment, a prediction signal (1720) may be obtained from a prediction operation (1710), and the lossless decoded and dequantized third latent tensor (1730) may be input to the third decoder NN (862). The lossless decoded and dequantized second latent tensor (826) may be provided as input to the prediction operation (1710) to obtain the prediction signal (1720). In an example embodiment, the prediction signal (1720), or data derived from the prediction signal, may be an auxiliary input to the third learned codec (838).

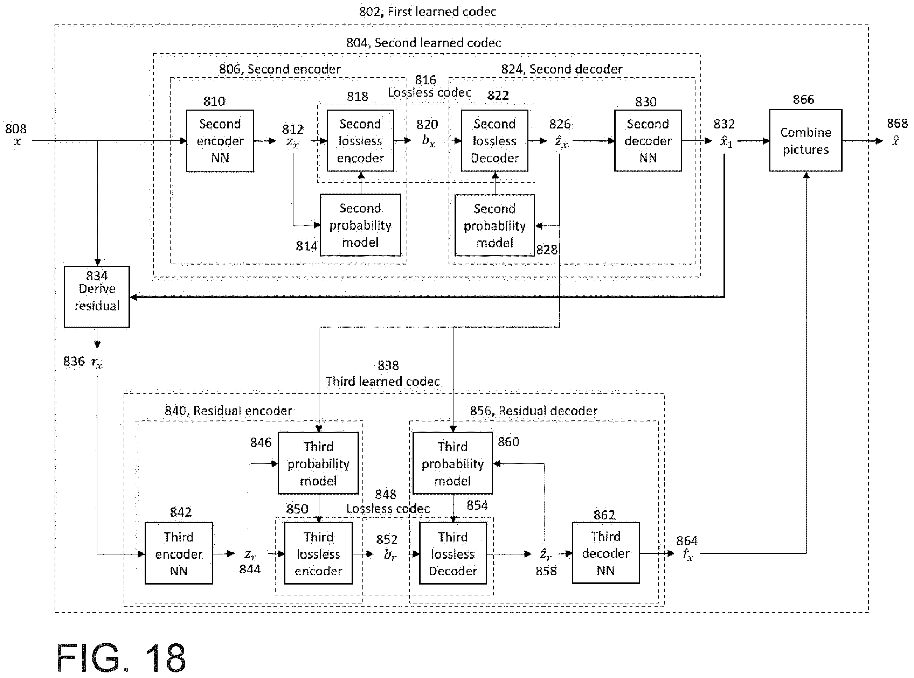

Referring now to FIG. 18, illustrated is an example of an end-to-end learned codec according to an example embodiment of the present disclosure. Features of FIG. 18 that are similar to FIG. 8 are referred to with the same reference numbers, and duplicative description may be omitted. In an example embodiment, the auxiliary input, or data derived from the auxiliary input, may be an input to the third probability model (846) of the residual encoder (840) and/or the third probability model (860) of the residual decoder (856).

In an example embodiment, an output of the second probability model(s) or data derived from the output of the second probability model(s) may be an input to the third probability model(s). The output of the second probability model(s) which is input to the third probability model(s) may consist of or include the probability distribution parameters for the elements in the second latent tensor or in the third latent tensor, for example, the mean and variance of a Gaussian distribution. In an example embodiment, different versions of the auxiliary input, or different information derived or determined from the auxiliary input, may be provided to different parts of the third learned codec, for example the third probability model of the third encoder and the third probability model of the third decoder.

In an example embodiment, the auxiliary input, or data derived from the auxiliary input, may be an input to the third encoder NN. In another example embodiment, the auxiliary input, or data derived from the auxiliary input, may be an input to the third decoder NN.

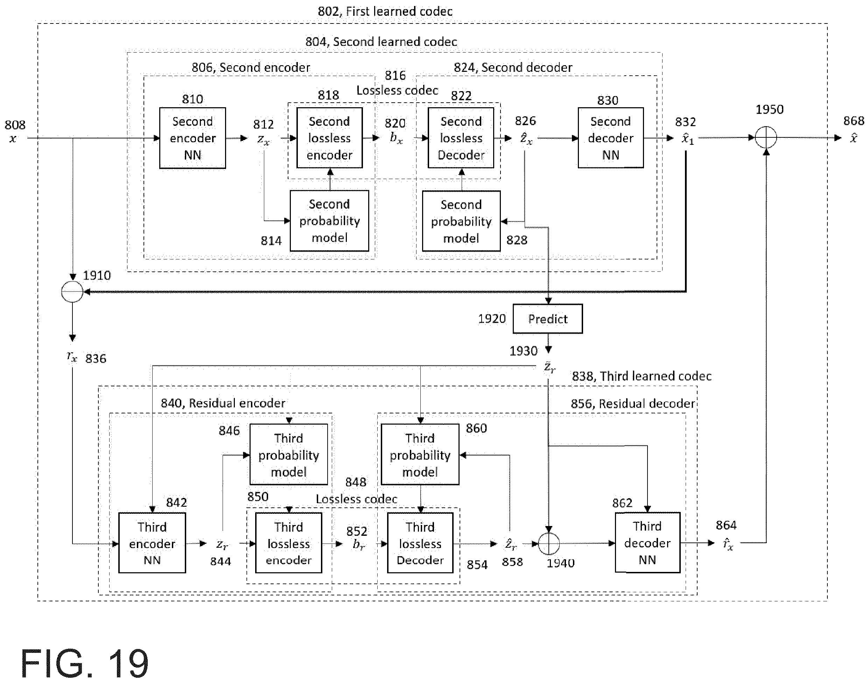

Referring now to FIG. 19, illustrated is an example of an end-to-end learned codec according to an example embodiment of the present disclosure. Features of FIG. 19 that are similar to FIG. 8 are referred to with the same reference numbers, and duplicative description may be omitted. In an example embodiment, at least some of the example embodiments described in the present disclosure may be combined. In the example of FIG. 19, the residual (836) may be determined via subtraction (1910) of the input data item (808) and the first reconstructed data item (832). The auxiliary input (1930) may be output from a prediction process (1920) and may be input to one or more of the following: the third encoder NN (842), the third probability model (846 and/or 860), and/or the third decoder NN (862). Also, in this example, the auxiliary input (1930) may be added (1940) to the lossless decoded and dequantized third latent tensor (858). The decoded data item (868) may be determined via combination (1950) of the first reconstructed data item (832) and the reconstructed residual signal (864). In an example embodiment, different versions of the auxiliary input, or different information derived or determined based on the auxiliary input, may be provided to different parts of the third learned codec. For example, there may be a different prediction process (1920) applied to the lossless decoded and dequantized second latent tensor (826) for each of, or for a subset of, the different parts of the third learned codec to which auxiliary input is provided. Additionally or alternatively, the lossless decoded and dequantized second latent tensor (826) may be provided as auxiliary input to some portions of the third codec, while a prediction signal (1930) based on the lossless decoded and dequantized second latent tensor (826) may be input to other portions of the third learned codec.

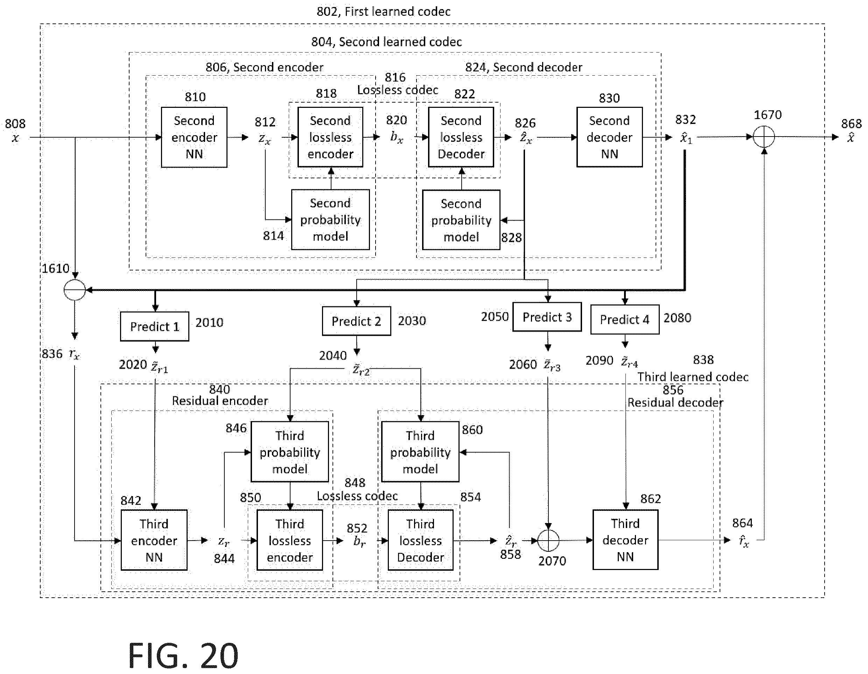

In an example embodiment, one or more first auxiliary inputs may be derived or determined from the lossless decoded and dequantized second latent tensor and one or more second auxiliary inputs may be derived or determined from the first reconstructed data item. Referring now to FIG. 20, illustrated is an example of an end-to-end learned codec according to an example embodiment of the present disclosure. Features of FIG. 20 that are similar to FIG. 16 are referred to with the same reference numbers, and duplicative description may be omitted. In an example embodiment, the first reconstructed data item (832) may be input to a first prediction operation "Predict 1" (2010) and a fourth prediction operation "Predict 4" (2080), obtaining a first auxiliary input (2020) and a fourth auxiliary input (2090), respectively. The lossless decoded and dequantized second latent tensor (826) may be input to a second prediction operation "Predict 2" (2030) and a third prediction operation "Predict 3" (2050), obtaining a second auxiliary input (2040) and a third auxiliary input (2060), respectively. The first auxiliary input (2020) may be used as an input to the third encoder NN (842). The second auxiliary input (2040) may be used as an input to the third probability model(s) (846, 860), and the third auxiliary input (2060) may be added to or combined with (2070) the lossless decoded and dequantized third latent tensor (858). The fourth auxiliary input (2090) may be used as an input to the third decoder NN (862).

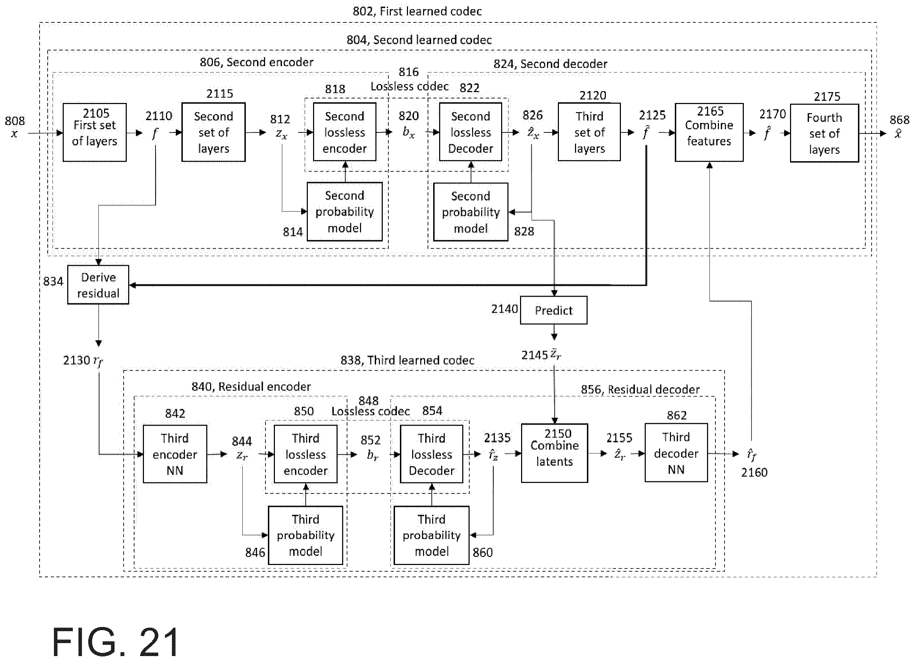

Referring now to FIG. 21, illustrated is an example of an end-to-end learned codec according to an example embodiment of the present disclosure. Features of FIG. 21 that are similar to FIG. 8 are referred to with the same reference numbers, and duplicative description may be omitted. In an example embodiment, the second encoder NN or the second encoder (806) may comprise a first set of neural network layers (also referred to as first set of layers) (2105) and a second set of neural network layers (also referred to as second set of layers) (2115), and the second decoder NN or the second decoder (824) may comprise a third set of neural network layers (also referred to as third set of layers) (2120) and a fourth set of neural network layers (also referred to as fourth set of layers) (2175). A first set of features (2110) may be determined based on the input data item (808) by means of the first set of layers (2105). The first set of features (2110) may be input to the second set of layers (2115). An output of the second set of layers (2115) may comprise the second latent tensor (812). The lossless decoded and decompressed second latent tensor (826) may be input to the third set of layers (2120). A second set of features (2125) may be determined based on the lossless decoded and decompressed second latent tensor (826) by means of the third set of layers (2120). The residual signal (2130) may be determined or derived based on the first set of features (2110) and the second set of features (2125) by means of the derivation operation (834). The obtained residual (2130) may represent or be referred to as a residual in the feature domain, or as feature-domain residual. The residual (2130) may be input to the third encoder (840). An auxiliary input may be determined and provided to the third learned codec (838), for example in one or more of the ways described in previous embodiments. As illustrated in FIG. 21, a prediction signal (2145) predicted using, or that is output by, a prediction operation (2140) may be used as the auxiliary input, which may be provided for combination (2150) with the lossless decoded and dequantized third latent tensor (2135), or may be provided as an input to other parts of the third codec. The reconstructed residual (e.g., an output of the third decoder) (2160) may represent or be referred to as a reconstructed residual in the feature domain. The reconstructed residual (2160) may be combined with the second set of features (2125) by means of a third combination operation (2165), to obtain a third set of features (2170). The third set of features (2170) may be input to the fourth set of layers (2175). An output of the fourth set of layers (2175) may comprise the decoded data item (868). The third combination operation may comprise a summation operation, or a concatenation operation, etc.

In the example of FIG. 21, $f$ represents the first set of features (2110), $r_f$ represents the residual in feature domain (2130), $\hat{r}_f$ represents the reconstructed residual in feature domain (2160), $\bar{f}$ represents the second set of features (2125), and $f$ represents the third set of features (2170). The first combination operation (2165) is illustrated as a "Combine features" block. Other blocks or signals (inputs or outputs) may have similar meaning as in previous example embodiments.

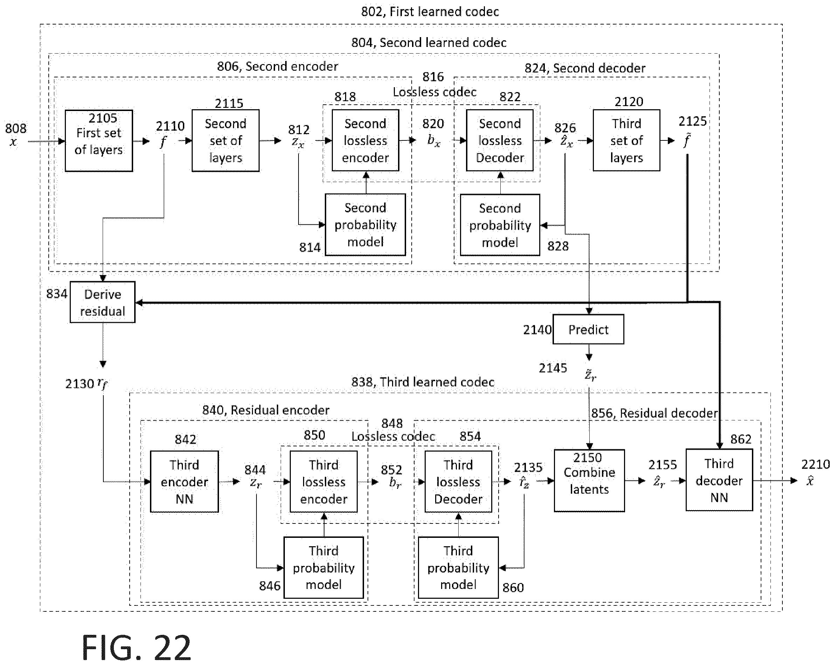

Referring now to FIG. 22, illustrated is an example of an end-to-end learned codec according to an example embodiment of the present disclosure. Features of FIG. 22 that are similar to FIG. 21 are referred to with the same reference numbers, and duplicative description may be omitted. In an example embodiment, the second set of features (2125), or data derived from the second set of features, may be input to the third decoder NN (862), and an output of the third decoder NN (862), or data derived from an output of the third decoder NN, may comprise the decoded data item (2210). Thus, a third combination operation and a fourth set of layers, as illustrated in FIG. 21, may not be present in the second decoder (824).

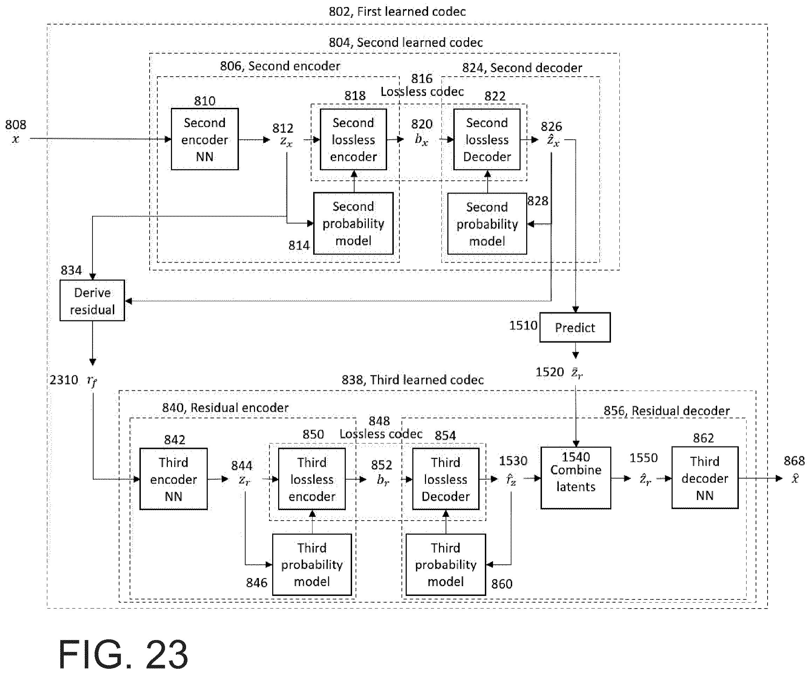

Referring now to FIG. 23, illustrated is an example of an end-to-end learned codec according to an example embodiment of the present disclosure. Features of FIG. 23 that are similar to FIG. 15 are referred to with the same reference numbers, and duplicative description may be omitted. In an example embodiment, a residual (2310) may be computed based on the second latent tensor (812) and the lossless decoded and dequantized second latent tensor (826) by using the derivation operation (834). The lossless decoded and dequantized second latent tensor (826) may be input to a prediction operation (1510). A prediction signal (1520) may be output by the prediction operation (1510). The prediction signal (1520) may represent an auxiliary input to the third decoder (856). The auxiliary input may be combined, by using a combination operation (1540), with the lossless decoded and dequantized third latent tensor (1530). An output (1550) of the combination operation (1540) may be input to the third decoder NN (862). An output of the third decoder NN (862) may represent the decoded data item (868). Thus, compared to the example embodiment illustrated in FIG. 15, the second decoder (824) may not comprise a second decoder NN.

In an example embodiment, the second decoder NN may be comprised in the second encoder (reminder: an encoder may comprise some or all processes of its respective decoder) but not in the second decoder.

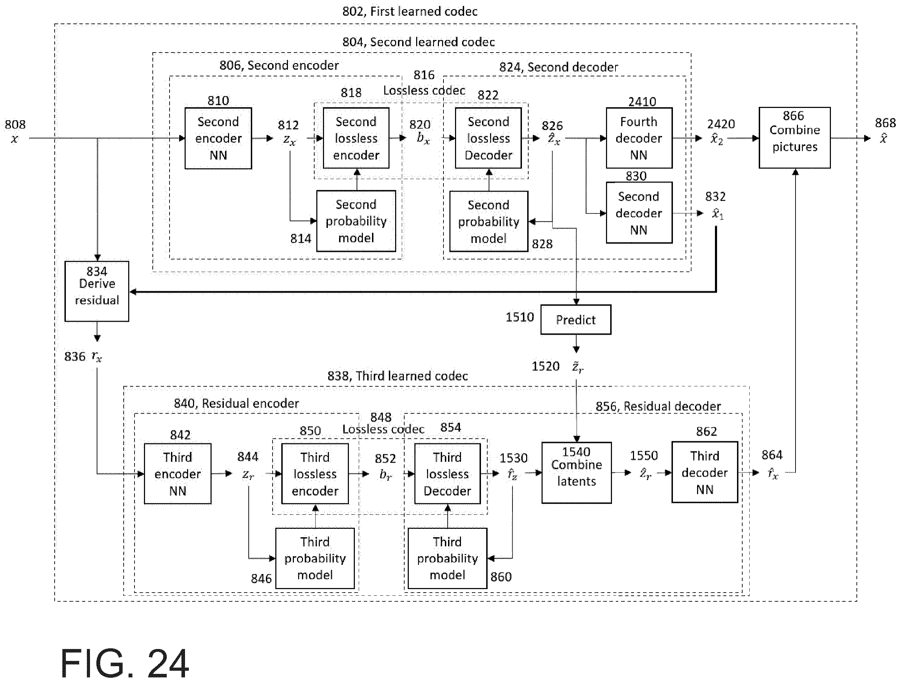

Referring now to FIG. 24, illustrated is an example of an end-to-end learned codec according to an example embodiment of the present disclosure. Features of FIG. 24 that are similar to FIG. 8 or FIG. 15 are referred to with the same reference numbers, and duplicative description may be omitted. In an example embodiment, a fourth decoder neural network (or fourth decoder NN) (2410) may take the lossless decoded and dequantized second latent tensor (826) as an input and output a second reconstructed data item (2420). The second reconstructed data item (2420) may be different from the first reconstructed data item (832) for example based, at least partially, on values of weights (e.g., trainable parameters) of the second decoder NN (830) and/or the fourth decoder NN (2410), and/or architectures of the second decoder NN (830) and/or the fourth decoder NN (2410). The second reconstructed data item (2420) may be combined with the reconstructed residual signal (864), by means of the first combination operation (866), to obtain the decoded data item (868), or data from which the decoded data item may be derived or determined. Thus, an output of the second decoder NN (832) may be used for deriving (834) the residual signal (836), and an output (2420) of the fourth decoder NN (2410) may be used to derive the decoded data item (868). In the example of FIG. 24, the lossless decoded and dequantized second latent tensor (826) may be used to predict (1510) or output a prediction signal (1520), which may be combined (1540) with a lossless decoded and dequantized third latent tensor (1530) to obtain an input (1550) to the third decoder NN (862).

In an example embodiment, one or more data sub-units of a data unit (or one or more portions of a data unit) may be encoded and/or decoded without using the third learned codec (and any associated operations, such as the derivation operation, the first combination operation, etc.), for example by using only the second learned codec. In an example where a data unit is a video, zero or more first pictures comprised in the video may be coded by using the whole first learned codec (comprising both the second learned codec and the third learned codec), and zero or more second pictures comprised in the video may be coded by using only the second learned codec (e.g., the third learned codec is not used) or, in other words, by using the first learned codec but excluding the third learned codec and, at least, the derivation operation and the first combination operation.

In an example embodiment, one or more first data sub-units of a data unit (or one or more first portions of a data unit) may be encoded and/or decoded without using one or more operations or layers of the second learned codec, and based on one or more second data sub-units of the data unit (or one or more second portions of the data unit) or based on decoded one or more second data sub-units of the data unit (or decoded one or more second portions of the data unit). A residual for a first portion of a data unit may be derived or determined based on the first portion of the data unit and on a reconstructed or decoded second portion of the data unit. The residual may be coded (e.g., encoded and decoded) by the third learned codec. Features extracted from the reconstructed or decoded second portion of the data unit, or features from which the reconstructed or decoded second portion of the data unit were extracted, may be used to derive an auxiliary input to the third decoder. The lossless decoded and dequantized third latent tensor may be combined with the auxiliary input by using a second combination operation. The output of the second combination operation may be input to the third decoder NN to obtain a reconstructed residual. The reconstructed residual and the reconstructed or decoded second portion of the data unit are combined by using a first combination operation, to obtain a reconstructed or decoded first portion of the data unit.

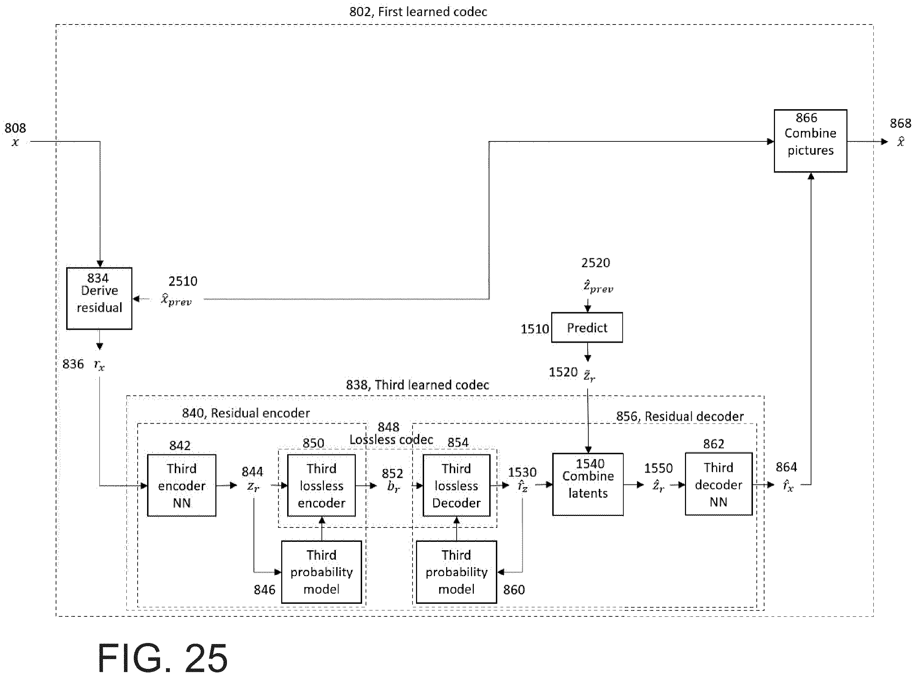

Referring now to FIG. 25, illustrated is an example of an end-to-end learned codec according to an example embodiment of the present disclosure. Features of FIG. 25 that are similar to FIG. 15 are referred to with the same reference numbers, and duplicative description may be omitted. In an example embodiment, a current picture (808) may be encoded and/or decoded without using one or more operations or layers of a second learned codec (e.g. without any of the operations or layers of a second learned codec), and based on previously decoded data, such as a previously-decoded picture ($\hat{x}_{prev}$ in FIG. 25 (2510)). The previously-decoded picture (2510) may have been obtained as an output of the first decoder when the first codec (802) was used to code a previous picture. The previously-decoded picture (2510) may be obtained using one or more operations or layers of a second learned codec based on the previous picture, or may be retrieved from a memory. The current picture (808) and the previous picture may be comprised in a same video. A residual (836) for the current picture (808) (also referred to as current residual) may be derived or determined based on the current picture (808) and on a previously-decoded picture ($\hat{x}_{prev}$ in FIG. 25 (2510)). The residual (836) may be coded (i.e., encoded and decoded) by the third learned codec (838). Features extracted from the previously-decoded picture (2520), or features from which the previously-decoded picture were extracted, may be input to the prediction operation (1510) to obtain the prediction signal (1520). The features extracted from the previously-decoded picture (2520), or features from which the previously-decoded picture were extracted, may be obtained using one or more operations or layers of a second learned codec based on the previous picture, or may be retrieved from a memory. Alternatively, the features extracted from the previously-decoded picture (2520) may be obtained using one or more operations or layers that are part of the first learned codec (802) but that are not part of the second learned codec, or may be obtained using one or more operations or layers that are not part of the first learned codec (802). The prediction signal (1520) may be input to the third decoder (856). The lossless decoded and dequantized third latent tensor (1530) may be combined with the prediction signal (1520) by using a second combination operation (1540). The output of the second combination operation (1540) may be input to the third decoder NN (862) to obtain a reconstructed residual (864) for the current picture (also referred to as current reconstructed residual). The current reconstructed residual (864) and the previously-decoded picture (2510) may be combined by using a first combination operation (866) to obtain a current decoded picture (868).

In an example embodiment, one or more first data sub-units of a data unit (or one or more first portions of a data unit) may be encoded and/or decoded without using one or more operations or layers of the second learned codec, and based on features extracted from one or more second data sub-units of the data unit (or from one or more second portions of the data unit), or based on features extracted from decoded one or more second data sub-units of the data unit (or from decoded one or more second portions of the data unit). For example, a residual for a first portion of a data unit may be derived or determined based on a first set of features extracted from the first portion of the data unit using the first set of layers, and on a second set of features extracted based on a decoded second portion of the data unit. The residual may be encoded and decoded by using the third learned codec, where an output of the third decoder may comprise a reconstructed residual for the first portion of the data unit. A third set of features for the first portion of the data unit may be derived or determined based on the reconstructed residual for the first portion of the data unit, and on the second set of features extracted based on the decoded second portion of the data unit.

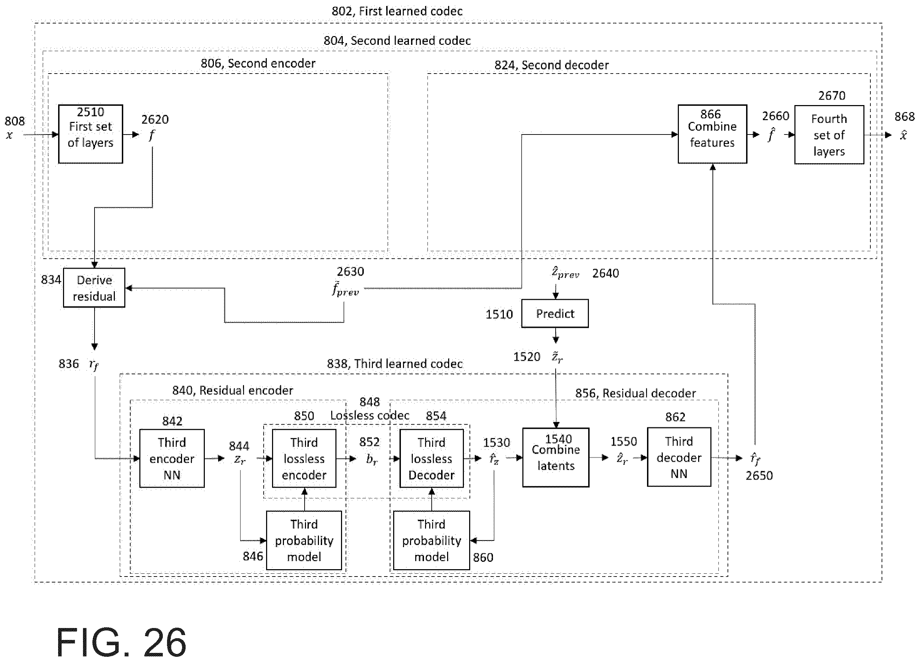

Referring now to FIG. 26, illustrated is an example of an end-to-end learned codec according to an example embodiment of the present disclosure. Features of FIG. 26 that are similar to FIG. 15 are referred to with the same reference numbers, and duplicative description may be omitted. In an example embodiment, where a data unit may be a video, a first picture (which may be referred to also as a previously-coded picture) comprised in the video may be coded by using the first learned codec (802), obtaining a previously-decoded picture as an output of the first decoder. A first previous set of features

(indicated as $\tilde{f}_{prev}$ in FIG. 26 (2630)) may comprise (but may not be limited to) one or more of the following: features extracted from the previously-decoded picture; features from which the previously-decoded picture was obtained; etc. A second previous set of features (indicated as $\hat{z}_{prev}$ in FIG. 26 (2640)) may comprise (but may not be limited to) one or more of the following: features extracted from the previously-decoded picture; features from which the previously-decoded picture was obtained; etc. In one example, the second previous set of features (2640) may be the same or substantially the same as the first previous set of features (2630). A second picture (808) (which may be referred to also as a current picture or currently-coded picture) comprised in the video may be coded by using a subset of the second learned codec (804), and based on the previously-decoded picture or the first (2630) and second (2640) previous sets of features. The first set of layers (2510) may be used to extract a current first set of features (2620) from the current picture (808). A residual (836) for the current picture (808) (which may also be referred to as current residual information) may be derived (834) or determined based on the current first set of features (2620) and on the first previous set of features (2630). The current residual (836) may be coded by the third learned codec (838). The second previous set of features (2640) may be input to the prediction operation (1510), obtaining the prediction signal (1520). The prediction signal (1520) may be input to the third decoder (856). In particular, the prediction signal (1520) may be combined with the lossless decoded and dequantized third latent tensor (1530) by using a second combination operation (1540). An output (1550) of the second combination operation (1540) may be input to the third decoder NN (862). An output (2650) of the third decoder NN (862), that may represent the current reconstructed residual, may be combined with the first previous set of features (2630) by using the first combination operation (866). An output (2660) of the first combination operation (866) may be input to the fourth set of layers (2670). An output of the fourth set of layers (2670) may comprise a current decoded picture (868). Thus, the subset of the second learned codec (804) that is used to code the current picture (808) may exclude the second set of layers, the second lossless encoder and second lossless decoder of the second learned codec, the second probability model of the second encoder and the second probability model of the second decoder, and the third set of layers. In other words, the current picture (808) may be encoded into a bitstream that comprises only the third bitstream (852) that is output by the third encoder (840). In yet other words, the current picture (808) may be coded as residual information (836) with respect to the first (2630) and/or second (2640) previous sets of features.

In an alternative embodiment, some or all of the operations performed by the "Combine features" (866) and the "Fourth set of layers" (2670) may be performed by the third decoder (856), such as by the third decoder NN (862). For example, the third decoder NN (862) may take as input an output (1550) of the second combination operation (1540), and the first previous set of features (2630), and may output the current decoded picture (868).

In an example embodiment, the previous picture may not need to be coded with the whole first codec (e.g., with the whole second codec and whole third codec). Instead, the previous picture may also have been coded in a similar way as the current picture, for example as illustrated in FIG. 26, and/or by using only a subset of operations of the second codec and based on yet-previously-coded/past pictures or features determined based on yet-previously-coded/past pictures (i.e. one or more pictures coded before the previous picture was coded).

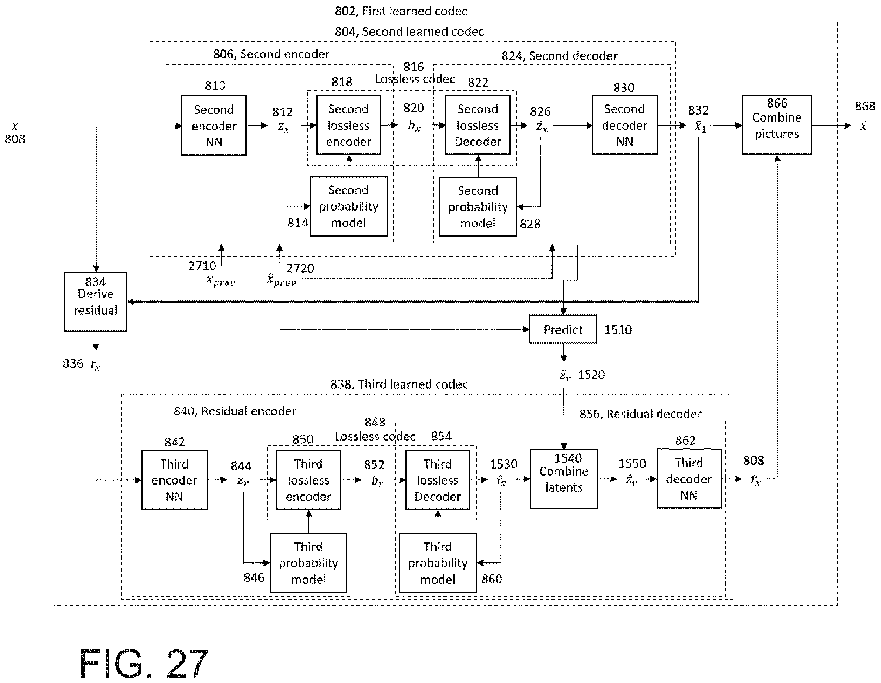

Referring now to FIG. 27, illustrated is an example of an end-to-end learned codec according to an example embodiment of the present disclosure. Features of FIG. 27 that are similar to FIG. 15 are referred to with the same reference numbers, and duplicative description may be omitted. In an example embodiment, when coding a current input data item (e.g., a current picture that is part of a video) (808), an input to the second encoder (806) may comprise, in addition to the current input data item (808), a previous input data item (denoted as $x_{prev}$ in FIG. 27 (2710)), or data derived from a previous data item (2710), such as features. An example of a previous input data item (2710) may be a previous picture comprised in the same video that comprises the current picture (e.g., a picture that is input to the first encoder or second encoder (806) at a previous coding iteration). In an example embodiment, an input to the second encoder (806) and/or to the second decoder (824) may comprise a previously-decoded data item (denoted as $x_{prev}$ (2720)), or data derived from a previously-decoded data item (2720) such as features, or data from which a previously-decoded data item (2720) was derived or determined. In an example embodiment, an input to the prediction operation (1510) may comprise (but may not be limited to) one or more of the following: a previously-decoded data item (2720), or data derived from a previously-decoded data item (2720) such as features, or data from which a previously-decoded data item (2720) was derived or determined; an output of the second decoder (824), such as the first reconstructed data item (832); or the lossless decoded and dequantized second latent tensor (826).

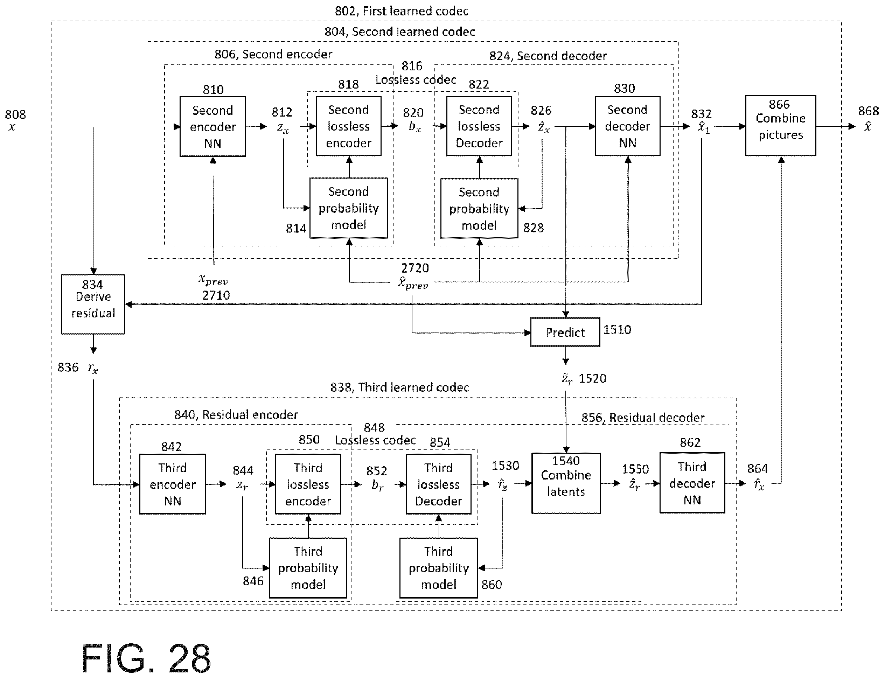

Referring now to FIG. 28, illustrated is an example of an end-to-end learned codec according to an example embodiment of the present disclosure. Features of FIG. 28 that are similar to FIG. 15 or FIG. 27 are referred to with the same reference numbers, and duplicative description may be omitted. In an example embodiment, when coding a current input data item (e.g., a current picture that is part of a video) (808), an input to the second encoder NN (810) may comprise, in addition to the current input data item, a previous input data item (denoted as $x_{prev}$ (2710)), or data derived from a previous input data item (2710), such as features. An example of a previous input data item (2710) may be a previous picture comprised in the same video that comprises the current picture (808) (e.g., a picture that is input to the first encoder or second encoder at a previous coding iteration). In an example embodiment, an input to the second probability model(s) (814, 828) and/or to the second decoder NN (830) may comprise a previously-decoded data item (denoted as $\hat{x}_{prev}$ (2720)), or data derived from a previously-decoded data item (2720) such as features, or data from which a previously-decoded data item (2720) was derived or determined. An example of a previously-decoded data item (2720) may be a previously-decoded picture that may be obtained by encoding and decoding the previous picture that is comprised in the same video as the current picture (808). In an example embodiment, an input to the prediction operation (1510) may comprise (but may not be limited to) one or more of the following: a previously-decoded data item (2720), or data derived from a previously-decoded data item (2720) such as features, or data from which a previously-decoded data item (2720) was derived or determined; an output of the second decoder (824), such as the first reconstructed data item (832), or the lossless decoded and dequantized second latent tensor (826). In an example embodiment, the second encoder NN (810) may estimate a motion information (812) for the current input data item (808) with respect to the previous input data item (2710). The second bitstream (820) may represent, at least, an encoded motion information. The second decoder NN (830) may perform motion compensation and/or warping based on the lossless decoded and dequantized second latent tensor (826) and the previously-decoded data item (2720). An output of the second decoder NN (830), such as the first reconstructed data item (832), may represent, at least, a motion-compensated and/or warped version of the previously-decoded data item.

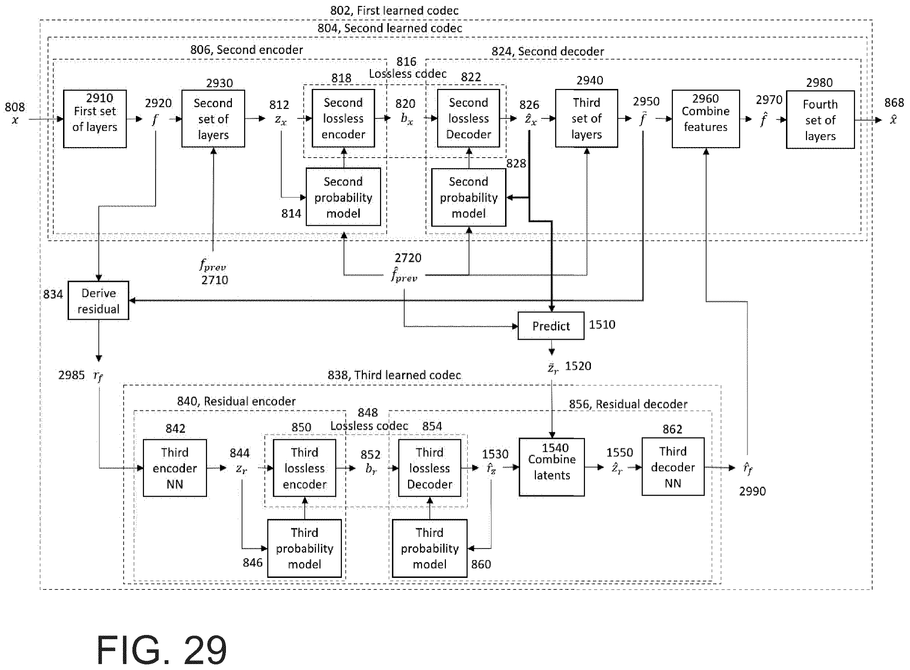

Referring now to FIG. 29 illustrated is an example of an end-to-end learned codec according to an example embodiment of the present disclosure. Features of FIG. 29 that are similar to FIG. 15 or FIG. 28 are referred to with the same reference numbers, and duplicative description may be omitted. In an example embodiment, when coding a current input data item (e.g., a current picture that is part of a video) (808), an input to the second encoder NN, which may comprise a first set of layers (2910) producing a first set of features (2920) and a second set of layers (2930), may comprise, in addition to the current input data item (808), features (denoted as $f_{prev}$ (2710)) extracted from a previous input data item, or data derived from features (2710) extracted from a previous input data item. An example of a previous input data item may be a previous picture comprised in the same video that comprises the current picture (808) (e.g., a picture that is input to the first encoder or second encoder at a previous coding iteration). In an example embodiment, an input to the second probability model(s) (814, 828) and/or to the second decoder NN, which may comprise a third set of layers (2940) producing a second set of features (2950) and a fourth set of layers (2980) taking as input a third set of features (2970), may comprise features (denoted as $\hat{f}_{prev}$ (2720)) extracted from a previously-decoded data item or data derived from features (2720) extracted from a previously-decoded data item, or data from which a previously-decoded data item was derived or determined. An example of a previously-decoded data item may be a previously-decoded picture that may be obtained by encoding and decoding the previous picture that is comprised in the same video as the current picture (808). In an example embodiment, an input to the prediction operation (1510) may comprise (but may not be limited to) one or more of the following: a previously-decoded data item (2720), or data derived from a previously-decoded data item (2720) such as features, or data from which a previously-decoded data item (2720) was derived or determined; an output of the second decoder (824); the second set of features (2950); and/or the lossless decoded and dequantized second latent tensor (826). In an example embodiment, the second set of layers (2930) may estimate, at least, a motion information (812) based on the features (2920) extracted from the current input data item (808) and the features (2710) extracted from the previous input data item. For example, the motion information (812) may represent motion or differences between the features (2920) extracted from the current input data item (808) and the features (2710) extracted from the previous input data item. The second bitstream (820) may represent, at least, an encoded motion information. The third set of layers (2940) may perform motion compensation and/or warping based on the lossless decoded and dequantized second latent tensor (826) and the features (2720) extracted from the previously-decoded data item. An output of the third set of layers (2940), such as the second set of features (2950), may represent a motion-compensated and/or warped version of the features extracted from the previously-decoded data item. The residual (2985), which may be in the feature domain, may be determined (834) based, at least partially, on the features (2920) extracted from the current input data item (808) and the second set of features (2950). An output (2990) of the third decoder NN (862) may also be in the feature domain.

In an example embodiment, an encoder (such as the first encoder) may signal or encode to a decoder (such as the first decoder), in or along a bitstream, and the decoder may receive or decode, from or along the bitstream, information indicating whether and how at least a portion of a data unit is to be decoded by excluding at least part of the third decoder. For example, signaling configured to indicate a decoding process for decoding the lossless encoded and quantized second latent tensor included in the bitstream (820) and/or a decoding process for decoding the lossless encoded and quantized third latent tensor included in the bitstream (852) may be included in the bitstream. Additionally or alternatively, signaling configured to indicate a decoding process for decoding the lossless encoded and quantized second latent tensor included in the bitstream (820) and/or the lossless encoded and quantized third latent tensor included in the bitstream (852) may be included in the bitstream. The information may further indicate a spatial and/or temporal scope, for example for a decoding process. In one example, such information may comprise a flag (e.g., represented as one bit) or an index (e.g., represented as several bits). In one example, a specification of a standard may specify or comprise a mapping between the information (e.g., the flag or the index or an indicator) and a respective decoding mode or decoding configuration, where the decoding mode or decoding configuration may comprise one or more decoding steps or decoding operations.

In an example embodiment, an encoder (such as the first encoder) may signal or encode to a decoder (such as the first decoder), in or along a bitstream, and the decoder may receive or decode, from or along the bitstream, information indicating whether and how at least a portion of a data unit is to be decoded by excluding at least part of the second decoder. The information may further indicate a spatial and/or temporal scope. In one example, such information may comprise a flag (e.g., represented as one bit) or an index (e.g., represented as several bits). In one example, a specification of a standard may specify or comprise a mapping between the information (e.g., the flag or the index or an indicator) and a respective decoding mode or decoding configuration, where the decoding mode or decoding configuration may comprise one or more decoding steps or decoding operations.

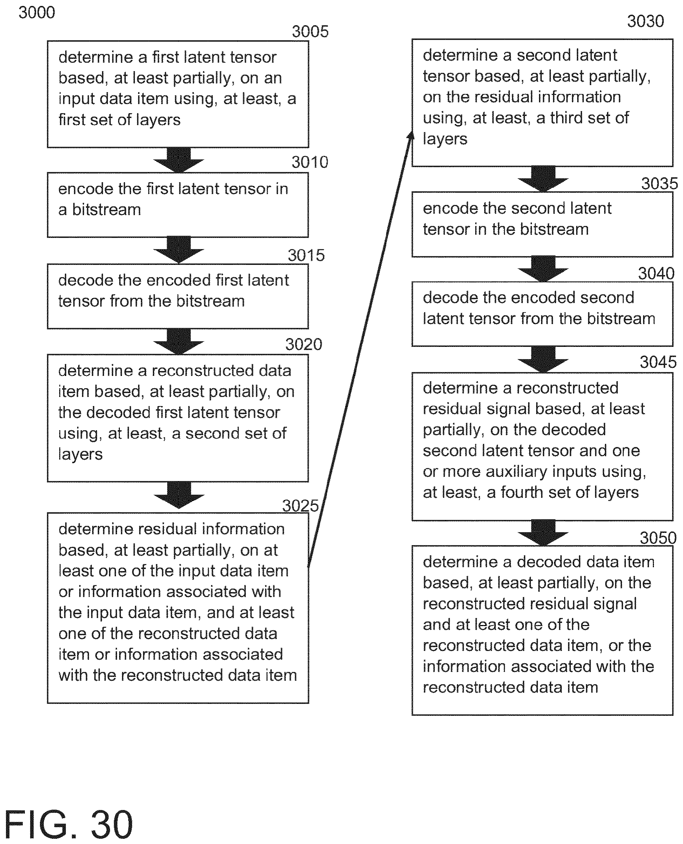

FIG. 30 illustrates the potential steps of an example method 3000. The example method 3000 may include: determining a first latent tensor based, at least partially, on an input data item using, at least, a first set of layers, 3005; encoding the first latent tensor in a bitstream, 3010; decoding the encoded first latent tensor from the bitstream, 3015; determining a reconstructed data item based, at least partially, on the decoded first latent tensor using, at least, a second set of layers, 3020; determining residual information based, at least partially, on at least one of the input data item or information associated with the input data item, and at least one of the reconstructed data item or information associated with the reconstructed data item, 3025; determining a second latent tensor based, at least partially, on the residual information using, at least, a third set of layers, 3030; encoding the second latent tensor in the bitstream, 3035; decoding the encoded second latent tensor from the bitstream, 3040; determining a reconstructed residual signal based, at least partially, on the decoded second latent tensor and one or more auxiliary inputs using, at least, a fourth set of layers, 3045; and determining a decoded data item based, at least partially, on the reconstructed residual signal and at least one of the reconstructed data item, or the information associated with the reconstructed data item, 3050. The example method 3000 may be performed, for example, with a codec, a learned codec, an end-to-end learned codec, etc.

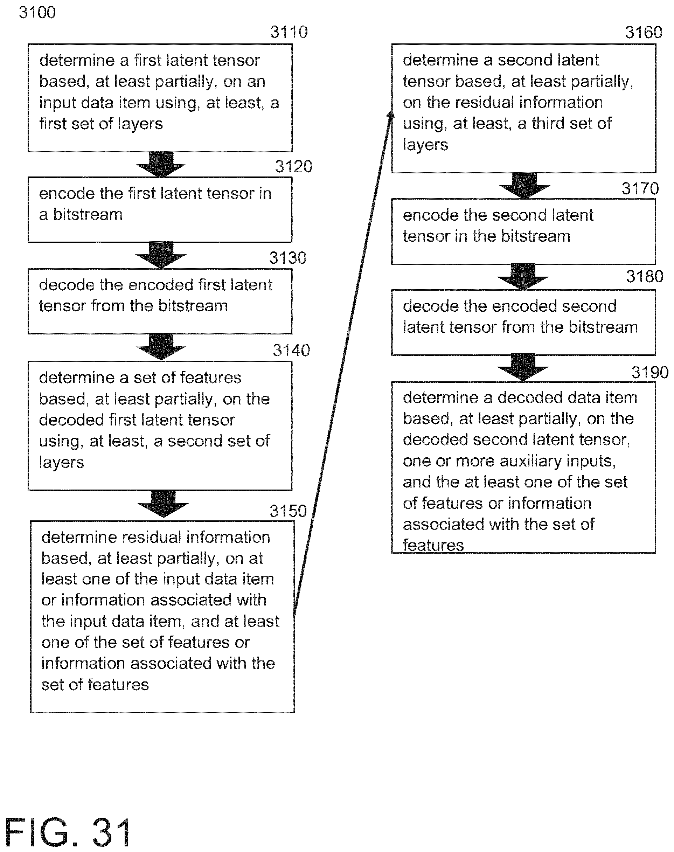

FIG. 31 illustrates the potential steps of an example method 3100. The example method 3100 may include: determining a first latent tensor based, at least partially, on an input data item using, at least, a first set of layers, 3110; encoding the first latent tensor in a bitstream, 3120; decoding the encoded first latent tensor from the bitstream, 3130; determining a set of features based, at least partially, on the decoded first latent tensor using, at least, a second set of layers, 3140; determining residual information based, at least partially, on at least one of the input data item or information associated with the input data item, and at least one of the set of features or information associated with the set of features, 3150; determining a second latent tensor based, at least partially, on the residual information using, at least, a third set of layers, 3160; encoding the second latent tensor in the bitstream, 3170; decoding the encoded second latent tensor from the bitstream, 3180; and determining a decoded data item based, at least partially, on the decoded second latent tensor, auxiliary input, and the at least one of the set of features or information associated with the set of features, 3190. The example method 3100 may be performed, for example, with a codec, a learned codec, an end-to-end learned codec, etc.

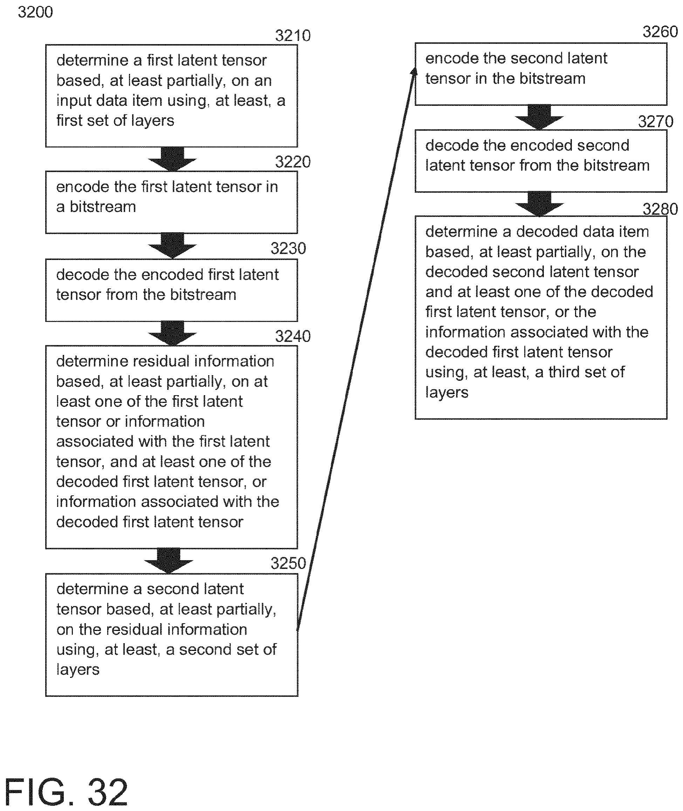

FIG. 32 illustrates the potential steps of an example method 3200. The example method 3200 may include: determining a first latent tensor based, at least partially, on an input data item using, at least, a first set of layers, 3210; encoding the first latent tensor in a bitstream, 3220; decoding the encoded first latent tensor from the bitstream, 3230; determining residual information based, at least partially, on at least one of the first latent tensor or information associated with the first latent tensor, and at least one of the decoded first latent tensor, or information associated with the decoded first latent tensor, 3240; determining a second latent tensor based, at least partially, on the residual information using, at least, a second set of layers, 3250; encoding the second latent tensor in the bitstream, 3260; decoding the encoded second latent tensor from the bitstream, 3270; and determining a decoded data item based, at least partially, on the decoded second latent tensor and at least one of the decoded first latent tensor, or the information associated with the decoded first latent tensor using, at least, a third set of layers, 3280. The example method 3200 may be performed, for example, with a codec, a learned codec, an end-to-end learned codec, etc.

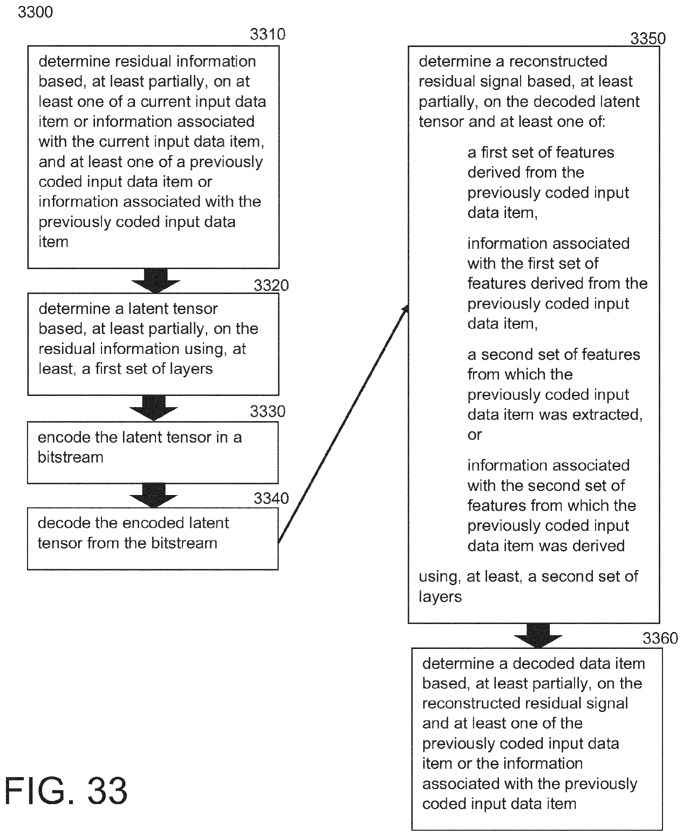

FIG. 33 illustrates the potential steps of an example method 3300. The example method 3300 may include: determining residual information based, at least partially, on at least one of a current input data item or information associated with the current input data item, and at least one of a previously coded input data item or information associated with the previously coded input data item, 3310; determining a latent tensor based, at least partially, on the residual information using, at least, a first set of layers, 3320; encoding the latent tensor in a bitstream, 3330; decoding the encoded latent tensor from the bitstream, 3340; determining a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived using, at least, a second set of layers, 3350; and determining a decoded data item based, at least partially, on the reconstructed residual signal and at least one of the previously coded input data item or the information associated with the previously coded input data item, 3360. The example method 3300 may be performed, for example, with a codec, a learned codec, an end-to-end learned codec, etc.

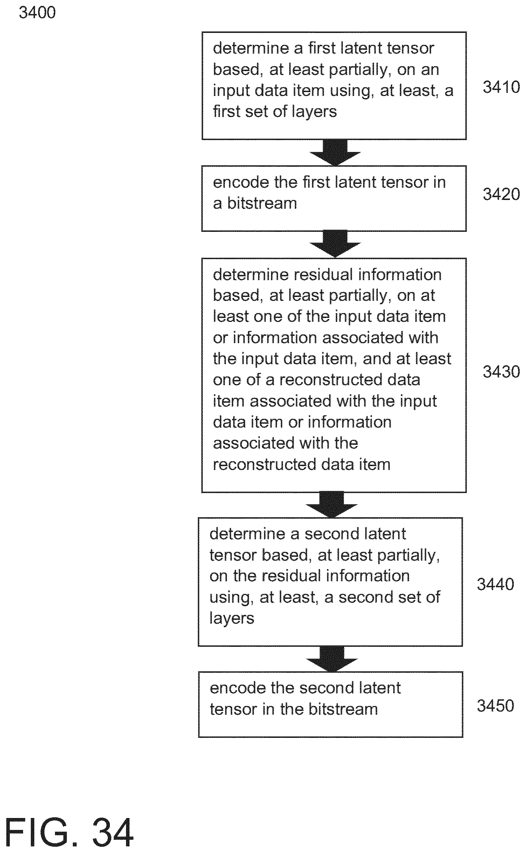

FIG. 34 illustrates the potential steps of an example method 3400. The example method 3400 may include: determining a first latent tensor based, at least partially, on an input data item using, at least, a first set of layers, 3410; encoding the first latent tensor in a bitstream, 3420; determining residual information based, at least partially, on at least one of the input data item or information associated with the input data item, and at least one of a reconstructed data item associated with the input data item or information associated with the reconstructed data item, 3430; determining a second latent tensor based, at least partially, on the residual information using, at least, a second set of layers, 3440; and encoding the second latent tensor in the bitstream, 3450. The example method 3400 may be performed, for example, with an encoder, a learned encoder, an end-to-end learned encoder, a codec, etc.

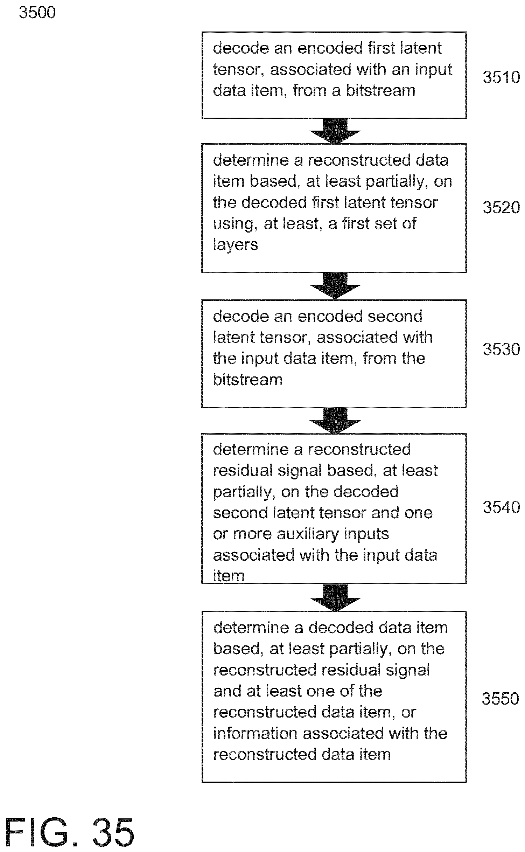

FIG. 35 illustrates the potential steps of an example method 3500. The example method 3500 may include: decoding an encoded first latent tensor, associated with an input data item, from a bitstream, 3510; determining a reconstructed data item based, at least partially, on the decoded first latent tensor using, at least, a first set of layers, 3520; decoding an encoded second latent tensor, associated with the input data item, from the bitstream, 3530; determining a reconstructed residual signal based, at least partially, on the decoded second latent tensor and one or more auxiliary inputs associated with the input data item, 3540; and determining a decoded data item based, at least partially, on the reconstructed residual signal and at least one of the reconstructed data item, or information associated with the reconstructed data item, 3550. The example method 3500 may be performed, for example, with a decoder, a learned decoder, an end-to-end learned decoder, a codec, etc.

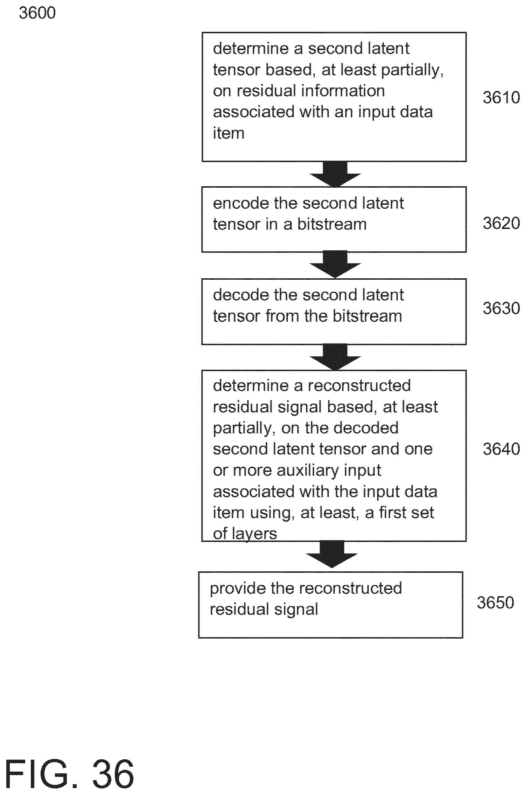

FIG. 36 illustrates the potential steps of an example method 3600. The example method 3600 may include: determining a second latent tensor based, at least partially, on residual information associated with an input data item, 3610; encoding the second latent tensor in a bitstream, 3620; decoding the second latent tensor from the bitstream, 3630; determining a reconstructed residual signal based, at least partially, on the decoded second latent tensor and one or more auxiliary inputs associated with the input data item using, at least, a first set of layers, 3640; and providing the reconstructed residual signal, 3650. The example method 3600 may be performed, for example, with a codec, a learned codec, an end-to-end learned codec, etc.

In accordance with an example embodiment, an apparatus may comprise: at least one processor; and at least one memory storing instructions that, when executed by the at least one processor, cause the apparatus at least to: determine a first latent tensor based, at least partially, on an input data item using, at least, a first set of layers; encode the first latent tensor in a bitstream; decode the encoded first latent tensor from the bitstream; determine a reconstructed data item based, at least partially, on the decoded first latent tensor using, at least, a second set of layers; determine residual information based, at least partially, on at least one of the input data item or information associated with the input data item, and at least one of the reconstructed data item or information associated with the reconstructed data item; determine a second latent tensor based, at least partially, on the residual information using, at least, a third set of layers; encode the second latent tensor in the bitstream; decode the encoded second latent tensor from the bitstream; determine a reconstructed residual signal based, at least partially, on the decoded second latent tensor and one or more auxiliary inputs using, at least, a fourth set of layers; and determine a decoded data item based, at least partially, on the reconstructed residual signal and at least one of the reconstructed data item, or the information associated with the reconstructed data item.

The one or more auxiliary inputs may comprise at least one of: the decoded first latent tensor, information associated with the first latent tensor, the reconstructed data item, information associated with the reconstructed data item, a prediction signal determined based, at least partially, on the decoded first latent tensor, a prediction signal determined based, at least partially, on data associated with the decoded first latent tensor, a prediction signal determined based, at least partially, on the reconstructed data item, or a prediction signal determined based, at least partially, on data associated with the reconstructed data item.

The example apparatus may be further configured to at least one of: determine the prediction signal based, at least partially, on the decoded first latent tensor using a fifth set of layers; or determine the prediction signal based, at least partially, on the reconstructed data item using a sixth set of layers.

The prediction signal may be determined further based, at least partially, on at least one of: a previously coded input data item, information associated with the previously coded input data item, or a set of features derived from the previously coded input data item.

The decoded first latent tensor may comprise a dequantized and decoded first latent tensor.

The decoded second latent tensor may comprise a dequantized and decoded second latent tensor.

Determining the reconstructed residual signal may comprise the example apparatus being further configured to: combine the decoded second latent tensor with at least one of the one or more auxiliary inputs to generate combined information; and determine the reconstructed residual signal based, at least partially, on the combined information using, at least, the fourth set of layers.

The decoded second latent tensor and the one or more auxiliary inputs may be combined via summation.

The decoded second latent tensor and the one or more auxiliary inputs may be combined via concatenation.

The combined information may comprise one of: combined latent tensor information, or a set of features.

The second latent tensor may be determined further based, at least partially, on at least one of: the one or more auxiliary input, or information associated with the one or more auxiliary inputs.

The second latent tensor may be encoded further based, at least partially, on at least one of: the one or more auxiliary input, or information associated with the one or more auxiliary input.

The encoded second latent tensor may be decoded further based, at least partially, on at least one of: the one or more auxiliary input, or information associated with the one or more auxiliary input.

The information associated with the input data item may comprise one or more features derived from the input data item.

The information associated with the reconstructed data item may comprise one or more features from which the reconstructed data item is derived.

Determining the residual information may comprise the example apparatus being further configured to: perform subtraction between the at least one of the input data item or the information associated with the input data item, and the at least one of the reconstructed data item or the information associated with the reconstructed data item.

Determining the residual information may comprise the example apparatus being further configured to: concatenate the at least one of the input data item or the information associated with the input data item, and the at least one of the reconstructed data item or the information associated with the reconstructed data item.

The residual information may be determined using, at least, a seventh set of layers.

The residual information may be determined further based, at least partially, on at least one of: the first latent tensor, or information associated with the first latent tensor.

Determining the decoded data item may comprise the example apparatus being further configured to: perform summation of the reconstructed residual signal and the at least one of the reconstructed data item, or the information associated with the reconstructed data item.

Determining the decoded data item may comprise the example apparatus being further configured to: concatenate the reconstructed residual signal and the at least one of the reconstructed data item, or the information associated with the reconstructed data item.

The example apparatus may be further configured to: determine the decoded data item based, at least partially, on a result of the summation or the concatenation using, at least, a eighth set of layers.

The result of the summation or the concatenation may comprise a set of features.

The decoded data item may be determined using, at least, an ninth set of layers.

Determining the reconstructed data item may comprise the example apparatus being further configured to: determine a first reconstructed data item using, at least, the second set of layers; and determine a second reconstructed data item using, at least, a tenth set of layers, wherein the decoded data item may be determined based on the reconstructed residual signal and at least one of the first reconstructed data item or information associated with the first reconstructed data item, wherein the residual information may be determined based on at least one of the second reconstructed data item or information associated with the second reconstructed data item, and the at least one of the input data item or the information associated with the input data item.

The example apparatus may be further configured to: provide, to the bitstream, signaling configured to indicate a decoding process for decoding at least one of the encoded first latent tensor or the encoded second latent tensor; and obtain, from the bitstream, the signaling.

The signaling may be further configured to indicate at least one of: a spatial scope for the decoding process, or a temporal scope for the decoding process.

The signaling may comprise at least one of an indication or an index that is mapped to the decoding process.

The first latent tensor may be determined further based, at least partially, on at least one of: a previously input data item, information associated with the previously input data item, a set of features derived from the previously input data item, a previously coded input data item, information associated with the previously coded input data item, or a set of features derived from the previously coded input data item.

The encoded second latent tensor may be decoded further based, at least partially, on at least one of: a previously coded input data item, information associated with the previously coded input data item, or a set of features derived from the previously coded input data item.

The first latent tensor may be encoded further based, at least partially, on at least one of: a previously coded input data item, information associated with the previously coded input data item, or a set of features derived from the previously coded input data item.

The reconstructed data item may be determined further based, at least partially, on at least one of: a previously coded input data item, information associated with the previously coded input data item, or a set of features derived from the previously coded input data item.

Determining the first latent tensor may comprise the example apparatus being further configured to: determine a first set of features based, at least partially, on the input data item using, at least, a eleventh set of layers; and determine the first latent tensor based, at least partially, on the first set of features using, at least, the first set of layers.

The information associated with the input data item may comprise a first set of features derived from the input data item, wherein the reconstructed residual signal may comprise a second set of features derived from the decoded second latent tensor, wherein determining the decoded data item may comprise the example apparatus being further configured to: determine a third set of features based, at least partially, on the decoded first latent tensor using, at least, an twelfth set of layers, wherein the information associated with the reconstructed data item may comprise the third set of features; combine the third set of features and the second set of features to generate combined information; and determine the decoded data item based, at least partially, on the combined information using, at least, a thirteenth set of layers.

In accordance with an embodiment, an example method may be provided comprising: determining, with a codec, a first latent tensor based, at least partially, on an input data item using, at least, a first set of layers; encoding the first latent tensor in a bitstream; decoding the encoded first latent tensor from the bitstream; determining a reconstructed data item based, at least partially, on the decoded first latent tensor using, at least, a second set of layers; determining residual information based, at least partially, on at least one of the input data item or information associated with the input data item, and at least one of the reconstructed data item or information associated with the reconstructed data item; determining a second latent tensor based, at least partially, on the residual information using, at least, a third set of layers; encoding the second latent tensor in the bitstream; decoding the encoded second latent tensor from the bitstream; determining a reconstructed residual signal based, at least partially, on the decoded second latent tensor and one or more auxiliary inputs using, at least, a fourth set of layers; and determining a decoded data item based, at least partially, on the reconstructed residual signal and at least one of the reconstructed data item, or the information associated with the reconstructed data item.

The one or more auxiliary inputs may comprise at least one of: the decoded first latent tensor, information associated with the first latent tensor, the reconstructed data item, information associated with the reconstructed data item, a prediction signal determined based, at least partially, on the decoded first latent tensor, a prediction signal determined based, at least partially, on data associated with the decoded first latent tensor, a prediction signal determined based, at least partially, on the reconstructed data item, or a prediction signal determined based, at least partially, on data associated with the reconstructed data item.

In accordance with one example embodiment, an apparatus may comprise: processing circuitry; memory circuitry including computer program code, the memory circuitry and the computer program code configured to, with the processing circuitry, enable the apparatus to: determine a first latent tensor based, at least partially, on an input data item using, at least, a first set of layers; encode the first latent tensor in a bitstream; decode the encoded first latent tensor from the bitstream; determine a reconstructed data item based, at least partially, on the decoded first latent tensor using, at least, a second set of layers; determine residual information based, at least partially, on at least one of the input data item or information associated with the input data item, and at least one of the reconstructed data item or information associated with the reconstructed data item; determine a second latent tensor based, at least partially, on the residual information using, at least, a third set of layers; encode the second latent tensor in the bitstream; decode the encoded second latent tensor from the bitstream; determine a reconstructed residual signal based, at least partially, on the decoded second latent tensor and one or more auxiliary inputs using, at least, a fourth set of layers; and determine a decoded data item based, at least partially, on the reconstructed residual signal and at least one of the reconstructed data item, or the information associated with the reconstructed data item.

In accordance with an example, an apparatus comprising: at least one processor; and at least one memory storing instructions that, when executed by the at least one processor, cause the apparatus at least to: determine residual information based, at least partially, on at least one of a current input data item or information associated with the current input data item, and at least one of a previously coded input data item or information associated with the previously coded input data item; determine a latent tensor based, at least partially, on the residual information using, at least, a first set of layers; encode the latent tensor in a bitstream; decode the encoded latent tensor from the bitstream;

determine a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived using, at least, a second set of layers; and determine a decoded data item based, at least partially, on the reconstructed residual signal and at least one of the previously coded input data item or the information associated with the previously coded input data item.

In accordance with an example, an apparatus comprising: at least one processor; and at least one memory storing instructions that, when executed by the at least one processor, cause the apparatus at least to: determine residual information based, at least partially, on at least one of a current input data item or information associated with the current input data item, and at least one of a previously coded input data item or information associated with the previously coded input data item; determine a latent tensor based, at least partially, on the residual information using, at least, a first set of layers; encode the latent tensor in a bitstream; decode the encoded latent tensor from the bitstream; determine a reconstructed residual signal based, at least partially, on the decoded latent tensor and at least one of: a first set of features derived from the previously coded input data item, information associated with the first set of features derived from the previously coded input data item, a second set of features from which the previously coded input data item was extracted, or information associated with the second set of features from which the previously coded input data item was derived, using, at least, a second set of layers; and determine a decoded data item based, at least partially, on the reconstructed residual signal and at least one of the previously coded input data item or the information associated with the previously coded input data item.

In accordance with an example, an apparatus comprising: at least one processor; and at least one memory storing instructions that, when executed by the at least one processor, cause the apparatus at least to: decode an encoded first latent tensor, associated with an input data item, from a bitstream; determine a reconstructed data item based, at least partially, on the decoded first latent tensor using, at least, a first set of layers; decode an encoded second latent tensor, associated with the input data item, from the bitstream; determine a reconstructed residual signal based, at least partially, on the decoded second latent tensor and one or more auxiliary inputs associated with the input data item; and determine a decoded data item based, at least partially, on the reconstructed residual signal and at least one of the reconstructed data item, or information associated with the reconstructed data item.

The one or more auxiliary inputs may comprise at least one of: the decoded first latent tensor, information associated with the first latent tensor, the reconstructed data item, information associated with the reconstructed data item, a prediction signal determined based, at least partially, on the decoded first latent tensor, or a prediction signal determined based, at least partially, on the reconstructed data item.

The example apparatus may be further configured to: determine the prediction signal based, at least partially, on the decoded first latent tensor using a second set of layers; or determine the prediction signal based, at least partially, on the reconstructed data item using a third set of layers.

As used in this application, the term "circuitry" or "means" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: determining a first latent tensor based, at least partially, on an input data item using, at least, a first set of layers; encoding the first latent tensor in a bitstream; decoding the encoded first latent tensor from the bitstream; determining a reconstructed data item based, at least partially, on the decoded first latent tensor using, at least, a second set of layers; determining residual information based, at least partially, on at least one of the input data item or information associated with the input data item, and at least one of the reconstructed data item or information associated with the reconstructed data item; determining a second latent tensor based, at least partially, on the residual information using, at least, a third set of layers; encoding the second latent tensor in the bitstream; decoding the encoded second latent tensor from the bitstream; determining a reconstructed residual signal based, at least partially, on the decoded second latent tensor and one or more auxiliary inputs using, at least, a fourth set of layers; and determining a decoded data item based, at least partially, on the reconstructed residual signal and at least one of the reconstructed data item, or the information associated with the reconstructed data item.

In accordance with one example embodiment, a (non-transitory) computer-readable medium comprising instructions stored thereon which, when executed with at least one processor, cause the at least one processor to: determine a first latent tensor based, at least partially, on an input data item using, at least, a first set of layers; encode the first latent tensor in a bitstream; decode the encoded first latent tensor from the bitstream; determine a reconstructed data item based, at least partially, on the decoded first latent tensor using, at least, a second set of layers; determine residual information based, at least partially, on at least one of the input data item or information associated with the input data item, and at least one of the reconstructed data item or information associated with the reconstructed data item; determine a second latent tensor based, at least partially, on the residual information using, at least, a third set of layers; encode the second latent tensor in the bitstream; decode the encoded second latent tensor from the bitstream; determine a reconstructed residual signal based, at least partially, on the decoded second latent tensor and one or more auxiliary inputs using, at least, a fourth set of layers; and determine a decoded data item based, at least partially, on the reconstructed residual signal and at least one of the reconstructed data item, or the information associated with the reconstructed data item.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

**Claims**

1. An apparatus comprising:

   at least one processor; and
   at least one memory storing instructions that, when executed by the at least one processor, cause the apparatus at least to:

   determine a first latent tensor based, at least partially, on an input data item using, at least, a first set of layers;
   encode the first latent tensor in a bitstream;
   decode the encoded first latent tensor from the bitstream;
   determine a reconstructed data item based, at least partially, on the decoded first latent tensor using, at least, a second set of layers;
   determine residual information based, at least partially, on at least one of the input data item or information associated with the input data item, and at least one of the reconstructed data item or information associated with the reconstructed data item;
   determine a second latent tensor based, at least partially, on the residual information using, at least, a third set of layers;
   encode the second latent tensor in the bitstream;
   decode the encoded second latent tensor from the bitstream;
   determine a reconstructed residual signal based, at least partially, on the decoded second latent tensor and one or more auxiliary inputs using, at least, a fourth set of layers; and
   determine a decoded data item based, at least partially, on the reconstructed residual signal and at least one of the reconstructed data item, or the information associated with the reconstructed data item.

2. The apparatus of claim 1, wherein the one or more auxiliary inputs comprise at least one of:

   the decoded first latent tensor,
   information associated with the first latent tensor,
   the reconstructed data item,
   information associated with the reconstructed data item,
   a prediction signal determined based, at least partially, on the decoded first latent tensor,
   a prediction signal determined based, at least partially, on data associated with the decoded first latent tensor,
   a prediction signal determined based, at least partially, on the reconstructed data item, or
   a prediction signal determined based, at least partially, on data associated with the reconstructed data item.

3. The apparatus of claim 2, wherein the instructions, when executed with the at least one processor, cause the apparatus to at least one of:

determine the prediction signal based, at least partially, on the decoded first latent tensor using a fifth set of layers; or
determine the prediction signal based, at least partially, on the reconstructed data item using a sixth set of layers.

4. The apparatus of any of claims 1 through 3, wherein determining the reconstructed residual signal comprises the instructions, when executed with the at least one processor, cause the apparatus to:

   combine the decoded second latent tensor with at least one of the one or more auxiliary inputs to generate combined information; and
   determine the reconstructed residual signal based, at least partially, on the combined information using, at least, the fourth set of layers.

5. The apparatus of any of claims 1 through 4, wherein the encoded second latent tensor is decoded further based, at least partially, on at least one of:

   the one or more auxiliary inputs, or
   information associated with the one or more auxiliary input.

6. The apparatus of any of claims 1 through 5, wherein the information associated with the input data item comprises one or more features derived from the input data item.

7. The apparatus of any of claims 1 through 6, wherein determining the residual information comprises the instructions, when executed with the at least one processor, cause the apparatus to:
   perform subtraction between the at least one of the input data item or the information associated with the input data item, and the at least one of the reconstructed data item or the information associated with the reconstructed data item.

8. The apparatus of any of claims 1 through 7, wherein determining the decoded data item comprises the instructions, when executed with the at least one processor, cause the apparatus to:
   perform summation of the reconstructed residual signal and the at least one of the reconstructed data item, or the information associated with the reconstructed data item.

9. The apparatus of any of claims 1 through 8, wherein determining the reconstructed data item comprises the instructions, when executed with the at least one processor, cause the apparatus to:

   determine a first reconstructed data item using, at least, the second set of layers; and

determine a second reconstructed data item using, at least, a ninth set of layers,
wherein the decoded data item is determined based on the reconstructed residual signal and at least one of the first reconstructed data item or information associated with the first reconstructed data item,
wherein the residual information is determined based on at least one of the second reconstructed data item or information associated with the second reconstructed data item, and the at least one of the input data item or the information associated with the input data item.

10. The apparatus of any of claims 1 through 9, wherein the instructions, when executed with the at least one processor, cause the apparatus to:

    provide, to the bitstream, signaling configured to indicate a decoding process for decoding at least one of the encoded first latent tensor or the encoded second latent tensor; and
    obtain, from the bitstream, the signaling.

11. The apparatus of any of claims 1 through 10, wherein the encoded second latent tensor is decoded further based, at least partially, on at least one of:

    a previously coded input data item,
    information associated with the previously coded input data item, or
    a set of features derived from the previously coded input data item.

12. The apparatus of any of claims 1 through 11, wherein the reconstructed data item is determined further based, at least partially, on at least one of:

    a previously coded input data item,
    information associated with the previously coded input data item, or
    a set of features derived from the previously coded input data item.

13. A method comprising:

    determining, with a codec, a first latent tensor based, at least partially, on an input data item using, at least, a first set of layers;
    encoding the first latent tensor in a bitstream;
    decoding the encoded first latent tensor from the bitstream;
    determining a reconstructed data item based, at least partially, on the decoded first latent tensor using, at least, a second set of layers;
    determining residual information based, at least partially, on at least one of the input data item or information associated with the input data item, and at least one of the reconstructed data item or information associated with the reconstructed data item;

determining a second latent tensor based, at least partially, on the residual information using, at least, a third set of layers;

encoding the second latent tensor in the bitstream;

decoding the encoded second latent tensor from the bitstream;

determining a reconstructed residual signal based, at least partially, on the decoded second latent tensor and one or more auxiliary inputs using, at least, a fourth set of layers; and

determining a decoded data item based, at least partially, on the reconstructed residual signal and at least one of the reconstructed data item, or the information associated with the reconstructed data item.

14. An apparatus comprising:

at least one processor; and
at least one memory storing instructions that, when executed by the at least one processor, cause the apparatus at least to:

determine residual information based, at least partially, on at least one of a current input data item or information associated with the current input data item, and at least one of a previously coded input data item or information associated with the previously coded input data item;

determine a latent tensor based, at least partially, on the residual information using, at least, a first set of layers;

encode the latent tensor in a bitstream;

decode the encoded latent tensor from the bitstream;

determine a reconstructed residual signal based, at least partially, on the decoded latent tensor and at least one of:

a first set of features derived from the previously coded input data item,

information associated with the first set of features derived from the previously coded input data item,

a second set of features from which the previously coded input data item was extracted, or

information associated with the second set of features from which the previously coded input data item was derived

using, at least, a second set of layers; and

determine a decoded data item based, at least partially, on the reconstructed residual signal and at least one of the previously coded input data item or the information associated with the previously coded input data item.

15. An apparatus comprising:

at least one processor; and
at least one memory storing instructions that, when executed by the at least one processor, cause the apparatus at least to:

decode an encoded first latent tensor, associated with an input data item, from a bitstream;

determine a reconstructed data item based, at least partially, on the decoded first latent tensor using, at least, a first set of layers;

decode an encoded second latent tensor, associated with the input data item, from the bitstream;

determine a reconstructed residual signal based, at least partially, on the decoded second latent tensor and one or more auxiliary inputs associated with the input data item; and

determine a decoded data item based, at least partially, on the reconstructed residual signal and at least one of the reconstructed data item, or information associated with the reconstructed data item.

FIG.1

**FIG.2**

FIG. 3

FIG. 4

FIG. 5

EP 4 715 744 A1

FIG. 6

740

Original NN filter

710

Compressed
adaptation
signal

720

Decompress

730

Decompressed
adaptation
signal

Update

760

Updated
NN filter

750

FIG. 7

FIG. 8

FIG. 9

EP 4 715 744 A1

FIG. 10

EP 4 715 744 A1

**802, First learned codec**

**804, Second learned codec**

**806, Second encoder**

**824, Second decoder**

**816 Lossless codec**

808 $x$

810 Second encoder NN

812 $z_x$

818 Second lossless encoder

820 $b_x$

822 Second lossless Decoder

826 $\hat{z}_x$

830 Second decoder NN

832 $\hat{x}_1$

814 Second probability model

828 Second probability model

834 Derive residual

836 $r_x$

**838, Third learned codec**

**840, Residual encoder**

**856, Residual decoder**

**848 Lossless codec**

842 Third encoder NN

844 $z_r$

850 Third lossless encoder

852 $b_r$

854 Third lossless Decoder

858 $\hat{z}_r$

Third decoder NN

1110 $\hat{x}$

862

846 Third probability model

860 Third probability model

FIG. 11

FIG. 12

EP 4 715 744 A1

FIG. 13

EP 4 715 744 A1

802, First learned codec

804, Second learned codec

806, Second encoder

810 Second encoder NN

$812$ $z_x$

814 Second probability model

816 Lossless codec

818 Second lossless encoder

$820$ $b_x$

824, Second decoder

822 Second lossless Decoder

828 Second probability model

$826$ $\hat{z}_x$

830 Second decoder NN

$832$ $\hat{x}_1$

866 Combine pictures

$868$ $\hat{x}$

808 $x$

834 Derive residual

$836$ $r_x$

838, Third learned codec

840, Residual encoder

842 Third encoder NN

$844$ $z_r$

846 Third probability model

848 Lossless codec

850 Third lossless encoder

$852$ $b_r$

854 Third lossless Decoder

860 Third probability model

$852$ $\hat{r}_z$ 1410

1420

1430 $\hat{z}_r$

856, Residual decoder

862 Third decoder NN

$864$ $\hat{r}_x$

FIG. 14

50

FIG. 15

FIG. 16

FIG. 17

802, First learned codec

804, Second learned codec

806, Second encoder | 824, Second decoder

816 Lossless codec

810 Second encoder NN

818 Second lossless encoder

822 Second lossless Decoder

830 Second decoder NN

866 Combine pictures

808 $x$

812 $z_x$

820 $b_x$

826 $\hat{z}_x$

832 $\hat{x}_1$

868 $\hat{x}$

814 Second probability model

828 Second probability model

834 Derive residual

1710 Predict

836 $r_x$

1720 $\tilde{z}_r$

838, Third learned codec

840, Residual encoder | 856, Residual decoder

848 Lossless codec

842 Third encoder NN

850 Third lossless encoder

854 Third lossless Decoder

862 Third decoder NN

844 $z_r$

852 $b_r$

1730 $\hat{r}_z$

864 $\hat{r}_x$

846 Third probability model

860 Third probability model

FIG. 18

FIG. 19

**FIG. 20**

FIG. 21

802, First learned codec

804, Second learned codec

806, Second encoder

824, Second decoder

816
Lossless codec

818

822

$$808 \atop x$$ →

| 2105 First set of layers |
|---|

$$\xrightarrow{2110 \atop f}$$

| 2115 Second set of layers |
|---|

$$\xrightarrow{812 \atop z_x}$$

| 818 Second lossless encoder |
|---|

$$\xrightarrow{820 \atop b_x}$$

| 822 Second lossless Decoder |
|---|

$$\xrightarrow{826 \atop \hat{z}_x}$$

| 2120 Third set of layers |
|---|

$$\xrightarrow{2125 \atop \tilde{f}}$$

Second probability model
814

Second probability model
828

834 | Derive residual |

2140 | Predict |

$$2130 \; r_f$$

$$2145 \atop \tilde{z}_r$$

838, Third learned codec

840, Residual encoder

856, Residual decoder

848
Lossless codec

842

850

854

| 842 Third encoder NN |
|---|

$$\xrightarrow{844 \atop z_r}$$

| 850 Third lossless encoder |
|---|

$$\xrightarrow{852 \atop b_r}$$

| 854 Third lossless Decoder |
|---|

$$\xrightarrow{2135 \atop \hat{r}_z}$$

| 2150 Combine latents |
|---|

$$\xrightarrow{2155 \atop \hat{z}_r}$$

| 862 Third decoder NN |
|---|

$$\xrightarrow{2210 \atop \hat{x}}$$

Third probability model
846

Third probability model
860

# FIG. 22

FIG. 23

FIG. 24

EP 4 715 744 A1

802, First learned codec

808 $x$

834 Derive residual

2510 $\hat{x}_{prev}$

836 $r_x$

2520 $\hat{z}_{prev}$

1510 Predict

1520 $\tilde{z}_r$

838, Third learned codec

840, Residual encoder

848 Lossless codec

856, Residual decoder

842 Third encoder NN

844 $z_r$

850 Third lossless encoder

852 $b_r$

854 Third lossless Decoder

1530 $\hat{r}_z$

1540 Combine latents

1550 $\hat{z}_r$

862 Third decoder NN

864 $\hat{r}_x$

846 Third probability model

860 Third probability model

866 Combine pictures

868 $\hat{x}$

FIG. 25

FIG. 26

FIG. 27

FIG. 28

FIG. 29

3000

3005

determine a first latent tensor based, at least partially, on an input data item using, at least, a first set of layers

3010

encode the first latent tensor in a bitstream

3015

decode the encoded first latent tensor from the bitstream

3020

determine a reconstructed data item based, at least partially, on the decoded first latent tensor using, at least, a second set of layers

3025

determine residual information based, at least partially, on at least one of the input data item or information associated with the input data item, and at least one of the reconstructed data item or information associated with the reconstructed data item

3030

determine a second latent tensor based, at least partially, on the residual information using, at least, a third set of layers

3035

encode the second latent tensor in the bitstream

3040

decode the encoded second latent tensor from the bitstream

3045

determine a reconstructed residual signal based, at least partially, on the decoded second latent tensor and one or more auxiliary inputs using, at least, a fourth set of layers

3050

determine a decoded data item based, at least partially, on the reconstructed residual signal and at least one of the reconstructed data item, or the information associated with the reconstructed data item

# FIG. 30

3100

3110

determine a first latent tensor based, at least partially, on an input data item using, at least, a first set of layers

3120

encode the first latent tensor in a bitstream

3130

decode the encoded first latent tensor from the bitstream

3140

determine a set of features based, at least partially, on the decoded first latent tensor using, at least, a second set of layers

3150

determine residual information based, at least partially, on at least one of the input data item or information associated with the input data item, and at least one of the set of features or information associated with the set of features

3160

determine a second latent tensor based, at least partially, on the residual information using, at least, a third set of layers

3170

encode the second latent tensor in the bitstream

3180

decode the encoded second latent tensor from the bitstream

3190

determine a decoded data item based, at least partially, on the decoded second latent tensor, one or more auxiliary inputs, and the at least one of the set of features or information associated with the set of features

# FIG. 31

3200

3210
determine a first latent tensor based, at least partially, on an input data item using, at least, a first set of layers

3220
encode the first latent tensor in a bitstream

3230
decode the encoded first latent tensor from the bitstream

3240
determine residual information based, at least partially, on at least one of the first latent tensor or information associated with the first latent tensor, and at least one of the decoded first latent tensor, or information associated with the decoded first latent tensor

3250
determine a second latent tensor based, at least partially, on the residual information using, at least, a second set of layers

3260
encode the second latent tensor in the bitstream

3270
decode the encoded second latent tensor from the bitstream

3280
determine a decoded data item based, at least partially, on the decoded second latent tensor and at least one of the decoded first latent tensor, or the information associated with the decoded first latent tensor using, at least, a third set of layers

# FIG. 32

3300

3310

determine residual information based, at least partially, on at least one of a current input data item or information associated with the current input data item, and at least one of a previously coded input data item or information associated with the previously coded input data item

3320

determine a latent tensor based, at least partially, on the residual information using, at least, a first set of layers

3330

encode the latent tensor in a bitstream

3340

decode the encoded latent tensor from the bitstream

3350

determine a reconstructed residual signal based, at least partially, on the decoded latent tensor and at least one of:

a first set of features derived from the previously coded input data item,

information associated with the first set of features derived from the previously coded input data item,

a second set of features from which the previously coded input data item was extracted, or

information associated with the second set of features from which the previously coded input data item was derived

using, at least, a second set of layers

3360

determine a decoded data item based, at least partially, on the reconstructed residual signal and at least one of the previously coded input data item or the information associated with the previously coded input data item

FIG. 33

3400

determine a first latent tensor
based, at least partially, on an
input data item using, at least, a
first set of layers

3410

encode the first latent tensor in
a bitstream

3420

determine residual information
based, at least partially, on at
least one of the input data item
or information associated with
the input data item, and at least
one of a reconstructed data
item associated with the input
data item or information
associated with the
reconstructed data item

3430

determine a second latent
tensor based, at least partially,
on the residual information
using, at least, a second set of
layers

3440

encode the second latent
tensor in the bitstream

3450

# FIG. 34

3500

decode an encoded first latent tensor, associated with an input data item, from a bitstream — 3510

determine a reconstructed data item based, at least partially, on the decoded first latent tensor using, at least, a first set of layers — 3520

decode an encoded second latent tensor, associated with the input data item, from the bitstream — 3530

determine a reconstructed residual signal based, at least partially, on the decoded second latent tensor and one or more auxiliary inputs associated with the input data item — 3540

determine a decoded data item based, at least partially, on the reconstructed residual signal and at least one of the reconstructed data item, or information associated with the reconstructed data item — 3550

# FIG. 35

3600

```
┌─────────────────────────────┐
│ determine a second latent   │
│ tensor based, at least      │
│ partially,                  │    3610
│ on residual information     │
│ associated with an input    │
│ data item                   │
└─────────────────────────────┘
            │
            ▼
┌─────────────────────────────┐
│ encode the second latent    │    3620
│ tensor in a bitstream       │
└─────────────────────────────┘
            │
            ▼
┌─────────────────────────────┐
│ decode the second latent    │    3630
│ tensor from the bitstream   │
└─────────────────────────────┘
            │
            ▼
┌─────────────────────────────┐
│ determine a reconstructed   │
│ residual signal based, at   │
│ least                       │
│ partially, on the decoded   │
│ second latent tensor and    │    3640
│ one                         │
│ or more auxiliary input     │
│ associated with the input   │
│ data                        │
│ item using, at least, a     │
│ first set                   │
│ of layers                   │
└─────────────────────────────┘
            │
            ▼
┌─────────────────────────────┐
│ provide the reconstructed   │    3650
│ residual signal             │
└─────────────────────────────┘
```

# FIG. 36

Europäisches
Patentamt

European
Patent Office

Office européen
des brevets

# EUROPEAN SEARCH REPORT

**Application Number**

EP 25 20 3223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE WEI-CHENG ET AL: "Learned Image Compression with Residual Coding", CVPR, 1 January 2019 (2019-01-01), pages 1-5, XP055792991, * the whole document * | 1-15 | INV. G06T9/00 G06N3/0455 |
| X | YUANCHAO BAI ET AL: "Deep Lossy Plus Residual Coding for Lossless and Near-lossless Image Compression", ARXIV.ORG, CORNELL UNIVERSITY LIBRARY, 201 OLIN LIBRARY CORNELL UNIVERSITY ITHACA, NY 14853, 11 September 2022 (2022-09-11), XP091315191, * the whole document * | 1-15 | |
| X | AARON ANNE ET AL: "WYNER-ZIV RESIDUAL CODING OF VIDEO", PROCEEDINGS OF THE PICTURE CODING SYMPOSIUM, XX, XX, 1 January 2006 (2006-01-01), pages 1-5, XP008078465, * the whole document * | 1-15 | TECHNICAL FIELDS SEARCHED (IPC) G06T G06E G06N |

The present search report has been drawn up for all claims

| Place of search | Date of completion of the search | Examiner |
|---|---|---|
| Munich | 3 February 2026 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)